# NEW EUROPEAN PATENT SPECIFICATION

(11) **EP 0 138 495 B2**
(45) Date of publication and mention of the opposition decision: **30.11.1994**
(45) Mention of the grant of the patent: 13.06.1990
(21) Application number: 84306684.6
(22) Date of filing: 01.10.1984
(51) Int. Cl.: F02P 5/04

(54) **Ignition timing control apparatus for internal combustion engine**
Zündzeitregelungsanlage für Brennkraftmaschine
Appareil de commande de l'avance à l'allumage pour moteur à combustion interne

(30) Priority: 30.09.1983 JP 182502/83; 14.11.1983 JP 213821/83; 14.11.1983 JP 213822/83; 14.11.1983 JP 213823/83; 29.11.1983 JP 224660/83; 02.02.1984 JP 18536/84; 02.02.1984 JP 18537/84
(43) Date of publication of application: 24.04.1985
(73) Proprietor: MITSUBISHI JIDOSHA KOGYO KABUSHIKI KAISHA, Tokyo 108 (JP); MITSUBISHI DENKI KABUSHIKI KAISHA, Tokyo 100 (JP)
(72) Inventor: Okada, Tooru, 1, Uzumasa Tatsumi-cho Ukyo-ku Kyoto (JP); Yokoyama, Takanao, 1, Uzumasa Tatsumi-cho Ukyo-ku Kyoto (JP); Takahashi, Akira, 1, Uzumasa Tatsumi-cho Ukyo-ku Kyoto (JP); Danno, Yoshiaki, 1, Uzumasa Tatsumi-cho Ukyo-ku Kyoto (JP); Iida, Kazumasa, 1, Uzumasa Tatsumi-cho Ukyo-ku Kyoto (JP); Ueda, Atsushi, 840, Chiyoda-cho Himeji Hyogo Pref. (JP); Iwata, Toshio, 840, Chiyoda-cho Himeji Hyogo Pref. (JP); Sasaki, Takeo, 840, Chiyoda-cho Himeji Hyogo Pref. (JP)
(74) Representative: Lawson, David Glynne

(56) References cited:
- DE-A- 2 930 540
- DE-A- 3 006 633
- DE-A- 3 116 593
- FR-A- 845 478
- FR-A- 2 476 748
- FR-A- 2 500 066
- GB-A- 1 529 364
- GB-A- 2 109 859
- US-A- 4 243 007
- US-A- 4 261 313
- US-A- 4 274 379
- US-A- 4 380 981
- INGENIEURS DE L'AUTOMOBILE, no.3, April 1980, pages 71-73, Boulogne; "Le nouveau turbo de Saab: Auto-adaption aux différents indices d'octane"
- BOSCH TECHNISCHE BERICHTE (1981) Heft 3

## Description

### Background of the Invention

This invention relates to an ignition timing control apparatus for an internal combustion engine, and in particular to an ignition timing control apparatus for an internal combustion engine which is operable eith- erwith a low-octane rating fuel ora high-octane rating fuel.

It is well known in the art that the octane rating of fuel gasoline is greatly interrelated with a knock- resistibility in an internal combustion engine. Namely, as the octane rating of gasoline becomes higher, the knocking of an engine correspondingly decreases.

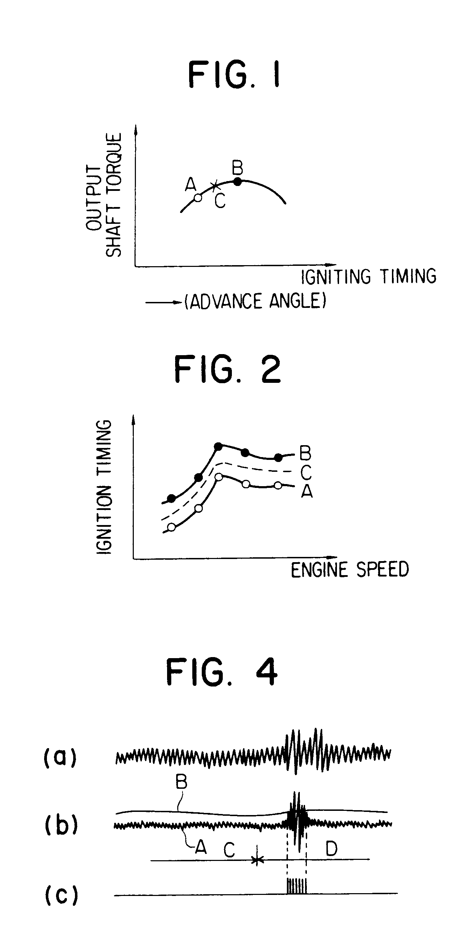

Fig. 1 shows an ignition timing vs output shaft torque characteristic in an internal combustion engine in the case where a commercially available low-octane gasoline (regular gasoline) and a commercially available high octane gasoline (premium gasoline) of which the octane rating is higher than that of the low-octane gasoline. In the figure, point A indicates a knock limit for the low-octane gasoline while point B indicates a knock limitforthe high-octane gasoline, in which knock arises when the angle of the ignition timing is advanced beyond these points. According to Fig. 1, it is possible to advance the angle of the ignition timing up to a point B when using the high-octane gasoline, where the output shaft torque will be higher as compared with the use of the low-octane gasoline.

Fig. 2 shows an ignition timing characteristic representing points A and B as a function of engine speed. It is seen that the interval between the characteristics A and B is constant as a function of the engine speed. Therefore, in an internal combustion engine with such a characteristic, itwill be possible to increase the output of the engine by advancing the ignition timing by a predetermined angle if a fuel used in the engine is changed overfrom the low-octane rating gasoline to the high-octane rating gasoline.

Also in the case where a mixed fuel of both gasolines is used for the engine, it will be possible to increase the output of the engine if the ignition timing is advanced in angle according to the mixture ratio of the fuel.

However, in a conventional ignition timing control apparatus for an internal combustion engine, the reference ignition timing characteristic is preset only for a predetermined gasoline, e.g. the low-octane rating gasoline, and therefore when using the high-octane rating gasoline, an increase in the output of the engine can not be expected without any change or modification thereof, so that the presetting of the reference ignition timing must be repeated towards the advance angle by some method.

Particularly, such a repeated presetting of the reference ignition timing is very hard when using the mixed fuel because, as shown in Fig. 2 by a dotted curve C, the knock limit exists between curves A and B according to the mixture ratio and so the possible advance limit is varied.

Even if the reference ignition timing have been again preset at the knock limits A and B, since the knock limits Aand B in Fig. 1 vary with environmental conditions during the operation of the engine such as temperature, humidity, etc. knocks easily arise at the time of a transient operation such as an accelerated operation of the engine, and accordingly it is quite difficult to avoid the occurrence of engine knocks.

United States patent 4,261,313 describes a method of and apparatus for controlling ignition timing of an internal-combustion engine in accordance with the degree of knocking. A corrective advance computing circuit, responsive to sensed knocking signals, advances or retards the ignition timing in dependence upon a comparison between the number of knocks sensed and a predetermined number.

### Summary of the Invention

It is accordingly a general object of the invention to provide an ignition timing control apparatus for an internal combustion engine wherein the occurrence of knocks is detected, whether a fuel used for the engine is of a high-octane rating or a low-octane rating is determined according to the detected value, and the ignition timing is set toward the advance angle or retard angle in response to the determined result, whereby the ignition timing is automatically changed over according to the type of the fuel in use, while at the same time the reference ignition timing is retarded in angle according to the detected value of knocks regardless of whether or not the change-over has been made.

According to the present invention, there is provided an ignition timing control apparatus foran internal combustion engine comprising: a sensing means for sensing knock signals in said engine; knock signal deriving means, responsive to the output of said sensing means, for deriving said knock signals; and a correction signal generating means, responsive to the output of said knock signal deriving means upon the occurrence of knock, for generating a correction signal for correcting the ignition timing; characterised by a fuel discriminating means, responsive to the output of said knock signal deriving means for discriminating between a high-octane rating fuel and a low-octane rating fuel for a fuel used in said engine; and a setting means, responsive to the output of said fuel discriminating means, for setting reference ignition timing characteristic for either said high-octane rating fuel or said low-octane rating fuel; wherein the correction signal generated by said correction signal generating means is arranged for correcting said reference ignition timing characteristic set by said setting means.

It is another general object of the invention to provide an ignition timing control apparatus for an internal combustion engine wherein the occurrence of knocks is detected, and a reference ignition timing displacement magnitude indicating the mixture ratio of a high-octane rating fuel and a low-octane rating fuel is determined according to the detected value, according to which the reference ignition timing is set in the advance angle or retard angle direction, whereby the mixture ratio is determined to continuously adjust the reference ignition timing to an optimum angle and the ignition timing is controlled in the direction of retard angle. At the same time, the occurrence of knock is immediately suppressed on the real time basis when knock arises at the time of a rapid variation of an environmental condition during the steady state engine operation or at the time of a transient operation.

According to the present invention, there is provided
an ignition timing control apparatus for an internal combustion engine comprising:
a sensing means (1) for sensing knock signals of said engine;
a knock signal deriving means (2), responsive to the output of said sensing means (1), for deriving said knock signals;
a correction magnitude determining means (50) for determining an ignition timing correction magnitude (0_{d}) in dependence on said knock signals; and
an ignition timing determining means (18, 54, 55) for generating reference ignition timing signals (8₃, 0_{b}) and for adjusting them in dependence on the ignition timing correction magnitude to produce ignition timing signals for suppressing the occurrence of knock;

characterised in that:
displacement magnitude determining means (52, 53) is provided for determining from the output of said knock signal deriving means (2) or the output of said correction magnitude determining means (50) a displacement magnitude for said reference ignition timing corresponding to the octane rating of a fuel used in said engine; and
the ignition timing determining means (18, 54, 55) is operative for adjusting the reference ignition timing signals in response to said displacement magnitude and the output of said correction magnitude determining means, whereby the ignition timing signals produced are additionally adjusted to take into account the octane rating of the fuel used in the engine.

Moreover, it is also possible to continuously control an ignition timing according to the detected value of knocks without a real time retard angle correction.

### Brief Description of the Drawings

Figure 1 shows an output shaft torque characteristic of an internal combustion engine as a function of ignition timing;
Figure 2 shows an ignition timing characteristic as a function of engine speed;
Figure 3 shows a block diagram of a first embodiment of an ignition timing control apparatus for an internal combustion engine in accordance with this invention;
Figure 4 shows waveform graphs for explaining the operation of the knock signal deriving portion in Figure 3;
Figure 5 shows waveform graphs for explaining the operations of the ignition timing change-over discriminating portion, the storage portion, the retard controlling voltage generator, the compound portion, and the ignition timing phase-shifter used in Figure 3, respectively;
Figure 6 shows a block diagram of a second embodiment of an ignition timing control apparatus for an internal combustion engine in accordance with this invention.
Figure 7 shows maps of ignition timing characteristics in the second embodiment;
Figure 8 shows a schematic block diagram of an arrangement of a third embodiment of an ignition timing control apparatus for an internal combustion engine in accordance with this invention;
Figures 9(a), (b), and (c) show respective characteristic curves for explaining the operation of the embodiments of this invention;
Figure 10 shows a flow chart for executing the operation of the controller used in the third embodiment shown in Figure 8;
Figure 11 shows a schematic block diagram of an arrangement of a fourth embodiment of an ignition timing control apparatus for an internal combustion engine in accordance with this invention;
Figure 12 shows a flow chart for executing the operation of the controller used in the fourth embodiment shown in Figure 11;
Figure 13 shows a schematic block diagram of an arrangement of a fifth embodiment of an ignition timing control apparatus for an internal combustion engine in accordance with this invention;
Figure 14 shows a flow chart for executing the operation of the controller used in the fifth embodiment shown in Figure 13;
Figure 15 shows a schematic block diagram of an arrangement of a sixth embodiment of an ignition timing control apparatus for an internal combustion engine in accordance with this invention;
Figure 16 shows a flow chart for executing the operation of the controller used in the sixth embodiment shown in Figure 15;
Figure 17 shows a characteristic curve for explaining engine load regions to set in a seventh embodiment using the same arrangement as the third embodiment of an ignition timing control apparatus for an internal combustion engine in accordance with this invention;
Figure 18 shows a flow chart for executing the operation of the controller used in the seventh embodiment of an ignition timing control apparatus for an internal combustion engine in accordance with this invention;
Figure 19 shows a flow chart for executing the operation of the controller used in an eighth embodiment of the same arrangement as the seventh embodiment of an ignition timing control apparatus for an internal combustion engine in accordance with this invention;
Figure 20 shows a block diagram of an arrangement of a ninth embodiment of an ignition timing control apparatus for an internal combustion engine in accordance with this invention;
Figure 21 shows waveform diagrams taken out of the various places of the retard angle control magnitude determining portion and the reference ignition timing displacement magnitude determining portion shown in Fig. 20;
Figure 22 shows a block diagram of an arrangement of a tenth embodiment of an ignition timing control apparatus for an internal combustion engine in accordance with this invention;
Figure 23 shows waveform diagrams taken out of the various places of the reference ignition timing displacement magnitude determining portion shown in Fig. 22;
Figure 24 shows a diagram for explaining the output modes of the retard/advance mode decision unit shown in Fig. 22;
Figure 25 shows a block diagram of an arrangement of an eleventh embodiment of an ignition timing control apparatus for an internal combustion engine in accordance with this invention;
Figure 26 shows waveform diagrams taken out of the retard angle control magnitude determining portion and the various places of the reference ignition timing displacement magnitude determining portion shown in Fig. 25;
Figure 27 shows a block diagram of an arrangement of a twelfth embodiment of an ignition timing control apparatus for an internal combustion engine in accordance with this invention;
Figure 28 shows a characteristic curve of output shaft torque in relation to supercharging pressure;
Figure 29 shows a block diagram of an arrangement of a thirteenth embodiment of an ignition timing control apparatus for an internal combustion engine in accordance with this invention;
Figure 30 shows a block diagram of an arrangement of a fourteenth embodiment of an ignition timing control apparatus for an internal combustion engine in accordance with this invention;
Figure 31 shows a block diagram of an arrangement of a fifteenth embodiment of an ignition timing control apparatus for an internal combustion engine in accordance with this invention;
Figure 32 shows disadvantageous wavefcrm diagrams taken out of the various places of the retard angle control magnitude determining portion and the reference ignition timing displacement magnitude determining portion shown in Fig. 20 which does not include an improvement in responsiveness;
Figure 33 shows advantageous waveform diagrams taken out of the various places of the retard angle control magnitude determining portion and the reference ignition timing displacement magnitude determining portion shown in Fig. 31 which includes an improvement in responsiveness;
Figure 34 shows a block diagram of an arrangement of a sixteenth embodiment of an ignition timing control apparatus for an internal combustion engine in accordance with this invention;
Figure 35 shows an output mode of the retard/advance mode decision unit used in Figure 34;
Figure 36 shows advantageous waveform diagrams taken out of the various places of the retard angle control magnitude determining portion and the reference ignition timing displacement magnitude determining portion shown in Fig. 34 which includes an improvement in responsiveness;
Figure 37 shows a block diagram of an arrangement of a seventeenth embodiment of an ignition timing control apparatus for an internal combustion engine in accordance with this invention;
Figure 38 shows waveform diagrams observed at various places of the reference ignition timing displacement magnitude determining portion and the storage portion shown in Fig 37;
Figure 39 shows a block diagram of an arrangement of an eighteenth embodiment of an ignition timing control apparatus for an internal combustion engine in accordance with this invention;
Figure 40 shows waveform diagrams observed at various places of the reference ignition timing displacement magnitude determining portion shown in Fig. 39; and,
Figure 41 shows a block diagram of an arrangement of a nineteenth embodiment of an ignition timing control apparatus for an internal combustion engine in accordance with this invention. Throughout the figures, the same reference numerals indicate identical or corresponding portions and element.

### Detailed Description of the Preferred Embodiments

The present invention will now be described in detail along the preferred embodiments illustrated in the accompanying drawings.

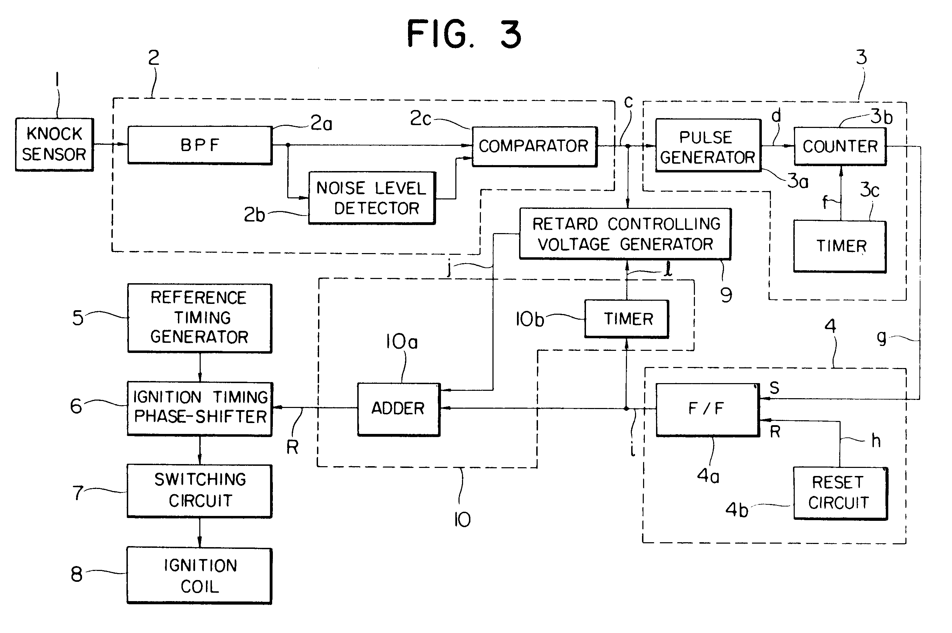

Fig. 3 shows a first embodiment of this invention, where knock sensor 1 is mounted on an internal combustion engine (not shown) to sense knocks of the engine. The output signal of the knock sensor 1 is received by a knock signal deriving portion 2, enclosed with dotted lines, which is composed of a bandpass filter 2a, a noise level detector 2b, and a comparator 2c. The input of the bandpass filter 2a is connected to the knock sensor 1 and the output thereof is connected to the noise level detector 2b and one input of the comparator 2c. The output of the noise level detector 2b is connected to the other input of the comparator 2c.

The knock signal deriving portion 2 is connected to a change-over discriminating portion 3 for ignition timing enclosed with dotted lines. This discriminating portion 3 performs an operation based on the output of the knock signal deriving portion 2 to determine whether or not the ignition timing is required to be changed over. The discriminating portion 3 is composed of a pulse generator 3a, a counter 3b, and a timer 3c. The input and the output of the pulse generator 3a are respectively connected to the output of the comparator 2c and the counting input of the counter 3b. The timer 3c is connected to the reset input of the counter 3b. It is to be noted that the change-over discriminating portion 3 may serve as a means for discriminating or determining, between a high-octane rating fuel and a low-octane rating fuel, for a fuel used in the engine as will be described later.

The change-over discriminating portion 3 is connected to a storage portion 4, enclosed with dotted lines, which stores the output of the change-over discriminating portion 3, that is the output of the counter 3b. The storage portion 4 is composed of a flip-flop (hereinafter referred to as F/F) 4a and a reset circuit 4b. The set input of the F/F 4a is connected to the output of the counter 3b and the reset input thereof is connected to the reset circuit 4b.

A generator 5 generates a reference ignition timing signal of the engine, and an ignition timing phase-shifter 6 phase-shifts the output signal of the reference ignition timing signal generator 5 according to the output of a compound circuit 10. Aswitching circuit 7 energizes or deenergizes an ignition coil 8 in synchronization with the output signal of the phase-shifter 6 to produce a high voltage necessary for the ignition of the engine.

A retard controlling voltage generator 9 is connected to the output of the comparator 2c and to the compound circuit 10, enclosed with dotted lines, composed of an adder 10a and a timer 1 Ob. The adder 10a has two input terminals one of which is connected to the output of the F/F 4a and the other of which is connected to the output of the retard controlling voltage generator 9. The input of the timer 10b is also connected to the output of the F/F 4a.

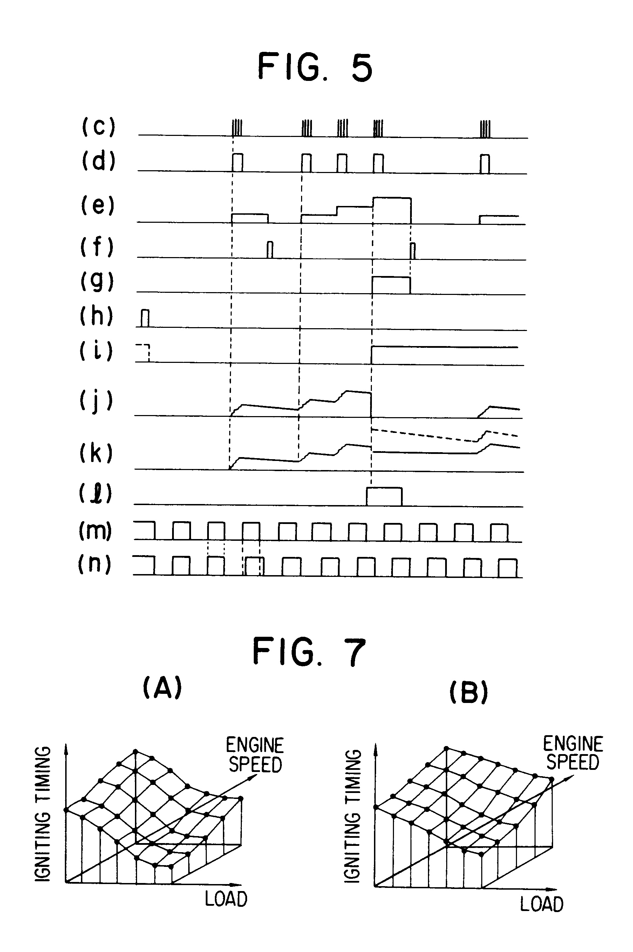

The operation of each of the block portion will now be described. Fig. 4 shows waveforms indicating the operation of each of the circuits in the knock signal deriving portion 2.

The knock sensor 1 is a vibration acceleration sensor generally well known as being mounted on the cylinder block (not shown) etc., of an engine, which converts the mechanical vibration into an electrical signal, and generates a vibrating wave signal, as shown in Fig. 4(a), received by the bandpass filter 2a. The bandpass filter 2a only passes therethrough a frequency component inherent in knocks, from the output signal of the knock sensor 1, thereby suppressing a noise component not relating to knocks to provide an output good in S/N ratio as shown in Fig. 4(b) by wave-form A.

The noise level detector 2b may be composed of, e.g. a half-wave rectifying circuit, an averaging circuit, and an amplifying circuit etc. The noise level detector 2b converts the output of the bandpass filter 2a (Fig. 4b, wave-form A) into a DC voltage by the half-wave rectification and the averaging operations, the DC voltage being amplified with a predetermined amplification to have a level, as shown in Fig. 4(b) by a wave-form B, higher than the noise component of the output signal of the bandpass filter 2a (Fig. 4(b), wave-form A) but lower than the knock component of the same.

The comparator 2c compares the output signal of the noise level detector 2b (Fig. 4(b), wave-form B) with the output of the bandpass filter 2a (Fig. 4(b), wave-form A). In the case where no knock occurs (Fig. 4, section C), since the output signal of the bandpass filter 2a (Fig. 4(b), wave-form A) is not greater than the output signal of the noise level detector 2b (Fig. 4(b), wave-form B), the comparator 2c provides no output, while in the case where knocks occur (Fig. 4, section D), since the former signal is greater than the latter signal, the comparator 2c provides as an output a pulse train as shown in Fig. 4(c). Accordingly, the output pulse train from the comparator 2c can be used for determining whether or not knocks have occurred.

Fig. 5 shows waveform indicating the operation of each portion except the knock signal deriving portion 2. The pulse generator 3a provides as outputs therefrom pulses as shown in Fig. 5(d) in response to the pulse train output from the comparator 2c as shown in Fig. 5(c) which corresponds to Fig. 4(c). As seen from Figs. 5(c) and 5(d), the pulse generator 3a provides as an output one pulse in response to the occurrence of knocks during one ignition. The output pulses from the pulse generator 3a are counted by the counter 3b the count of which is shown in Fig. 5(e). The timer 3c provides as an output a pulse per a predetermined time interval to reset the count of the counter 3b to zero, as shown in Fig. 5(f). The output of the counter3b is at a high logic level when the count of the counter 3b exceeds a predetermined count, which is three counts in the case of Fig. 5, as shown in Fig. 5(g). Namely, the ignition timing change-over discriminating circuit 3 provides as an output a high level signal upon the occurrence of a predetermined number of knocks within a predetermined time interval. This corresponds to the operation of an occurrence rate of knocks, which consequently enables to determine whether or not the change-over of the ignition timing is necessary.

The reset circuit 4b provides as an output a pulse at the high level at the time of starting the engine, as shown in Fig. 5(h). The F/F 4a is set by the high level output from the counter 3b to provide a high level output while it is reset by the high level output from the reset circuit 4b. The operation of the F/F 4a is shown in Fig. 5(i). At the starting of the engine, the F/F 4a is reset by the reset circuit 4b to have a low level output, which indicates an "advance angle mode of operation" for not changing over the ignition timing. When the output of the counter 3b becomes the high level as shown in Fig. 5(g), the output of the F/F 4a is changed over to the high level, which indicates a "retard angle mode of operation" for changing over the ignition timing. Afterwards, the retard angle mode is retained until the engine stops. Accordingly, the output of the F/F 4a remains at the low level, indicating the advance angle mode of operation, unless the output of the counter 3b becomes the high level after the starting of the engine.

The retard controlling voltage generator 9 is composed of e.g. an integration circuit which, when the comparator 2c provides as an output a pulse train as shown in Fig. 5(c), integrates the pulse train to raise the output voltage as shown in Fig. 50). On the other hand, when the comparator 2c provides no output pulse train, indicating the absence of knocks, the output of the voltage generator 9 gradually falls at a predetermined rate. Consequently, the voltage generator 9 generates a retard controlling voltage for retarding the ignition timing up to the knock limit point on a real time basis to suppress the occurrence of knocks.

The compound portion 10 compounds the outputs of the F/F 4a and the retard controlling voltage generator 9 by means of the adder 10a to provide the added result which is shown in Fig. 5(k). The timer 1 Ob provides as an output therefrom pulses for a predetermined time interval as shown in Fig. 5(1) when the output of the F/F 4a has a transition from the low level indicating the advance angle mode to the high level indicating the retard angle mode. The output pulse of the timer 1 Ob is received by the reset terminal of the voltage generator 9 to reset the output voltage of the voltage generator 9, as shown in Fig. 5(j) to the zero level. Therefore, the output of the adder 10a will be as shown in Fig. 5(k) by a solid line. If the output of the voltage generator 9 was added to the output of the F/F 4a with any modification at the time of the transition of the output of the F/F 4a towards the retard mode, the output of the adder 10a would be excessively retarded in angle as shown in Fig. 5(k) by a dotted line, providing a bad operation of the engine. Therefore, the output of the voltage generator 9 is reset to zero so that the output of the voltage generator 9 is not added to the output of the F/F 4a to preclude the excessive retard angle control at the time of the transition of the ignition timing toward the retard mode as described above.

On the other hand, the ignition timing phase-shifter 6 controls the phase angle of the input signal towards the retard mode according to the control voltage. This phase-shifter 6 is well known in the art of an ignition timing control apparatus and accordingly, the description thereof is omitted. The reference ignition timing signal generator may be, for example, an ignition signal generator, included in the distributor, which detects the rotation of the crank shaft of the engine and provides as an output a signal indicating ignition timings. The ignition timing characteristic of this reference ignition timing signal generator 5 is set by an engine speed and a load condition, the engine speed being set at the characteristic shown in Fig. 2 by the curve B. The output signal of the generator 5 shown in Fig. 5(m) is received by the phase-shifter 6, which also receives the output of the adder 10a as a controlling voltage input to phase-shift the output signal of the signal generator 5 according to the output voltage of the adder 10a. The output signal of the phase-shifter 6 is shown in Fig. 5(n).

Now assuming that the output of the F/F 4a is at the low level and the output of the retard controlling voltage generator 9 is at the zero level, the phase-shifter 6 performs no phase-shifting operation so that it directly provides the output signal of the signal generator 5 without any modification, namely the actual ignition timing characteristic remains as shown in Fig. 2 by the curve B.

When the engine generates knocks so that the portion 3 determines the change-over of the ignition timing to cause the output of the F/F 4a to be changed over to the high level (retard angle mode) from the low level, the phase-shifter 6 phase-shifts the output signal of the signal generator 5 (Fig. 5(m) by a predetermined retard angle as shown in Fig. 5(n). As a result, the actual ignition timing characteristic assumes the curve A in Fig. 2. If further knocks arise after the change-over of the ignition timing, the actual ignition timing characteristic is further retarded beyond the curve A in Fig. 2.

Thus, when using the high-octane (premium) gasoline for the engine, such a knock as requiring the change-over of the reference ignition timing does not arise in the characteristic B shown in Fig. 2 by the curve B, and therefore the ignition timing is not changed over, remaining in the characteristic curve B in Fig. 2. On the other hand, when using the low-octane (regular) gasoline for the engine, the ignition timing characteristic curve B in Fig. 2 resides in a region where knocks arise and therefore the engine generates knocks. Then, the knocks are detected through the knock signal deriving portion 2, the ignition timing change-over discriminating portion 3, the storage portion 4, and the ignition timing phase-shifter 6 so that the ignition timing is changed over to the retard angle mode and fixed at the ignition timing characteristic curve A in Fig. 2. In the event that knocks arise even in the fixed ignition timing characteristic, the ignition timing is retarded to the knock limit as shown in Fig. 1 by the retard angle controlling voltage generator 9, the compound portion 10, and the ignition timing phase-shifter 6.

While in the above embodiment, the change-over of the reference ignition timing signal makes a phase-shifting in the direction of retard angle according to the output of the storage portion 4, it may be done between two reference ignition timing signals different in ignition timing characteristic, according to the output of the storage portion. This measure will now be described as a second embodiment of this invention.

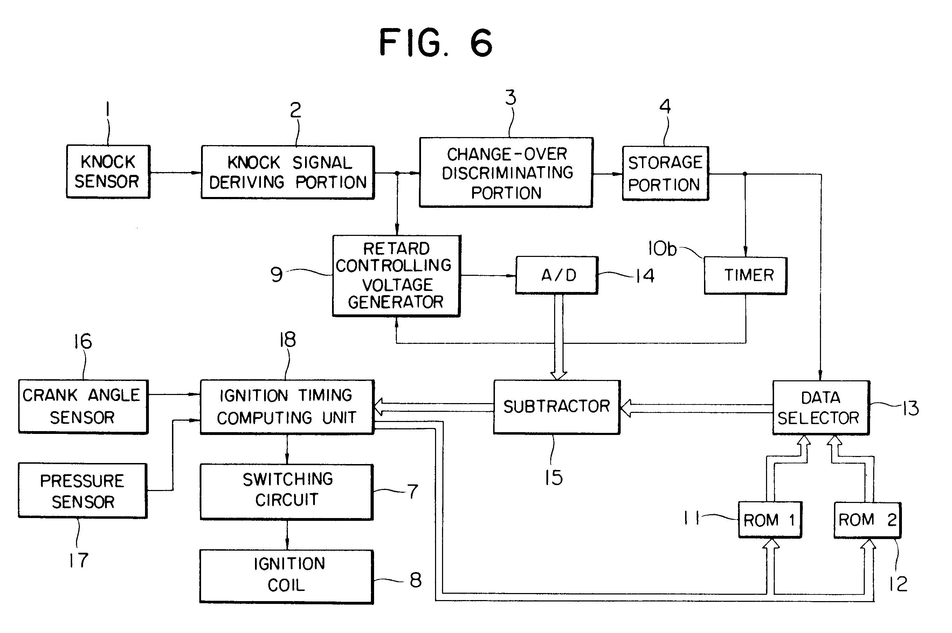

Fig. 6 shows a block diagram of the second embodiment of this invention. The same reference numerals in Figs. 3 and 6 designate identical or corresponding portions the description of which will not be repeated.

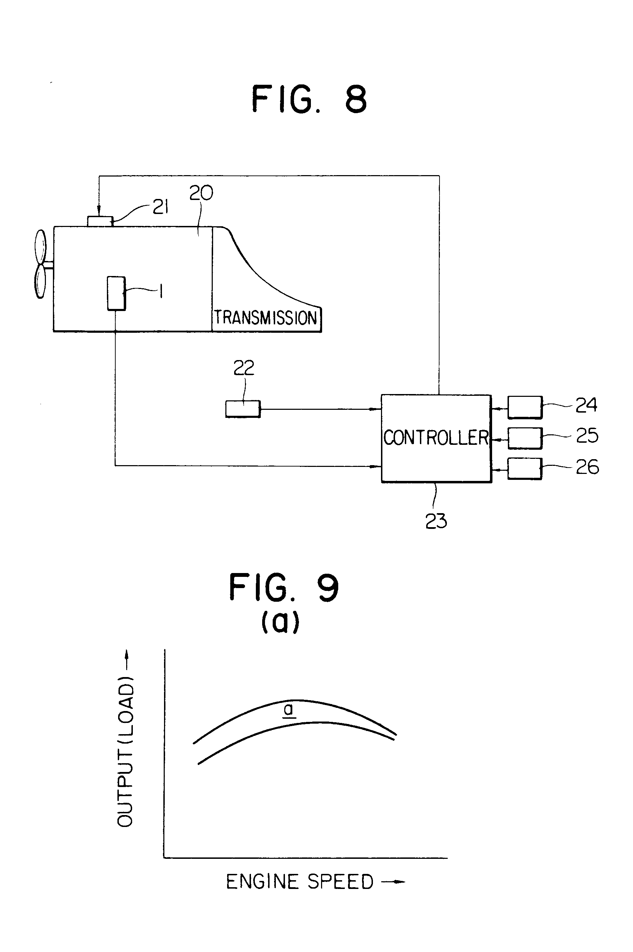

In this embodiment, there are provided first and second ignition timing characteristic memory portions 11 and 12 which are Read Only Memories (hereinafter referred to as ROM). These ROMs' has respectively stored therein ignition timing data at corresponding memory addresses determined by an engine speed and a load condition as illustrated in Figs, 7(A) and (B). Fig. 7(A) shows data of the ROM 11 set for the low-octane gasoline while Fig. 7(B) shows data of the ROM 12, set for the high-octane gasoline, positioned in the side of advance angle in relation to Fig. 7(A).

A data selector 13 receives the data from the ROM's 11 and 12 as well as the output mode signal from the storage portion 4 whereby it provides as an output therefrom data of the ROM 11 or 12 in response to the output mode signal of the storage portion 4. An A/D converter 14 converts the analog output voltage of the retard controlling voltage generator 9 into corresponding digital data and a subtractor 15 subtracts the output value of the data selector 13 from the output value of the A/D converter 14. A crank angle sensor 16 detects the crank rotational angle of the engine, and a pressure sensor 17 detects a intake air pressure of the engine. An ignition timing computing unit 18 computes the engine speed from the output signal of the crank angle sensor 16, determines the load condition of the engine from the output signal of the pressure sensor 17, and converts the value determined by the engine speed and the load condition into an address value, which is sent to the ROM's 11 and 12, The ignition timing computing unit 18 also reads out the output data of the subtractor 15, computes the ignition timing from the output data of the subtractor 15 on the basis of the output signal of the crank angle sensor 16, and sends the ignition signal to the switching circuit 7.

In operation, the knock signal deriving portion 2, the ignition timing change-over discriminating portion 3, the storage portion 4, and the retard controlling voltage generator 9 respectively perform the same function as in the first embodiment shown in Fig. 3.

Now, when using the high-octane gasoline, the output of the storage portion 4 remains at the low level (advance angle mode) due to the absence of knocks. Therefore, the data selector 13 selects and provides as outputs the data stored in the ROM 12 in response to the output mode signal of the storage portion 4 indicating the advance mode. In other words, the ignition timing characteristic shown in Fig. 7(B) has been selected as a reference ignition timing. In this reference ignition timing, if no knock occur, the outputs of the voltage generator 9 and the A/D converter 14 will be at the zero level, and therefore the subractor 15 di- i-rectly passes therethrough the output data of the selector 13 to the ignition timing computing unit 18. When knocks do occur but only to a degree where it is not required to change over the operation of the ignition timing change-over discriminating portion 3, the voltage generator 9 provides as an output a voltage corresponding to the occurrence of the knocks, this voltage being converted by the A/D converter 14 into a digital value, which is subtracted in the subtractor 15 from the digital value selected by and being outputted from the data selector 13. Consequently, the output data of the subtractor 15 is the data (8₃ - 8_{R}) which is obtained by subtracting the angle (8p) corresponding to the output of the voltage generator 9 from the selected data (8ₛ) of the ROM 12. The ignition timing computing unit 18 then provides the ignition output signal which is retarded by the angle (8_{R}) corresponding to the occurrence of knocks from the reference ignition timing indicated by the characteristic shown in Fig. 7(B), thereby suppressing further occurrence of knocks.

On the other hand, when using the low-octane gasoline, the output of the storage portion 4 generates, due to the occurrence of knocks, the high logic level at its output indicating the retard angle mode and hence the data selector 13 provides as output data, the data of the ROM 11, based on the characteristic in Fig. 7(A). Then the ignition timing computing unit 18, similar to the case of the high-octane gasoline, reads out the data (θ_{A}) of the ROM 11 when no further knock occurs while reading out the data (8A -8_{R}) when further knocks occur.

Thus, according to the second embodiment, a reference ignition timing characteristic is changed over between different sets (Figs. 7(A) and (B)) in response to the use of a premium gasoline or a regular gasoline and, when further knocks occur in either of those reference ignition timing characteristics the reference ignition timing is further retarded in angle to suppress the occurrence of the knocks.

As in the above embodiments, in the case where a regular gasoline and a premium gasoline are alternatively used for an engine, whether the fuel in use is the regular gasoline or the premium gasoline can be distinguished by the detection of the occurrence of knocks, and the distinguished result advantageously enables the reference ignition timing to be automatically changed over to the one for the regular gasoline or the premium gasoline.

Also before or after the change-over of the ignition timing, if further knocks arise in response to the variation of the environmental condition during the engine operation, the ignition timing can be advantageously retarded in angle to the knock limit on a real time basis.

Moreover, when the ignition timing is changed over towards the retard angle, an excessive retard angle can be precluded by resetting the retard controlling voltage generator 9.

While in the above embodiments the occurrence of knocks is detected and then a fuel used for an engine is discriminated to be a high-octane rating gasoline or a low-octane rating gasoline, it is also possible that at first the ignition timing is preliminarily set to the high-octane rating gasoline, that the occurrence of knocks is then detected, and that by examining the feature of the occurrence of knocks the above preliminary set for the ignition timing is corrected. This measure may be carried out as a third embodiment of this invention by means of a computer as described in the followings.

Fig. 8 shows a block diagram of the third. embodiment of this invention in which an internal combustion engine for an automobile 20 has the knock sensor 1 as described in the previous embodiments and a distributor mounted thereon. A key sensor 22 senses the (ON/OFF) position of a key switch (not shown). The knock sensor 1, the distributor 21, and the key sensor 22 are connected to a controller 23 which is also connected to a fuel cap sensor 24 for detecting the open or closed condition of a fuel cap (not shown), an engine speed sensor 25 corresponding to the. crank angle sensor 16 in Fig 6 for detecting the rotational speed of the engine 20, and a load sensor, corresponding to the pressure sensor 17 in Fig. 7 for detecting the load of the engine 20.

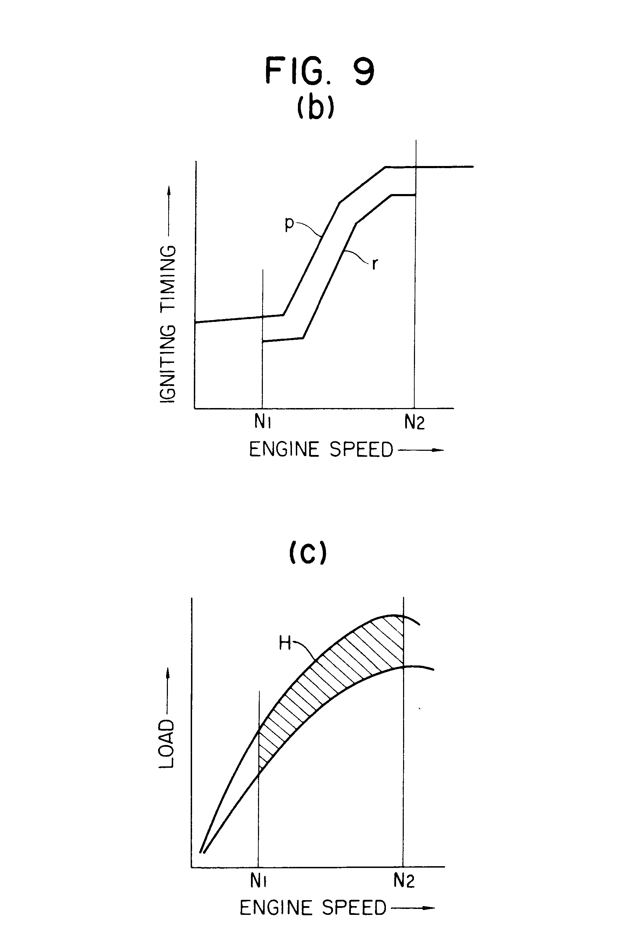

The controller 23 serves as a fuel discriminating means, and a change-over discriminating means as well as a knock control means, comprising:
(1) means for setting an operating condition (ignition timing) adapted for the high-octane rating fuel by computing a retard angle adapted for the high-octane rating fuel on the basis of the data as shown in Fig. 7;
(2) means for setting an operating condition (ignition timing) adapted for the low-octane rating fuel by computing a retard angle adapted for the low-octane rating fuel on the basis of the data shown in Fig. 7;
(3) means for determining on the basis of the detected results of the engine speed sensor 25 and the load sensor 26 whether or not the load condition lies in a region, as shown in Fig. 9(a) by a region "a", where knocking arises in the case of the engine being operated with the high-octane rating fuel and for determining that the fuel in use is the low-octane rating fuel if knocking arises outside the load region "a" under the operation in the above ignition timing for the high-octane rating fuel;
(4) means for changing over or transferring from the ignition timing for the high-octane rating fuel to that for the low-octane rating fuel if it is determined in the above (3) that the fuel in use is the low-octane rating fuel; and,
(5) knock control means for controlling the ignition timing so as to avoid knocking when knocking occurs.

It is to be noted that the operating condition (ignition timing "p" shown in Fig. 9(b)), adapted for the operation when using the low-octane rating fuel, set in the above means (2) may be the same as that of an ignition advance angle "p" set for the high-octane rating fuel in the low and middle engine load regions while the operating condition may be set to have a characteristic "r" which is stepwise retarded by a predetermined angle respect to the ignition advance angle forthe high-octane rating fuel in a high load region "H" shown in Fig. 9(c) where knocking easily arises.

This setting enables the MBT (Minimum advance for Best Torque) to be sufficiently provided in the low and middle load region, thereby improving the output and the fuel consumption and surely avoiding at an early stage the occurrence of knocks in the high engine load region. The controller 23 then provides an ignition advance signal adapted for the high-octane or low-octane rating fuel to each ignition plug through the distributor 21.

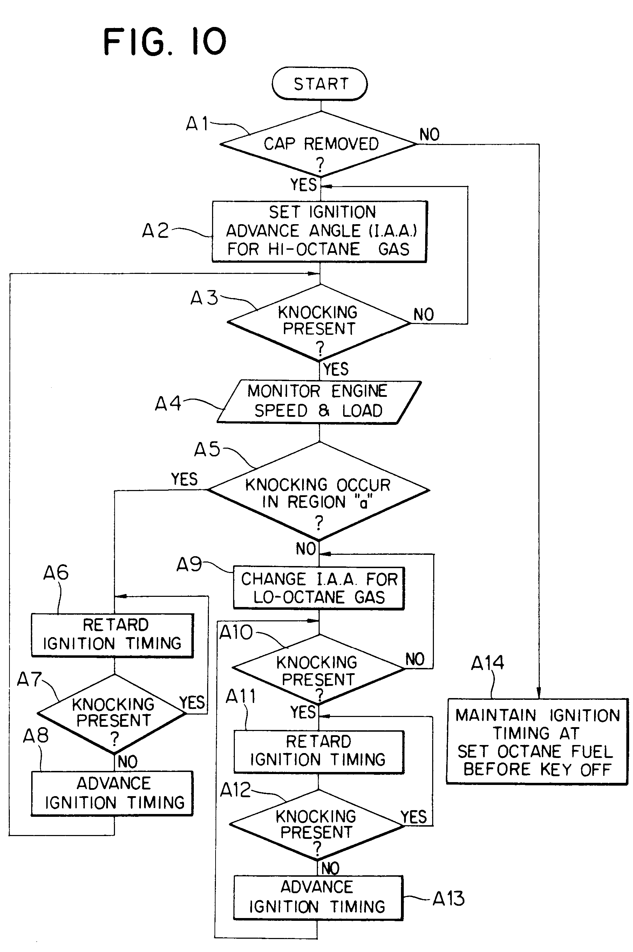

There will now be described a process performed in the controller 23 with reference to the flow chart shown in Fig 10.

At first, a check is made in step A1 to determine whether or not the fuel cap has been removed while the key switch was turned off. This determination is made for the following reason. Namely, if the fuel cap was not removed, it implies that no fuel was fed to the fuel tank so that the kind or the octane rating of the fuel being used for the engine must remain unchanged, thereby omitting subsequent superfluous determinations.

Thus, if the fuel cap has not been removed, the answer in step A1 will be "NO" so that in step A14 an ignition timing control is made for the fuel of the set octane rating prior to the key being turned off.

On the other hand, however, if the answer in step A1 is "YES", the fuel in use might have been changed so that the following procedure is taken.

In step A2, the ignition timing is set for an advance angle for a high-octane gasoline (high-octane rating fuel). This step is done by the operating condition setting means for the high-octane rating fuel in the controller 23. After this step, the engine 20 is operated at the ignition timing set for the high-octane gasoline.

In step A3, whether or not knocking arises is determined, and if the answer is "NO", then stepsA2 and A3 are repeated. This causes the engine 20 to be continuously operated at the ignition timing for the high-octane gasoline.

If in step A3 the answer is "YES", the fuel in use will be discriminated and set at an ignition advance angle adapted for the fuel in the following processes.

In step A4, the controller 23 receives as inputs the current engine speed from the sensor 25 and the current engine load, and in step A5, determination is made whether or not where the knocking occurs is the region "a" as shown in Fig. 9(a). This determination is made by the region discriminating means (3).

In the region "a" in Fig. 9(a), as described above, knocking occurs in the case of the engine 20 being operated with the high-octane gasoline so that the region "a" is preset by the above means (3) to prevent knocking from occurring outside the preset region "a" in the operation of the engine with the high-octane gasoline. Also, since a load region where knocking occurs when using the high-octane gasoline is higher than a load region where knocking occurs when using the low-octane gasoline as shown in Fig. 9(a), when the low-octane regular gasoline is used for the engine 20, some knocking is to be detected before the operating condition of the engine 20 reaches to the preset region "a", that is, detected in a different region from the preset region "a".

On the other hand, when the high-octane premium gasoline is used for the engine 20, no knocking is to be detected before the operating condition of the engine 20 reaches to the preset region "a".

Therefore, if it is determined in step A5 that a region where knocking has occurred is the preset region "a", the answer will be "YES" and then for the purpose of knock control on the basis of the high-octane gasoline advance angle, in step A6 the ignition timing is retarded and then in step A7 it is determined whether or not further knocking has occurred, these steps A6 and A7 being repeated until knocking is eliminated. After knocking has been extinguished, the ignition timing is advanced in step A8. Such an ignition timing control is performed by the knock control means (5) of the controller 23. Then, whether or not knocking still exists is determined again in step A3, and if the answer is determined as "NO", the engine 20 is continuously operated at the advanced ignition angle for the high-octane gasoline.

On the other hand, since knocking occurs before the operating condition reaches to the preset region "a" when using the low-octane gasoline, it is determined in step A3 that knocking has occurred and further in step A5 via step A4 that a region where the knocking has occurred is not the preset region "a", then in step A9, the ignition timing is changed over to be set at an advanced angle for the regular low-octane rating fuel.

The engine 20 is now operated at the advanced ignition timing for the low-octane rating fuel.

Thereafter, it is determined in step A10 whether or not further knocking occurs, in order to perform a knock control on the basis of the ignition timing forthe low-octane. If it is determined in step A10 that knocking has occurred, the ignition timing is further retarded in step A11 and whether or not knocking still exists is determined again in step A12, these steps A11 and A12 being repeated. When no knocking occurs, the ignition timing is advanced in step A13. This ignition timing control is made by the knock control means (5) in the controller 23. This knock control means is also included in the above first and second embodiments.

Then, it is determined again in step A10 whether or not further knocking arises. If the answer in step A10 is "NO", the engine 20 is continuously operated at the ignition timing for the low-octane rating fuel.

Thus, since it is automatically determined whether the fuel in use is the high-octane gasoline or the low-octane gasoline so that an optimum ignition timing angle is automatically set on the basis of the determined result, thereby operating the engine at that ignition timing angle, it is possible that the engine output and the drivability is enhanced while the fuel consumption is reduced.

It is also possible that if this system is applied to an engine as having a large difference of MBT or knock limit between the high-octane gasoline and the low-octane gasoline, a proper ignition timing control is performed without numerous retardations.

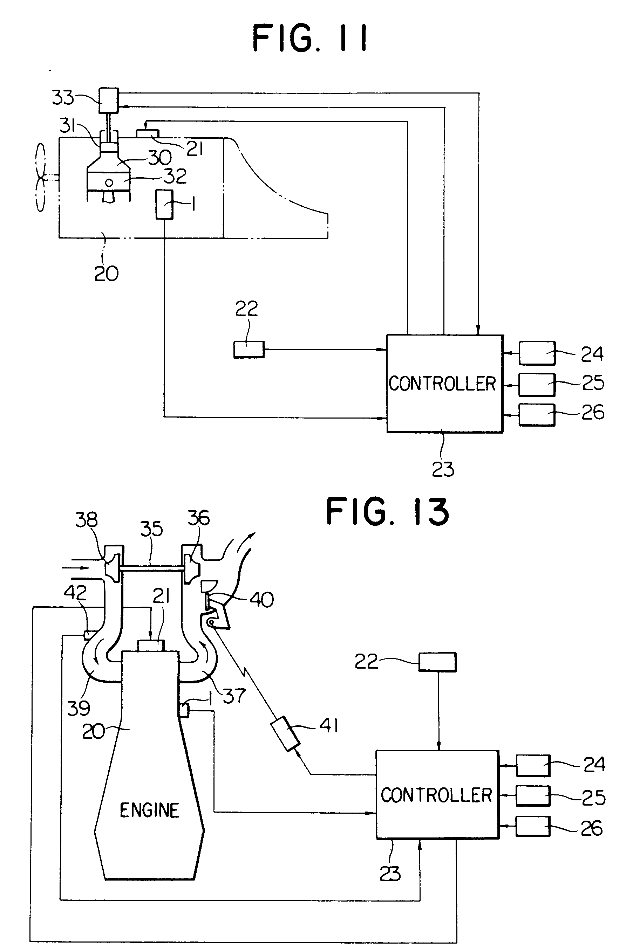

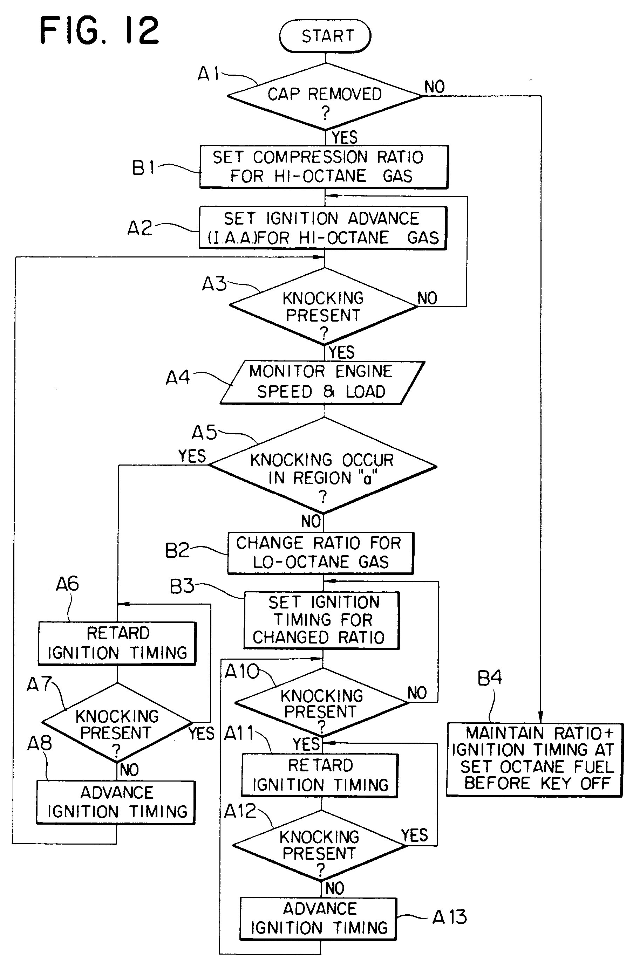

Next, a fourth embodiment of this invention will be described with reference to Figs. 11 and 12.

In Fig. 11, the engine 20 is adapted such that the volume of a cylinder 30 is also regulated by a subpiston 31 different from a piston 32 for rotating the crank shaft of the engine, this regulation being made by driving the subpiston 31 with an actuator 33.

Thus, the volume of the cylinder 30 may be changed so that the compression ratio may be changed.

While in the case where the regular gasoline is used to operate the engine 20 rather than the case where the premium gasoline is used to operate the engine 20, knocking becomes more apt to arise unless the compression ratio is reduced, in the opposite case, the compression ratio can be increased. Namely, while a proper compression ratio is different between the regular gasoline and the premium gasoline, the compression ratio of the engine 20 with the subpiston 31 can be controlled to have an optimum value for either of the gasolines by controlling the actuation magnitude of the actuator 33.

Such a control is performed by the controller 23 which, in this embodiment, comprises:
(1) means for setting an operating condition (compression ratio and ignition timing adapted for this compression ratio) adapted for the high-octane rating fuel;
(2) means for setting an operating condition (compression ratio and ignition timing adapted forthis compression ratio) adapted forthe low-octane rating fuel;
(3) means for determining on the basis of the detected results of the engine speed sensor 25 and the load sensor 26 whether or not the load condition lies in a region, as shown in Fig. 9(a) by a region "a", where knocking arises in the case of the engine being operated with the high-octane rating fuel and for determining that the fuel in use is the low-octane rating fuel if knocking arises outside the load region "a" under the operation in the above compression ratio and ignition timing for the high-octane rating fuel;
(4) means for changing over or transferring from the compression ratio and the ignition timing for the high-octane rating fuel to those for the low-octane rating fuel if it is determined in the above
(3) that the fuel in use is the low-octane rating fuel; and,
(5) knock control means for controlling the ignition timing so as to avoid knocking when knocking occurs.

It is to be noted that the compression ratio among the operating conditions adapted for the operation when using the low-octane rating fuel may be set at the same compression ratio as for the high-octane rating gasoline in the low and middle engine load regions while it may be set at a compression ratio small- erthan thatforthe high-octane in the high load engine region H shown in Fig. 9(c) where knocking can easily occur.

Thus, the engine output and the fuel consumption is improved in the low and middle load regions while the occurrence of knocking in the early stage can be surely avoided in the high load region.

The regulated compression ratio signal, adapted for the high-octane gasoline or the low-octane gasoline, from the controller 23 is supplied to the actuator 33 while the ignition timing signal, for either of the gasolines, from the controller 23 is supplied to each ignition plug through the distributor 21.

In the flow chart shown in Fig. 12 and executed by the controller 23 in Fig. 11, a mere difference from the third embodiment consisting of steps A1-A14 of this invention shown in Fig. 10 is that this fourth embodiment has different steps B1-B4.

Namely, in step B1, the actuator 33 is actuated by a predetermined magnitude to set the compression ratio for the high-octane gasoline white in step A2 the ignition timing is set for the high-octane gasoline. Thereafter, the engine 20 is operated at the compression ratio as well as the ignition timing both for the high-octane gasoline.

In step B2, after it has been determined that in step A5 the occurrence of knocking is not detected in the preset region "a" for the low-octane gasoline, the actuator 33 is actuated by a predetermined magnitude to change over from the compression ratio for the premium gasoline to that for the regular gasoline. Then in step B3, an ignition timing is adapted for the new compression ratio is set.

In step B4, if it is determined in step A1 that the fuel cap has not been removed after the key had been turned off the last time, the engine 20 is controlled with the compression ratio as well as the ignition timing for the fuel of the octane rating set before the key switch was turned off the last time.

The othersteps A1 -A8 and A10-A13 are the same as described in the third embodiment shown in Figs. 8 and 10.

It is to be noted that the actuation magnitude of the actuator 33 is regulated by means of a feedback signal from a position sensor (not shown) combined with the actuator 33.

Thus, since it is automatically determined whether the fuel in use is the high-octane gasoline or the low-octane gasoline so that an optimum compression ratio and ignition timing angle are automatically set on the basis of the determined result, thereby operating the engine at those compression ratio and ignition timing angle, it is possible that the engine output and the drivability is enhanced while the fuel consumption is reduced.

In addition to the compression ratio, since the ignition timing can be modified to the extent that knocking may not arise, the thermal increase of the exhaust gas can be prevented.

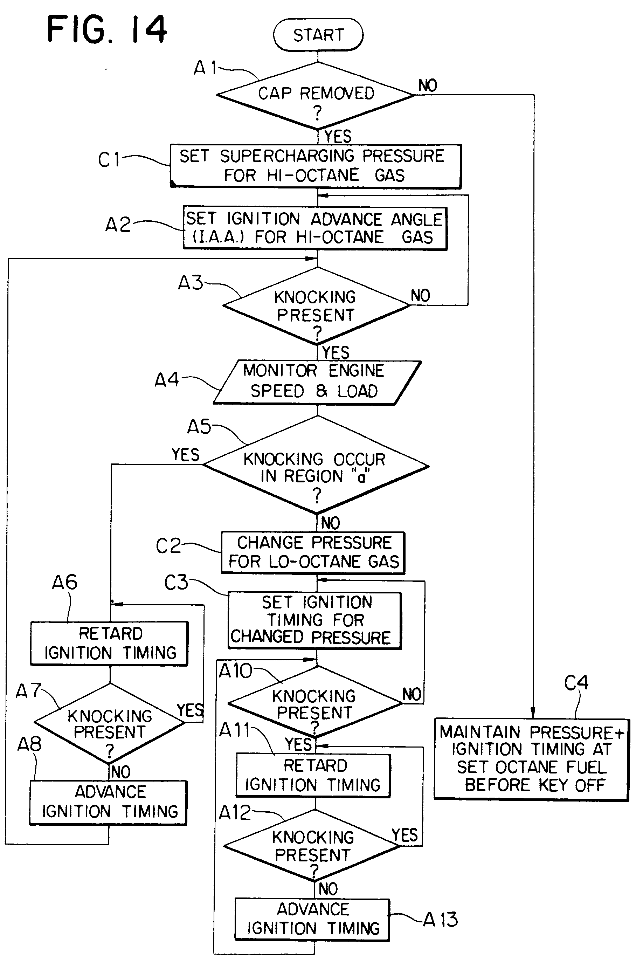

A fifth embodiment shown in Figs. 13 and 14 will now be described herebelow.

In Fig. 13, the engine 20 is associated with a turbo charger 35 which has a turbine 36 disposed in an exhaust path 37 of the engine 20 and a compressor 38 disposed in an intake path 39 of the engine 20. In the exhaust path 37, a waste gate valve 40 is further disposed forcontrolling a supercharging pressure. To actuate the waste gate valve 40, an actuator41 is provided. The intake path 39 is attached with a pressure sensor 42.

The actuator 41 may be of a pressure responsive type and has a diaphragm interconnected with the waste gate valve 40 through a rod. Pressure chambers partitioned by the diaphragm are connected with a pressure introducing path in the intake path while connected with an air introducing path with an orifice and an electromagnetic valve. Therefore, in a state where the electromagnetic valve is closed, the waste gate valve begins to open in excess of a predetermined supercharging pressure while in the open state of the electromagnetic valve the pressure chambers of the actuator 41 release the inner pressure into the atmosphere, so that the waste gate valve 40 will not begin to open unless the pressure in the chambers exceeds the supercharging pressure. Namely, if the electromagnetic valve is opened, a maximum supercharging pressure will be provided.

While in the case where the regular gasoline is used to operate the engine 20 rather than the case wherethe premium gasoline is used to operate the engine 20, knocking becomes apt to arise unless the maximum supercharging pressure is reduced, in the opposite case, the maximum supercharging pressure can be increased. Namely, while a proper supercharging pressure is different for the regular gasoline and the premium gasoline, the maximum supercharging pressure of the engine 20 with the turbo charger 35 attaching the waste gate valve 40 can be controlled to have an optimum value for either of the gasolines by controlling the actuation start timing of the waste gate valve 40.

Such a control is performed by the controller 23 comprising the following means:
(1) means for setting an operating condition (supercharging pressure and ignition timing adapted for this supercharging pressure) adapted for the high-octane rating fuel;
(2) means for setting an operating condition (supercharging pressure and ignition timing adapted for this supercharging pressure) adapted for the low-octane rating fuel;
(3) means for determining on the basis of the detected results of the engine speed sensor 25 and the load sensor 26 whether or not the load condition lies in a region, as shown in Fig. 9(a) by a region "a", where knocking arises in the case of the engine being operated with the high-octane rating fuel and for determining that the fuel in use is the low-octane rating fuel if knocking arises outside the load region "a" under the operation in the above supercharging pressure and ignition timing for the high-octane rating fuel;
(4) means for changing over or transferring from the supercharging pressure and the ignition timing for the high-octane rating fuel to those for the low-octane rating fuel if it is determined in the above (3) that the fuel in use is the low-octane rating fuel; and,
(5) knock control means for controlling the ignition timing so as to avoid knocking when knocking occurs.

The regulated supercharging pressure signal, adapted for the high-octane gasoline or the low-octane gasoline, from the controller 23 is supplied to the electromagnetic valve of the actuator41 while the ignition timing signal, for either of the gasolines, from the controller 23 is supplied to each ignition plug through the distributor 21.

The process executed by the controller 23 consists of steps A1-A8, A10-A13 and C1-C4 as shown in Fig. 14. The basic concept of this flow chart is substantially the same as that shown in Fig. 12 except for steps C1-C4.

Namely, in this embodiment, steps C1-C4 may be executed by substituting the supercharging pressure forthe compression ratio in steps B1-B4 shown in Fig. 12.

Thus, the fifth embodiment of this invention effects the same advantage as the above embodiments.

In addition to the supercharging pressure, since the ignition timing can be modified to the extent that knocking may not arise, the thermal increase of the exhaust gas can be prevented.

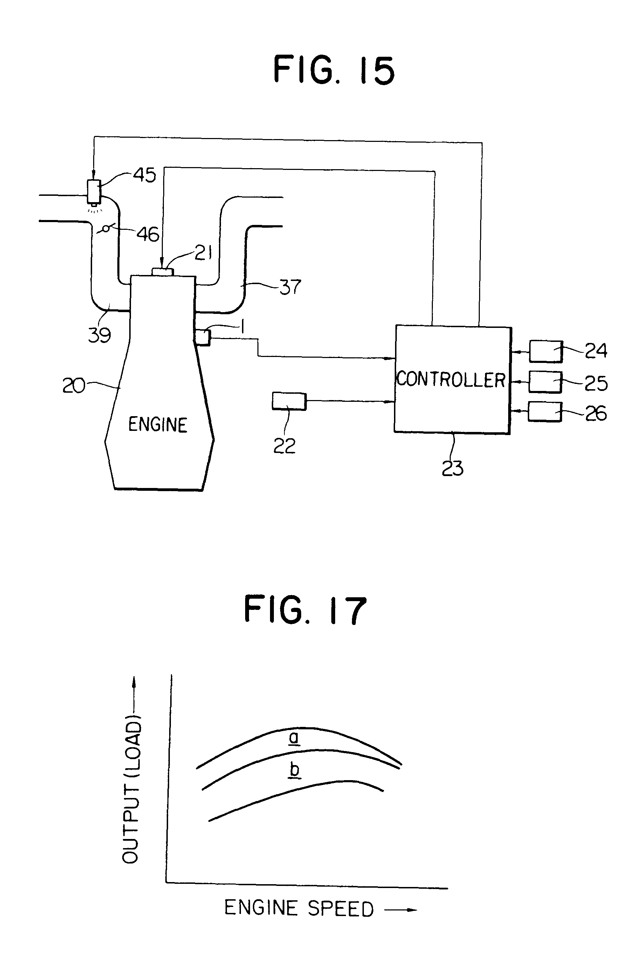

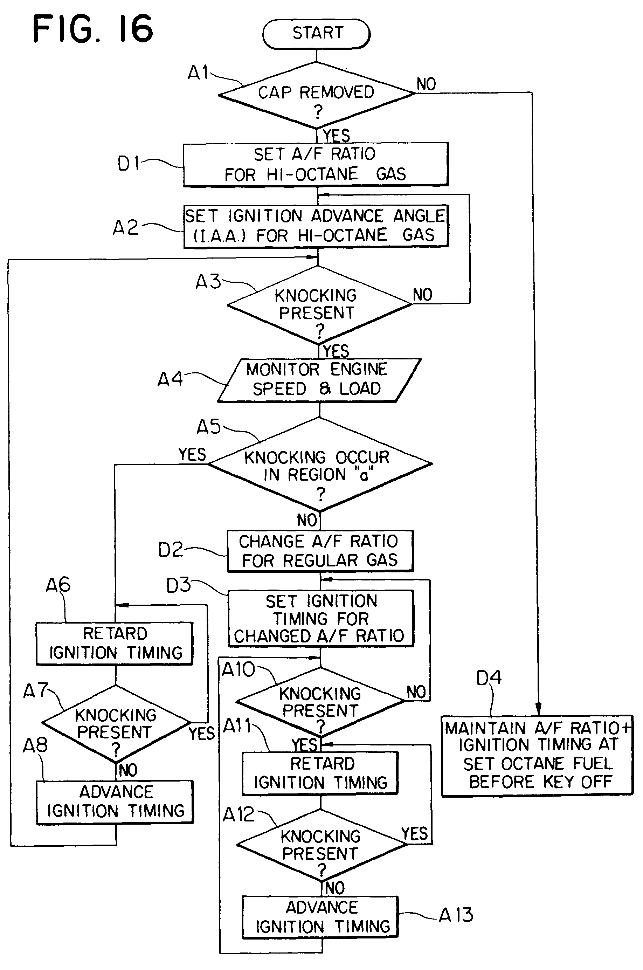

Next, a sixth embodiment of this invention will be described with reference to Figs. 15 and 16.

The engine 20 has mounted thereon an electromagnetic fuel injection valve 45 in the upstream side of the position of a throttle valve 46 in the intake path 39. The controller 23 provides a pulse train signal to the fuel injection valve 45 which thereby injects fuel according to the operating condition of the engine 20.

Therefore, by the control of the signal from the controller 23, the fuel injection can be regulated, thereby regulating the air/fuel ratio (hereinafter referred to as A/F ratio).

While in the case where the regular gasoline is used to operate the engine 20 rather than the case where the premium gasoline is used to operate the engine 20, knocking becomes apt to arise unless the A/F ratio is reduced toward a rich region, and in the opposite case the A/F ratio can be increased toward a lean region. Namely, while a proper A/F ratio is different between the regular gasoline and the premium gasoline, the A/F ratio of the engine 20 with the electromagnetic fuel injection valve 45 can be controlled to have an optimum value for either of the gasolines by controlling the condition of the pulse train signal from the controller 23.

Such a control is also performed by the controller 23, comprising:
(1) means for setting an operating condition (A/F ratio and ignition timing adapted for this A/F ratio) adapted for the high-octane rating fuel;
(2) means for setting an operating condition (A/F ratio and ignition timing adapted for this A/F ratio) adapted for the low-octane rating fuel;
(3) means for determining on the basis of the detected results of the engine speed sensor 25 and the load sensor 26 whether or not the load condition lies in a region, as shown in Fig. 9(a) by a region "a", where knocking arises in the case of the engine being operated with the high-octane rating fuel and for determining that the fuel in use is the low-octane rating fuel if knocking arises outside the load region "a" under the operation in the above A/F ratio and ignition timing forthe high-octane rating fuel;
(4) means for changing over or transferring from the A/F ratio and the ignition timing for the high-octane rating fuel to those for the low-octane rating fuel if it is determined in the above (3) that the fuel in use is the low-octane rating fuel; and,
(5) knock control means for controlling the ignition timing so as to avoid knocking when knocking occurs.

It is to be noted that the A/F ratio among the operating condition adapted for the operation when using the low-octane rating fuel may be set at the same A/F ratio as for the high-octane rating gasoline in the low and middle engine load regions while it may be set at an A/F ratio smaller than that for the high-octane in the high load engine region H shown in Fig. 9(c) where knocking can easily occur.

Thus, the engine output and the fuel consumption is improved in the low and middle load regions while the occurrence of knocking in the early stage can be avoided in the high load region.

The regulated A/F ratio signal, adapted for the high-octane gasoline or the low-octane gasoline, from the controller 23 is supplied to the electromagnetic fuel injection valve 45 while the ignition timing signal, adapted for either of the gasolines, from the controller 23 is supplied to each ignition plug through the distributor 21.

The process executed by the controller 23 consists of steps A1-A8, A10-A13 and D1-D4 as shown in Fig. 16. The basic concept of this flow chart is substantially the same as that shown in Figs. 12 and 14 except for steps D1-D4.

Namely, in this embodiment, steps D1-D4 may be executed by substituting the A/F ratio for the compression ratio in steps B1-B4 shown in Fig. 12 or for the supercharging pressure in steps C1-C4 shown in Fig. 14.

Thus, the sixth embodiment of this invention effects the same advantage as the above embodiments.

This sixth embodiment is also applicable to a car- buretter system engine in addition to the engine of the electromagnetic injection valve system. In this application, the A/F ratio is regulated by changing e.g. the bleed amount in which the controller 23 supplies a control signal to a mechanism for changing the bleed amount.

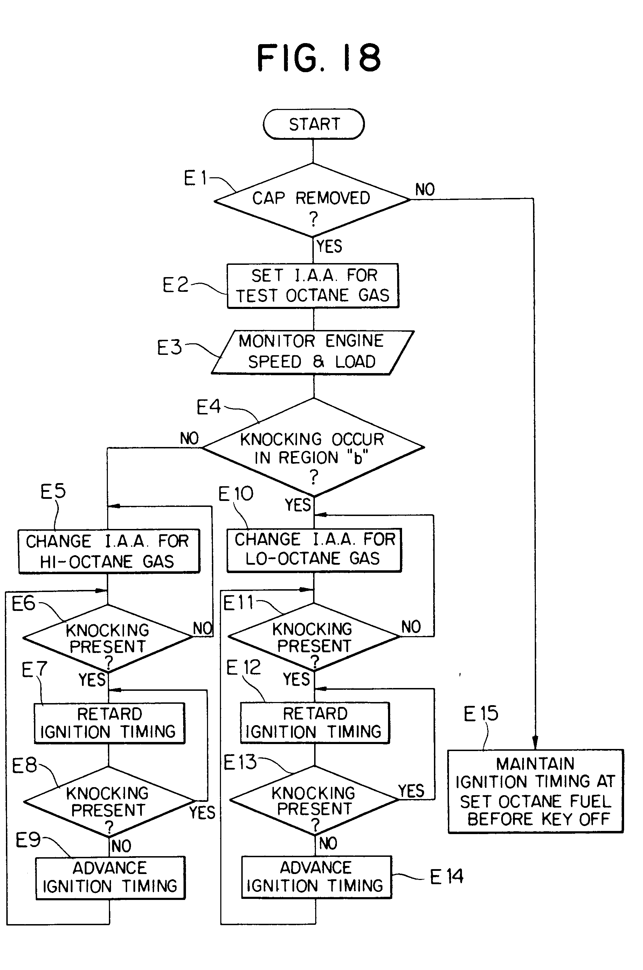

Next, a seventh embodiment of this invention will be described with reference to Figs. 17 and 18.

The arrangement of this seventh embodiment is the same as the third embodiment shown in Fig. 8 except for the particular function of the controller 23.

Namely the controller 23 in this embodiment comprises:
(1) means for setting an operating condition (ignition timing) adapted for the high-octane rating fuel by computing a retard angle adapted for the high-octane rating fuel on the basis of the data map as shown in Fig. 7;
(2) means for setting an operating condition (ignition timing) adapted for the low-octane rating fuel by computing a retard angle adapted for the low-octane rating fuel on the basis of the data map as shown in Fig. 7;
(3) means for setting an operating condition (ignition timing) adapted for a test octane rating fuel by computing a retard angle adapted for the test octane rating fuel having an intermediate octane rating between the high-octane and the low-octane rating gasolines on the basis of the data map as shown in Fig. 7;
(4) means for determining on the basis of the detected results of the engine speed sensor 25 and the load sensor 26 whether or not the load condition lies in a load region "b", as shown in Fig. 17, where knocking arises in the case of the engine being operated with the low-octane rating fuel while no knocking arises in the case of the engine being operated with the high-octane rating fuel and for determining, under the operation of the ignition timing for the test octane rating fuel, that the fuel in use is the low-octane rating fuel if knocking arises in the load region "b" while determining that the fuel in use is the high-octane rating fuel if no knocking arises in the load region "b";
(5) means for the changing over or transferring to the ignition timing for the high-octane rating fuel or that for the low-octane rating fuel according to the fuel determined in the above (4); and,
(6) knock control means for controlling the ignition timing so as to avoid knocking when knocking occurs.

It is to be noted that the operating condition (ignition timing "p" shown in Fig. 9(b)), adapted for the operation when using the low-octane rating fuel, set in the above means (2) may be the same as that of an ignition advance angle "p" set for the high-octane rating fuel in the low and middle engine load regions while the operating condition may be set to have a characteristic "r" which is stepwise retarded by a predetermined angle with respect to the ignition advance angle for the high-octane rating fuel in a high load region "H" shown in Fig. 9(c) where knocking easily arises.

This setting enables MBT (Minimum advance for Best Torque) to be sufficiently provided in the low and middle load regions, thereby improving the output and the fuel consumption and avoiding at an early stage the occurrence of knocks in the high engine load region. The controller 23 then provides an ignition advance signal adapted for the high-octane, low-octane, or test octane rating fuel to each ignition plug through the distributor 21.

The process executed by the controller 23 will be described with reference to the flow chart shown in Fig. 18.

At first, determination or a check is made in step E1 whether or not the fuel cap has been removed during the time that the key was last turned off as described in the third embodiment of this invention in relation to the flow chart of Fig. 10.

Thus, if the fuel cap was not removed, the answer in step E1 will be "NO" so that in step E15 an ignition timing control is made for the fuel of the octane rating set prior to the key switch having been turned off.

On the other hand, however, if the answer in step E1 is "YES", the fuel in use may have been changed so that the following process is performed.

In step E2, the ignition timing is set for an advance angle for a test-octane gasoline (test-octane rating fuel). This step is done by the operating condition setting means for the test-octane rating fuel in the controller 23.

After this step, the engine 20 is operated at the ignition timing set for the test-octane gasoline.

In step E3, the controller 23 receives as inputs the current engine speed from the sensor 25 and the current engine load, and in step E4, determination is made as to whether or not, a region where knocking has occurred is the region "b" as shown in Fig. 17. This determination is made by the region discriminating means (4).

In the region "b" in Fig 17, as described above, knocking occurs in the case of the engine 20 being operated with the low-octane gasoline while no knock occurs in the case of the engine 20 being operated with the high-octane gasoline and, besides, a load region where knocking occurs when using the high-octane gasoline is higher than a load region where knocking occurs when using the low-octane gasoline as shown in Fig. 17. Therefore, when the low-octane regular gasoline is used for the engine 20, some knocking will be necessarily detected during the operating condition of the engine 20 lying in the preset region "b".

On the other hand, when the high-octane premium gasoline is used for the engine 20, no knocking is detected even though the operating condition of the engine 20 reaches the preset region "b".

Therefore, if it is determined in step E4 that a region where knocking has occurred is notthe preset region "b", the answer will be "NO" which indicates that the fuel in use is the high-octane gasoline and then, in step E5, the ignition timing is changed to thatforthe high-octane gasoline. This cause the engine 20 to be operated at the changed ignition advance angle.

Afterwards, for the purpose of knock control on the basis of the high-octane gasoline advance angle, in step E6 it is determined whether or not further knocking has occurred. If the answer is "YES", then the ignition timing is retarded in step E7 and then it is again determined in step E8 whether or not further knocking has occurred, these steps E7 and E8 being repeated until knocking is eliminated. After knocking has been extinguished, the ignition timing is advanced in step E9. Such an ignition timing control is performed by the knock control means (5) of the controller 23. Then, whether or not knocking still exists is determined again in step E6, and if the answer is determined to be "NO", the engine 20 is continuously operated at the ignition advance angle for the high-octane gasoline.

On the other hand, since knocking should occur in the preset region "b" when using the low-octane gasoline, it is determined in step E4 that a region where the knocking has occurred is the preset region "b". Then, in step E10, the ignition timing is changed over to be set at an advanced angle for the regular low-octane rating fuel.

The engine 20 is now operated at the ignition timing for the low-octane rating fuel.

Thereafter, it is determined in step E11 whether or not further knocking has occurred, in order to perform a knock control on the basis of the ignition timing for the low-octane gasoline. If it is determined in step E11 that knocking has occurred, the ignition timing is further retarded in step E12 and whether or not knocking still exists is determined again in step E13, these steps E12 and E13 being repeated. When no knocking occurs, the ignition timing is advanced in step E14. This ignition timing control is made by the knock control means (5) in the controller 23. This knock control means is also included in the above first and second embodiments of this invention.

Then, it is determined again in step E11 whether or not further knocking arises. If the answer in step E11 is "NO", the engine 20 is continuously operated at the ignition timing for the low-octane rating fuel.

Thus in this embodiment, supposing a fuel with an octane rating intermediate between the high-octane gasoline and the low-octane gasoline is used, the engine is operated with an ignition advance angle adapted for the test-octane rating fuel while it can be automatically determined whether the fuel in use is the high-octane gasoline or the low-octane gasoline so that an optimum ignition timing angle can be automatically set on the basis of the determined result, thereby operating the engine at that ignition timing angle. Therefore, it is possible that the engine output and the drivability is enhanced while the fuel consumption is lowered.

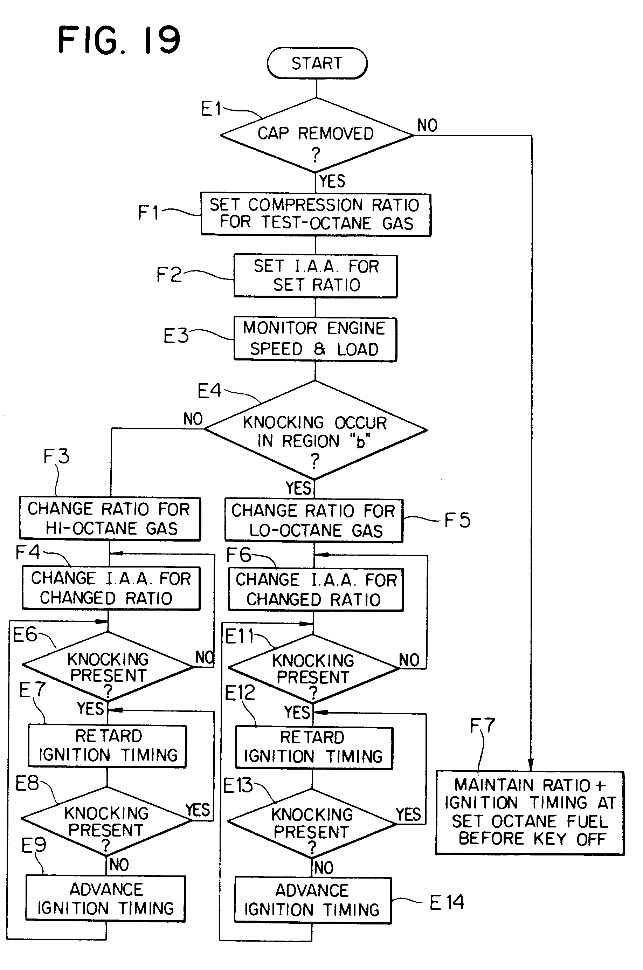

Next, a eighth embodiment of this invention will be described with reference to Fig. 19.

The arrangement of this embodiment is substantially the same as the embodiment shown in Fig. 11 except for the particular function of the controller 23.

Namely, the controller 23 of this embodiment comprises:
(1) means for setting an operating condition (compression ratio and ignition timing) adapted for the high-octane rating fuel;
(2) means for setting an operating condition (compression ratio and ignition timing) adapted for the low-octane rating fuel;
(3) means for setting an operating condition (compression ratio and ignition timing) adapted for a test octane rating fuel having an intermediate octane rating between the high-octane and the low-octane rating gasolines;
(4) means for determining on the basis of the detected results of the engine speed sensor 25 and the load sensor 26 whether or not the load condition lies in a load region "b", as shown in Fig. 17, where knocking arises in the case of the engine being operated with the low-octane rating fuel while no knocking arises in the case of the engine being operated with the high-octane rating fuel and for determining, under the operation of the compression ratio and the ignition timing for the test octane rating fuel, that the fuel in use is the low-octane rating fuel if knocking arises in the load region "b" while determining that the fuel in use is the high-octane rating fuel if no knocking arises in the load region "b";
(5) means for changing over or transferring to the compression ratio and the ignition timing for the high-octane rating fuel or that for the low-octane rating fuel according to the fuel determined in the above (4); and,
(6) knock control means for controlling the ignition timing so as to avoid knocking when knocking occurs.

It is to be noted that the compression ratio among the operating condition adapted for the operation when using the low-octane rating fuel may be set at the same compression ratio as for the high-octane rating gasoline in the low and middle engine load regions while it may be set at a compression ratio small- erthan thatforthe high-octane in the high load engine region H shown in Fig. 9(c) where knocking can easily occur.

Thus, the engine output and the fuel consumption is improved in the low and middle load regions while the occurrence of knocking in the early stage can be avoided in the high load region. The regulated compression ratio signal, adapted for the high-octane gasoline orthe low-octane gasoline, from the controller 23 is supplied to the actuator 33 in Fig. 11 while the ignition timing signal, for either of the gasolines, from the controller 23 is supplied to each ignition plug through the distributor 21.

The process executed by the controller 23 will now be described with reference to Fig. 19.

The process executed by the controller 23 consists of steps E1-E4, E6-E9, E11-14, and F1-F7 as shown in Fig. 19. The basic concept of this flow chart is substantially the same as that shown in Fig. 18 except for steps F1-F7.

Namely, in step F1, the actuator 33 is actuated by a predetermined magnitude to set the compression ratio for the test octane rating fuel while in step F2, the ignition advance angle is set for the test octane rating fuel.

In steps F3 and F4, the compression ratio and the ignition timing are changed over to be set for the high-octane rating fuel, respectively.

In steps F5 and F6, the compression ratio and the ignition timing are changed over to be set for the low-octane rating fuel, respectively.

In step F7, the compression ratio and the ignition timing are kept unchanged as set at the time the key switch was last turned off.

It will be appreciated by any one of ordinary skills in the art that also for an engine in which supercharging pressure and A/F ratio are changeable according to a fuel in use, the flow chart shown in Fig. 19 is similarly applicable with a few modifications. Namely, in steps F1-F7, the legend "compression ratio" may be replaced by the supercharging pressure or the A/F ratio.

It is to be noted that in the seventh and eighth embodiments, the operating condition (ignition timing, compression ratio, supercharging pressure, and A/F ratio) may be initially set for the high-octane rating fuel. In this case, steps E6, E7, F3, and F4 can be omitted, thereby omitting the means for setting the operating condition for the test octane rating fuel.

In the above fifth, sixth, and eighth embodiments, while the ignition timing is changed in addition to the compression ratio, the supercharging pressure, and the A/F ratio, further all of these parameters or any of these parameters may be controlled to be changed.

While there has been described hereinbefore various embodiments of an ignition timing control apparatus for an internal combustion engine in accordance with this invention wherein a change-over control for an ignition timing is performed, there will now be described another type of various embodiments of an ignition timing control apparatus for an internal combustion engine in accordance with this invention wherein a continuous control for an ignition timing is performed.

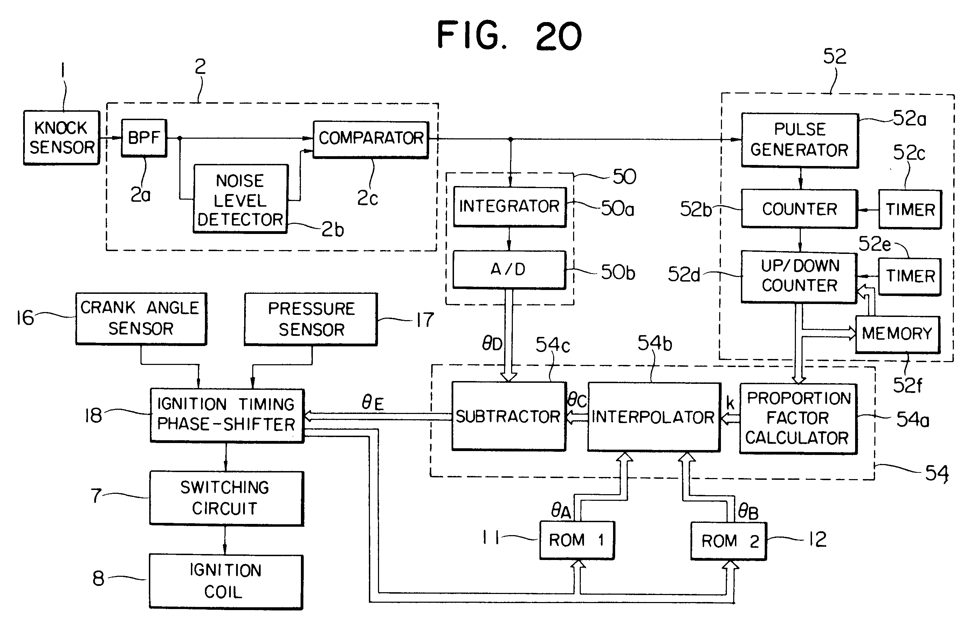

Fig. 20 shows a circuit diagram of a ninth embodiment of such a continuous ignition timing control apparatus for an internal combustion engine in accordance with this invention. In the figure, the knock sensor 1, the knock signal deriving portion 2 including the bandpass filter 2a, the noise level detector 2b and the comparator 2c, the switching circuit 7, the ignition coil 8, the ROMs' 11 and 12, the crank angle sensor 16, the pressure sensor 17, and the ignition timing computing unit 18 are the same as those shown in Fig. 3 so that the corresponding descriptions thereof will not be repeated.

The comparator 2c of the knock signal deriving portion 2 is connected to a retard angle control magnitude determining portion 50 and a reference ignition timing displacement magnitude determining portion 52. The retard angle control magnitude determining portion 50 includes an integrator 50a and an A/D converter 50b which correspond to the retard controlling voltage generator 9 and the A/D converter 14 respectively shown in Fig. 6. This retard angle control magnitude determining portion 50 serves as means for determining an ignition timing correction magnitude to suppress the occurrence of knocks of the engine according to the output of the portion 2, as described hereinafter. The reference ignition timing displacement magnitude determining portion 52 is formed of a pulse generator 52a, a counter 52b, a timer 52c, an up/down counter 52d, a timer 52e, and a memory 52f. The input of the pulse generator 52a is connected to the output of the comparator 2c and the output thereof is connected to the input of the counter 52b. The timer 52c is connected to the reset input of the counter 52b. The up-count input of the up/down counter 52d is connected to the output of the counter 52b and the down-count input thereof is connected to the timer 52e. The data input of the memory 52f is connected to the output of the up/down counter 52d and the data output thereof is connected to the preset input of the up/down counter 52d.

A first ignition timing computing unit 54 is formed of a proportion factor calculator 54a, an interpolator 54b, and a subtractor 54c. The proportion factor calculator 54a is connected to the output of the up/down counter 52d to convert the count of the up/down counter 52d into a proportion factor. The interpolator 54b is connected to the output of the ROM's 11 and 12 as well as the output of the calculator 54a so that an interpolation is performed according to the proportion factor provided from the calculator 54a between the output data of the ROMs' 11 and 12s, thereby providing as an output an ignition timing data determined by the interpolation. The subtractor 54c has two inputs, one of which is connected to the output of the interpolator 54b and the other of which is connected to the output of the A/D converter 50b, and subtracts the output value of the A/D converter 50b from the ignition timing data from the interpolator 54b to provide an ignition timing data output, which is shifted in the retard direction, to the second ignition timing computing unit 18.

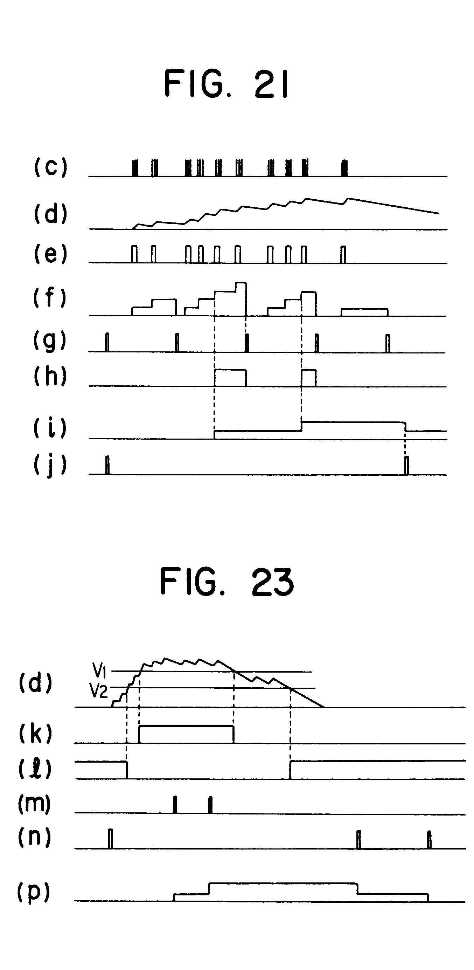

In operation, when the knock signal deriving portion 2 derives knock signals as shown in Fig. 4(c), the comparator 2c provides as an output a pulse train as shown in Fig. 21 (c). As shown in Fig. 21 (d), this pulse train causes the output of the integrator 50a to be increased to retard the angle of the ignition timing, thereby suppressing the occurrence of knocks. On the other hand, when knock ceases, the output voltage of the integrator 50a decreases to return the ignition timing at the last advance angle.

Therefore, the retard angle control magnitude determining portion 50, as shown in Fig. 21 (d) by the output of the integrator 50a, forms a closed loop control system for retarding the angle of the ignition timing on a real time basis in response to the occurrence of knocks. While the rising rate orthe falling rate of the output voltage of the integrator 50a are dependent upon the responsiveness in retard angle or the stability of the closed loop control, it is set at a relatively high responsiveness because of the requirements of immediate controllability.

The displacement magnitude determining portion 52 serves to determine a displacement magnitude from the reference ignition timing according to the occurrence rate of knocks. The pulse generator 52a receives as an input the pulse train output (Fig. 21 (c)) from the comparator 2c and then provides output pulses (Fig. 21(e)). That is to say, the pulse generator 52a provides one output pulse in response to a group of knocks which occur during one ignition. The output pulses of the pulse generator 52a are counted by the counter 52b, the count value being shown in Fig. 21 (f). The timer 52c provides one output pulse (Fig. 21(g)) per a predetermined time interval to the counter 52b whose count is reset to zero by the output pulse of the timer 52c. The output of the counter 52b becomes a logic high level when the countval- ue of the counter 52b exceeds a predetermined value which is "count 3" in this case, as shown in Fig. 21 (h). This means that when a predetermined number of knocks has occurred within a predetermined time interval, i.e. the occurrence rate of knocks has exceeded a predetermined value, the counter 52b provides a high level output signal.

The up/down counter 52d counts up by one when the output of the counter 52b has a logical transition from the low level "0" to the high level "1". The timer 52e provides one output pulse per a predetermined time interval as shown in Fig. 21 (j) to the up/down counter 52d which is counted-down by one by the output of the timer 52e. The count of the up/down counter 52d is shown in Fig. 21(i).

The memory 52f stores the count of the up/down counter 52d at the time of the ignition switch being turned off or at the time of a reduction in the power source voltage, while presetting the stored count as the count of the up/down counter 52d. Namely, even if the engine is stopped, the memory 52f enables a displacement magnitude of the reference ignition timing to be retained.

Thus, the reference ignition timing displacement magnitude determining portion 52 determines the occurrence rate of knocks and then produces a displacement magnitude to retard the reference ignition timing by the output of the up/down counter 52d if the occurrence rate of knocks exceeds a predetermined value while the displacement magnitude is shifted toward the advance angle if the displacement magnitude is not shifted toward the retard angle within a predetermined time interval.

Therefore, the displacement magnitude determining portion 52, similar to the retard angle control magnitude determining portion 50, also forms a closed loop control system for retarding/advancing the ignition timing according to the occurrence of knocks, through the first and second ignition timing computing units 54 and 18. However, both portions are different in that the portion 50 controls the ignition timing in the direction of retard angle on a real time basis in order to suppress the occurrence of knocks by the detection thereof whereas the portion 52 operates the occurrence rate of knocks by the detection thereof and then displaces the reference ignition timing in the direction of retard angle or advance angle thereby to provide a reference ignition timing adapted for the octane rating of a fuel used for the engine. Therefore, the responsiveness in displacement of the determining portion 52 toward the advance angle or the retard angle is set more slowly than that of the determining portion 50.

Now the first ignition timing computing unit 54 will be described.

The proportion factor calculator 54a changes the output count of the up/down counter 52d into a proportion factor. Assuming that the proportion factor calculator 54a receives as an input an output count N of the up/down counter 52d, this count N is divided by a maximum preset count value Nmax from the up/down counter 52d, the result being assumed to be a proportion factor k (= N/Nmax). Therefore, in the case where the premium gasoline is used, the knock limit point is relatively positioned in the direction of advance angle, and accordingly the count N of the up/down counter 52d will be substantially zero so that the proportion factor k becomes equal to zero. On the other hand, in the case where the regular gasoline is used, the knock limit point is relatively positioned in the direction of retard angle, and accordingly the count N of the up/down counter 52d will be substantially Nmax so that the proportion factor k becomes equal to 1. Further in the case where the mixed gasoline of the premium and regular gasolines is used, as shown in Fig. 2 by the characteristic curve C, the knock limit characteristic exists between those in the case where the premium gasoline is used and in the case where the regular gasoline is used so that the count N of the up/down counter 52d assumes a value between zero and Nmax, i.e. 0 < N < Nmax, thereby 0 < k < 1. Therefore, it can be seen that the proportion factor k indicates the mixture ratio of the premium gasoline and the regular gasoline.

Meanwhile, the ROMs' 11 and 12 receive as inputs an address value corresponding to the engine speed and the engine load from the second ignition timing computing unit 18 and then provides as an output the ignition timing data stored in that address to the interpolator 54b. Assuming that the ignition timing characteristic stored in the ROM 11 be set for the premium gasoline and that the ignition timing data in that address be θ_{B}, and that the ignition timing characteristic stored in the ROM 12 be set for the regular gasoline and that the ignition timing data in that address be θ_{A}, the ignition timing characteristic of the ROM 11 is set at the same timing as that of the ROM 12 or toward the advance angle beyond the latter so that 0A - θ_{B}. Hence the interpolator 54b performs the interpolating operation according to the proportion factor k between 0A and θ_{B}. Namely, the operation of θ_{B}- k(θ_{B}-θ_{A}) is performed, the resultant value 0_{c} as assumed, having a value divided proportionally by a ratio of k:(1-k) between θ_{B} and 0A. Therefore, it will be found that when the premium gasoline is used, θ_{c}=θ_{B} because k = 0, when the regular gasoline is used, 0_{c} = 0A because k = 1, and when the mixture of the premium and the regular gasolines is used, 0A < θ_{c} < θ_{B} because 0 < k < 1. Therefore, θ_{c} has a value proportionally divided between 0A and θ_{B} on the basis of a proportion factor k indicating the mixture ratio of the premium and the regular gasolines so that even though a mixture of the premium and the regular gasolines is used, an optimum reference ignition timing can be provided according to the mixture ratio of the premium high-octane gasoline and the regular low-octane gasoline, by means of the above interpolation.

Furthermore, in the first ignition timing computing unit 54, the subtractor 54c subtracts from the output value θ_{c} of the interpolator 54b the output value θ_{D} of the A/D converter 50b in the retard angle control magnitude determining portion 50 to provide as an output therefrom the ignition timing data of 8_{E} (= 0_{c}-θ_{D}) to the second ignition timing computing unit 18. Namely, the subtractor 54c performs a retard angle correction for the reference ignition timing by subtracting the retard angle control magnitude from the optimum reference ignition timing obtained by the interpolator 54b in order to suppress knocks occurring during a transient operation of the engine or at a time of rapid transition of the environmental condition.

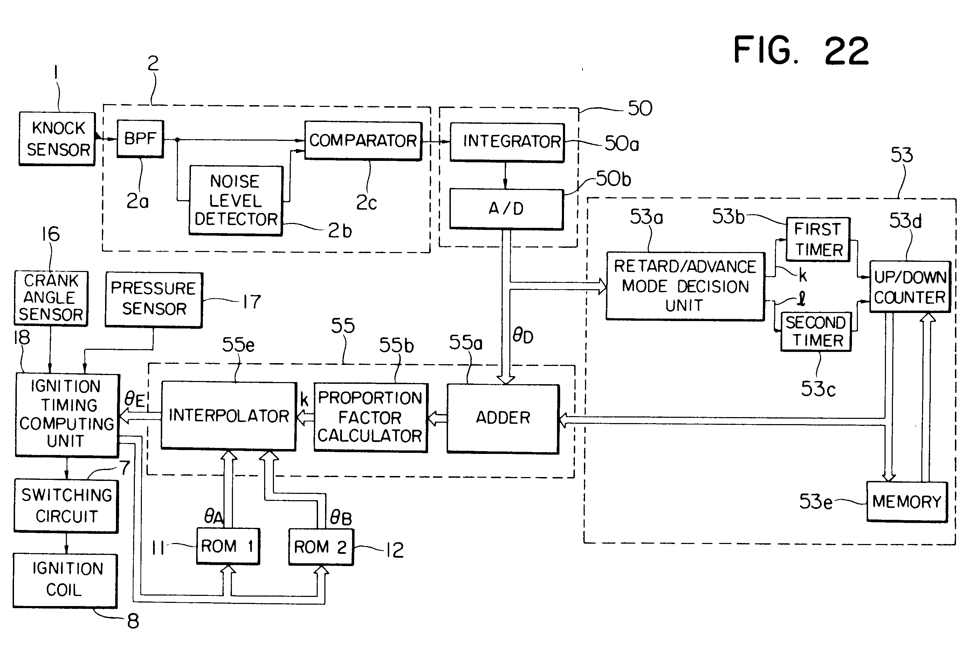

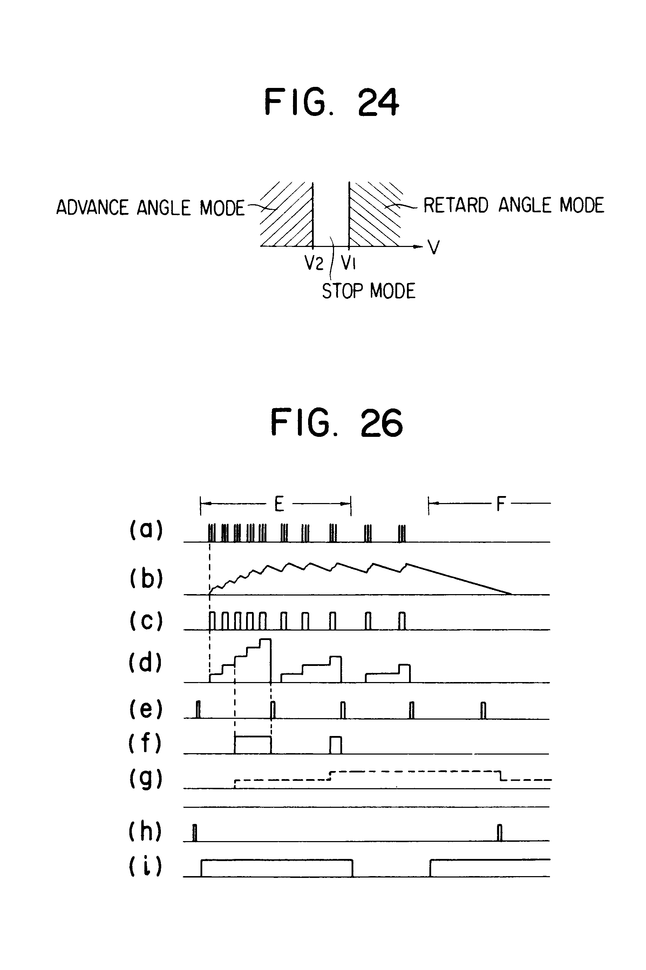

Next, a tenth embodiment of this invention will now be described with reference to the Figs. 22 and 23.

This tenth embodiment shown in Fig. 22 is different from the ninth embodiment only in the arrangement of the reference ignition timing displacement magnitude determining portion, in the arrangement of the first ignition timing computing unit, and in the connection of the retard angle control magnitude determining portion, the reference ignition timing displacement magnitude determining portion, and the first ignition timing computing unit. Therefore, the description of the portions or elements denoted by the same reference numerals in both embodiments will not be repeated.

In Fig. 22, the reference ignition timing displacement magnitude determining portion 53 is formed of a retard/advance mode decision unit 53a, a first timer 53b, a second timer 53c, an up/down counter 53d which may be the same as the up/down counter 52d, and a memory 53e which may be the same as the memory 52f; and the first ignition timing computing unit 55 is formed of an adder 55a, a proportion factor calculator 55b which may be the same as the calculator 54a, and an interpolator 55c which may be the same as the interpolator 54b.

The retard/advance mode decision unit 53a has one input terminal connected to the output terminal of the retard angle control magnitude determining portion 50 to receive the output of the A/D converter 50b and has two output terminals one of which is, as a retard mode output, connected to the first timer 53b and the other of which is, as an advance mode output, connected to the second timer 53c, thereby comparing the output value of the A/D converter 50b with a predetermined value and consequently providing the retard mode output or the advance mode output.

The output terminals of the timers 53b and 53c are respectively connected to the up-count input terminal and the down-count input terminal of the up/down counter 53d. The input terminal of the memory 53e is connected to the output terminal of the up/down counter 53d while the output terminal of the memory 53e is connected to the preset input terminal.

The adder 55a has two input terminals one of which is connected to the output terminal of the reference ignition timing displacement magnitude determining portion 53, namely, the output terminal of the up/down counter 53d and the other of which is connected to the output terminal of the retard angle control magnitude determining portion 50, namely, or the output terminal of the A/D converter 50b. The output terminal of the adder 55a is connected to the input terminal of the proportion factor calculator 55b. The interpolator 55c receives as inputs thereto output data of the ROMs' 11 and 12 as well as the output value of the proportion factor calculator 55b while providing as an output therefrom the calculated result to the second ignition timing computing unit 18.

It will be seen from Figs. 20 and 22 that while in the ninth embodiment the output of the comparator 2c is connected to the inputs of the integrator 50 as well as the pulse generator 52a, in the tenth embodiment the output of the comparator is only connected to the input of the integrator 50a.

Fig. 23 shows various waveforms in the operation of the reference ignition timing displacement determining portion 53 shown in Fig. 22. Fig. 23(d) shows the output voltage of the integrator 50a which is converted into a digital value by the A/D converter 50b. The retard/advance mode decision unit 53a has two reference values to be compared with its input value, one of which is a retard mode decision reference (V1) and the other of which is an advance mode decision reference (V2), whereby the output value of the A/D converter 50b is compared with the retard mode decision reference and the advance mode decision reference.

Fig. 24 shows the output modes of the decision unit 53a. Now, when the output value V of the A/D converter 50b is above the retard mode decision reference V1, the decision unit 53a assumes the retard angle mode, thereby rendering the retard mode output thereof at a high logic level as shown in Fig. 23(k) while when the output value of the A/D converter 50b is below the advance mode decision reference V2, the decision unit 53a assumes the advance angle mode, thereby rendering the advance mode output thereof at the high level as shown in Fig. 23(1). When the output value of the A/D converter 50b is intermediate between the references V1 and V2, the decision unit 53a assumes a stop mode where the retard mode output and the advance mode output are at a low logic level.

While the retard mode output of the decision unit 53a is at the high level, the timer 53b provides as an output therefrom one pulse per a predetermined time interval as shown in Fig. 23(m). While the advance mode output of the decision unit 53a is at the high level, the timer 53c provides as an output therefrom one pulse per a predetermined time interval as shown in Fig. 23(n).

Fig. 23(p) shows the count of the up/down counter 53d which up-counts the output pulses of the timer 53b and down-counts the output pulses of the timer 53c. Therefore, when the output value of the A/D converter 50b is greater than the retard mode decision reference V1, the retard angle mode appears, thereby up-counting the count of the up/down counter 53d, when the output value of the A/D converter 50b is smaller than the advance angle reference V2, the advance angle mode appears, thereby down-counting the count of the up/down counter 53d, and when the output value of the A/D converter 50b is intermediate between the references V1 and V2, the stop mode appears, thereby retaining the current count of the up/down counter 53d.

As to the operation of the first ignition timing computing unit 55, the adder 55a adds the output value of the A/D converter 50b with the output value of the up/down counter 53d. It is repeated that the output value of the A/D converter 50b or the retard angle control magnitude determining portion 50 indicates a retard control angle for suppressing knocks on the real time basis while the output value of the up/down counter 53d or the reference ignition timing displacement magnitude determining portion 53 indicates a regulating value for the reference ignition timing according to the octane rating of the fuel in use. Therefore, the adder 55a provides as an output therefrom the sum of the retard control angle and the regulating value for the reference ignition timing. Then, the proportion factor calculator 55b converts the output value of the adder 55a into a corresponding proportion factor according to which the interpolator 55c interpolates the ignition timing data of the ROMs' 11 and 12 as in the ninth embodiment of this invention.

Thus, in this embodiment, the reference ignition timing displacement magnitude determining portion 53 decides whether the retard mode or the advance mode should be selected, on the basis of the output value of the determining portion 50, and determines a regulating value for the reference ignition timing, whereby an ignition timing calculation is made on the basis of the output values of the determining portion 50 and 53.

It is to be noted that the reference ignition timing displacement magnitude determining portion can be exchanged by the first ignition timing computing unit between the above ninth and tenth embodiments.

As described above, according to the ninth and tenth embodiments of this invention, in the case where a mixture of the high-octane premium gasoline and the low-octane regular gasoline is used for the engine, a knock sensor detects knock signals on the basis of which a displacement magnitude for the reference ignition timing is calculated to automatically regulate the reference ignition timing at an optimum ignition timing, and further during a transient operation of the engine or at a time of rapid transition of the environmental conditions, the ignition timing is controlled in the direction of retard angle on the real time basis, thereby immediately suppressing the occurrence of knocks.

In the above ninth and tenth embodiments which satisfactorily perform their functions by themselves, since the displacement magnitude for the reference ignition timing is determined in response to the detection of knocks, they are not effective when the engine is in a predetermined operating region or in a predetermined operating condition.

More specifically, the ignition timing displacement magnitude is necessarily controlled in response to the occurrence of knocks which are incidentally detected even in an operating region such as a light load where no knocks normally arise while also in the case where the mixture of the regular gasoline and the high octane gasoline is used, the reference ignition timing will be continuously updated in the direction of the advance angle, with the result that the normal displacement magnitude for the reference ignition timing can not be maintained. Also in an unstable operating condition of the engine such as a rapid acceleration, since excessive knocks may occur some times beyond a stable (steady state) operating condition of the engine, the reference ignition timing displacement magnitude in such a stable operating condition can not be similarly maintained in such a case.

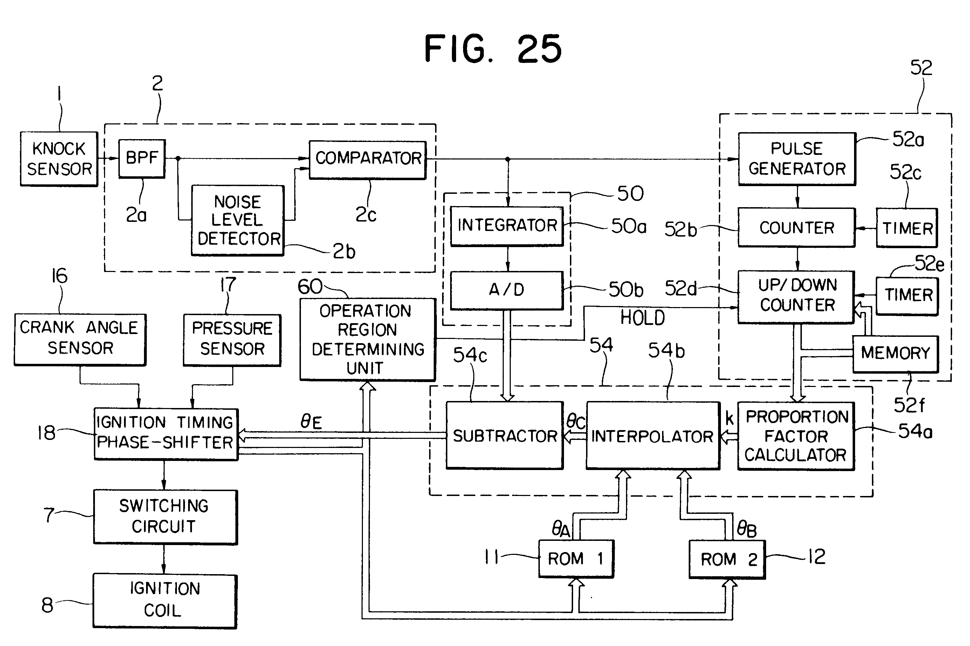

Fig. 25 shows a block diagram of an eleventh embodiment of this invention for eliminating the above defect of the above ninth embodiment. The arrangement of this embodiment is the same as that of the ninth embodiment shown in Fig. 20, except for the provision of an operation, region determining unit 60 in the eleventh embodiment so that the description of the corresponding portions and elements denoted by the same reference numerals will not be repeated.

The input of the operation region determining unit 60 is connected to the output of the second ignition timing computing unit 18 along with the ROMs' 11 and 12, and the output of the operation decision unit 60 is connected to the up/down counter 52d.

As described above, in a light load region where the engine generates no knocks or in a rapid acceleration condition where excessive knocks arise, it is necessary to prevent the displacement magnitude in the reference ignition timing displacement magnitude determining portion 52 from being updated. Accordingly, the operation region determining unit 60 receives as an input an address signal AD, which is determined by the engine speed signal from the crank angle sensor 16 and the engine load signal from the pressure sensor 17, from the second ignition timing computing unit 18 and then compares, in a digital comparator (not shown) included therein, bits indicating the load information of the address signal AD with a digital value corresponding to the engine load to detect the actual engine load. For example, by differentiating the speed information and the load information of the address signal AD as a function of time, and by comparing a value corresponding to the rapid acceleration condition with the differentiated result, the actual rapid acceleration condition is detected. Then, the results of the light load region and the rapid acceleration condition are combined by an OR logic gate and the combined result is provided from the determining unit 60 as an output signal HOLD indicating the determined result of the operating region or condition.

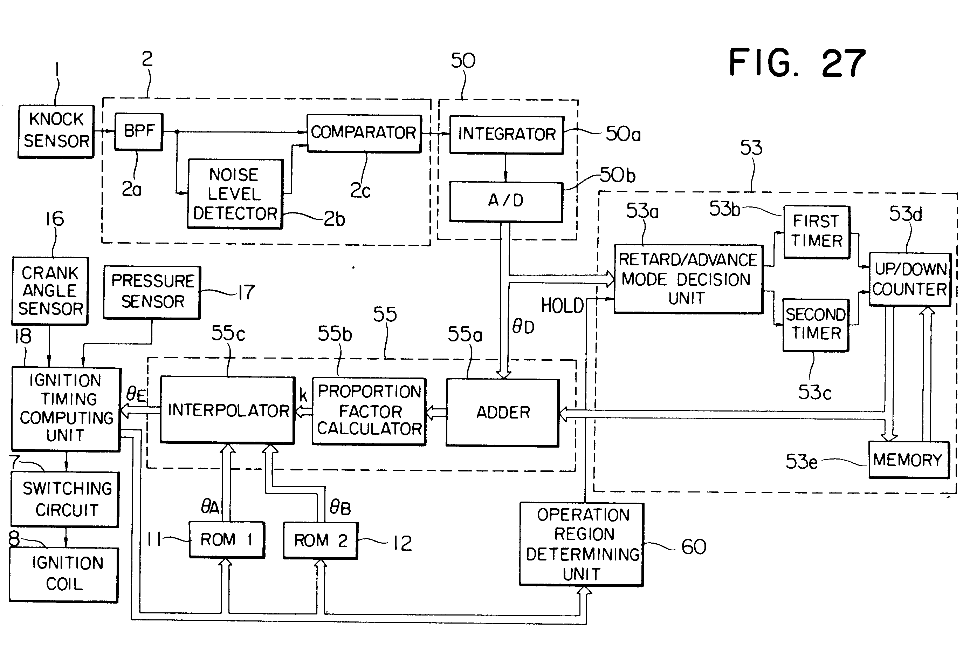

Fig. 26 shows various waveforms at different points of the reference ignition timing displacement determining portion 60 in the light load (deceleration) region or the rapid acceleration condition of the engine. The waveforms shown in Fig. 26(a)-(h) detected at various places of the arrangement of Fig. 25 correspond to those shown in Fig. 21 (c)-O) detected at various places of the arrangement of Fig. 20. Fig. 26(i) shows the waveform of the signal HOLD.

In the rapid acceleration condition represented by a portion E in Fig. 26(a), since a large number of knocks are detected, the output count of the up/down counter 52d is displaced toward the retard angle while in the light load region represented by a portion F in Fig. 26(a), since no knocks are detected, the output count of the up/down counter is displaced toward the advance angle. Therefore, if the decision unit 60 in Fig. 25 were not included, the output count of the up/down counter 52d would assume the dotted lines as shown in Fig. 26(g).

However, since in either case the output signal HOLD of the determining unit 60 has the high level in the rapid acceleration condition or the light load region, the up/down counter 52d holds the count value at that time as shown by a solid line in Fig. 26(g) regardless of whether or not it receives the up-counting input (Fig. 26(f)) from the counter 52b or the down-counting input (Fig. 26(h)) from the timer 52e.

Therefore, in the case of the engine being in the rapid acceleration condition or the light load region, the reference ignition timing displacement magnitude determining portion 53 can hold the output count of the up/down counter 53d at that time.

Fig. 27 shows a twelfth embodimentofthis invention. The arrangement of this embodiment is the same as that of the tenth embodiment shown in Fig. 22 except the provision of an operation region determining unit 60 in the twelfth embodiment so that the description of the corresponding portions and elements denoted by the same reference numerals will not be repeated.

The input of the operation region determining unit 60 is connected to the second ignition timing computing unit 18 along with the ROMs' 11 and 12, and the output thereof is connected to the retard/advance mode decision unit 53a.

As described in the above eleventh embodiment shown in Figs. 25 and 26, since when the engine is in the rapid acceleration condition or the light load region the determining unit 60 holds the output signal HOLD at the high level, the retard/advance mode decision unit 53a causes its two outputs to be fixed at the low level, whereby both timers 53b and 53c provide no counting signal to the up/down counter 53d. As a result, the up/down counter 53d makes no updating operation of count value, thereby holding the count value at that time.

According to the above eleventh and twelfth embodiments of this invention, even though knock signals are detected in the engine operation in a rapid acceleration condition or a light load region, the displacement magnitude at that time of the reference ignition timing can be maintained, thereby realizing an optimum reference ignition timing for the engine without being effected by the mixing ratio of gasolines.

While in the above ninth to twelfth embodiments of this invention, a continuous ignition timing control has been described, these embodiments are also applicable to a continuous supercharging pressure control for an engine in addition to the continuous ignition timing control.

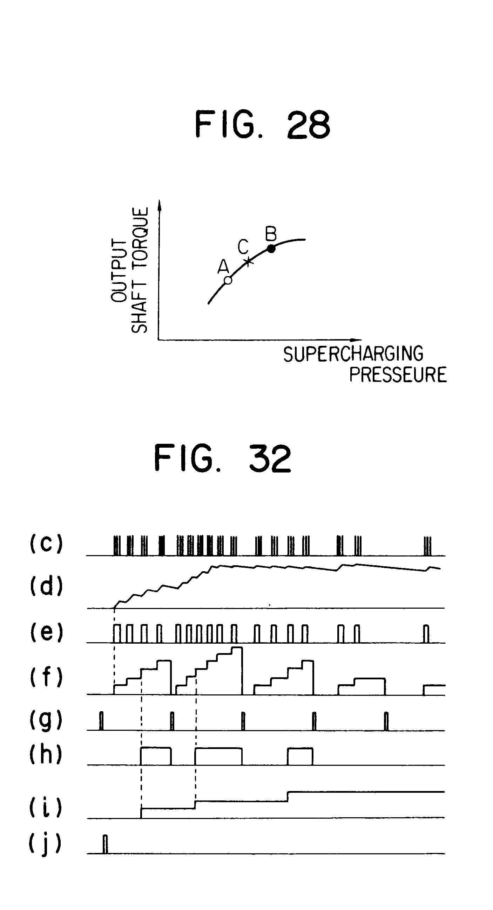

Fig. 28 shows a supercharging pressure vs output shaft torque characteristic of an engine associated with a supercharger. Similar to Fig. 1, point A represents a knock limit when using the regular low-octane gasoline and point B represents a knock limit when using the premium high-octane gasoline. It will be seen from Fig. 28 that the increase of a supercharging pressure when the premium gasoline is used for the engine enables the output shaft torque of the engine to be also increased as in Fig. 1. Therefore, in an engine associated with such a characteristic supercharger, if the ignition timing and the supercharging pressure are advanced and increased respectively according to the mixing ratio of the regular gasoline and the premium gasoline in the case where their mixture is used or either one is used, the output of the engine can be enhanced.

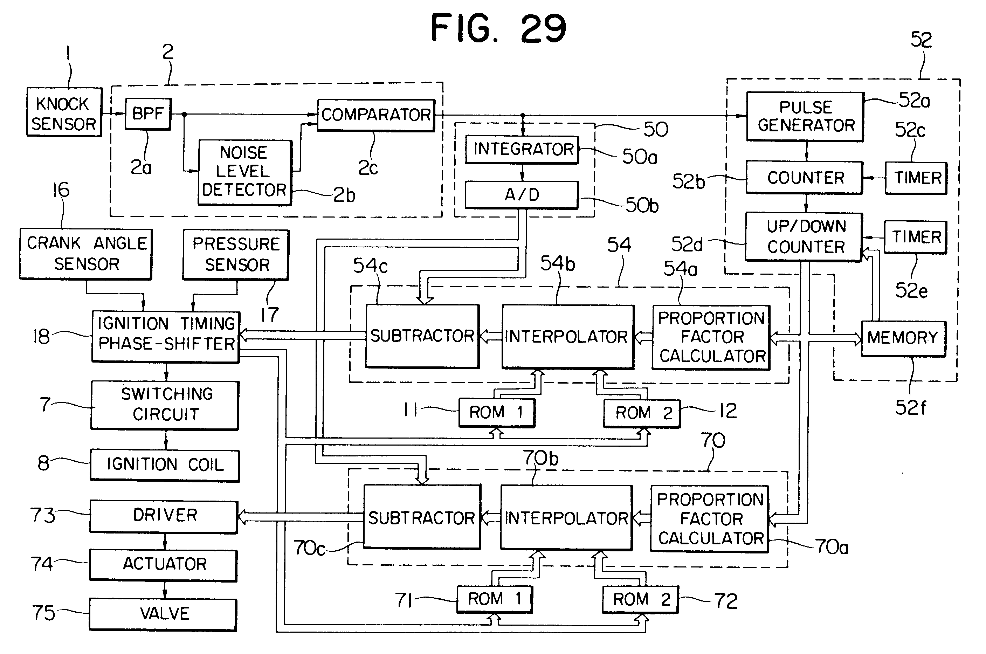

Fig. 29 shows a thirteenth embodiment of this invention wherein in addition to the ignition timing control the supercharging pressure is reduced to suppress the occurrence of knocks. The arrangement of this embodiment is the same as that of the ninth embodiment shown in Fig. 20 except for the provision of a supercharging pressure controller 70, ROMs' 71 and 72, a driver 73, an actuator 74, and a waste gate valve 75 in this thirteenth embodiment so that the description of the corresponding portions and elements denoted by the same reference numerals will not be repeated.

The supercharging pressure controller 70 performs the same operation as the first ignition timing computing unit 54, and comprises a proportion factor calculator 70a, an interpolator 70b, and a subtractor 70c which respectively perform the same function as the proportion factor calculator 54a, the interpolator 54b, and the subtractor 54c of the unit 54. The input of the proportion factor calculator 70a is connected to the output of the up/down counter 52d and the output thereof is connected to the subtractor 70c through the interpolator 70b, which intern has two inputs, one of which is connected to the ROM 71 and the other of which is connected to the ROM 72. The inputs of the ROMs' 71 and 72 are commonly connected to the output of the second ignition timing computing unit 18. The other input of the subtractor 70c is connected to the output of the A/D converter 50b, and the output of the subtractor 70c is connected to the driver 73.

The ROMs' 71 and 72 have stored therein supercharging pressure characteristics adapted for the premium gasoline and the regular gasoline, respectively.

The input signal from the A/D converter 50b to the subtractor 70c serves not only as a retard control angle signal but also as a control voltage signal for reducing the supercharging pressure, by means of a conversion from ignition timing to supercharging pressure, and the input signal from the up/down counter 52d to the proportion factor calculator 70a serves not only as a displacement magnitude for the reference ignition timing but also as a displacement magnitude for reducing the reference supercharging pressure, by means of a conversion from ignition timing to supercharging pressure.

Now assuming that input supercharging pressure data into the interpolator 70b from the ROMs' 71 and 72 be P_{B} and P_{A} respectively, since the supercharging pressure characteristic stored in the ROM 71 is preset to be the same as or to be higher than that stored in the ROM 72, it is given that P_{A} - P_{B}. The interpolator 70b performs the interpolation operation of the equation:
P_{c} ⁼ P_{B} - k(P_{B} - P_{A}),

P_{c} being provided as an output. The subtractor 70c subtracts, from the output value P_{c} of the interpolator 70b, the output supercharging pressure value P_{D}, which is converted from the ignition timing data S_{D} as described above, of the A/D converter 50b of the retard control angle determining portion 50 to provide as an output the resultant supercharging pressure data P_{E} (= P_{c} - P_{D}) to the driver 73 which actuates the actuator 74 which further control the waste gate valve 75 as shown in Fig. 13.

Thus, from the optimum reference supercharging pressure provided by the interpolator 70b, is subtracted a reduction magnitude of supercharging pressure for suppressing knocks occurring during a transient operation of engine or at a time of rapid transition of environmental condition, thereby correcting the reference supercharging pressure.

In this embodiment, the proportion factor calculator 70a may be omitted and instead the output of the proportion factor calculator 54a may be connected to the interpolator 70b.

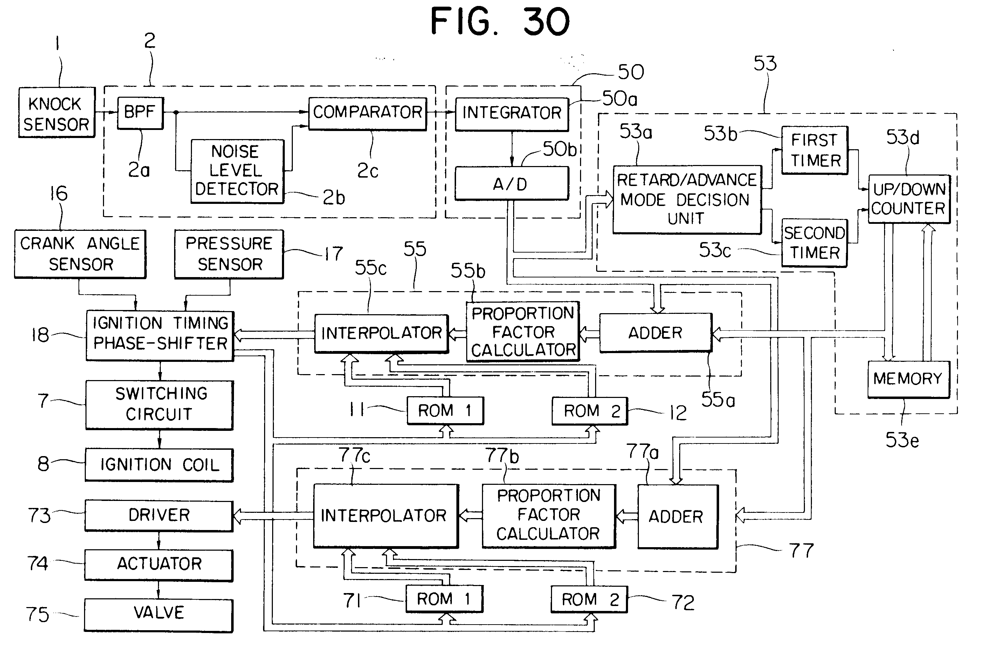

Fig. 30 shows a fourteenth embodiment of this invention wherein in addition to the ignition timing control the supercharging pressure is reduced to suppress the occurrence of knocks. The arrangement of this embodiment is the same as that of the tenth embodiment shown in Fig. 22 except for the provision of a supercharging pressure controller 77, ROMs' 71 and 72, a driver 73, an actuator 74, and a waste gate valve 75 in this fourteenth embodiment which are the same as the corresponding elements denoted by the same reference numerals in the thirteenth embodiment shown in Fig. 29 so that the description of the corresponding portions and elements denoted by the same reference numerals will not be repeated.

The supercharging pressure controller 77 performs the same operation as the first ignition timing computing unit 54 and comprises of an adder 77a, a proportion factor calculator 77b, and an interpolator 77c which respectively perform the same function as the adder 54a, the proportion factor calculator 54b, and the interpolator 54c of the unit 54. The adder 77a has two inputs one of which is connected to the output of the up/down counter 53d along with the adder 54a and the other of which is connected to the output of the A/D converter 50b along with the adder 54a, and has an output which is connected through the proportion factor calculator 77b to the interpolator 77c having two inputs one of which is connected to the ROM 71 and the other of which is connected to the ROM 72. The inputs of the ROMs' 71 and 72 are commonly connected to the output of the second ignition timing computing unit 18. The output of the subtractor 77c is connected to the driver 73.

The input signal from the A/D converter 50b to the adder 77a serves not only as a retard control angle signal but also as a control voltage signal for reducing the supercharging pressure, by means of a conversion from ignition timing to supercharging pressure, in order to suppress knocks on a real time basis while the input signal from the up/down counter 53d to the adder 77a serves not only as a displacement magnitude for the reference ignition timing but also as a displacement magnitude for reducing the reference supercharging pressure according to the octane rating of a fuel in use, by means of a conversion from ignition timing to supercharging pressure.

It is to be noted that the retard/advance mode decision unit 53a also serves as a pressure reduction/in- crease mode decision unit according to the output of the A/D converter 50b.

Therefore, the adder 77a provides as an output the sum of the reducing control pressure and the regulated magnitude for the reference supercharging pressure. The proportion factor calculator 77b then converts the output value of the adder 77a into the corresponding proportion factor according to which the supercharging pressure data from the ROMs' 71 and 72 is interpolated as described above.

Thus, in this embodiment, the reference value (ignition timing and supercharging pressure) displacement magnitude determining portion 53 determines the retard or advance mode and the pressure reduction or pressure increase, and determines a displacement magnitude for the reference ignition timing and the reference supercharging pressure, whereby an ignition timing control as well as a supercharging pressure control are performed on the basis of the summed output of both portions 50 and 53.

If the supercharging pressure control portion has a slow responsiveness to suppress knocks on the real time basis depending upon the kind of actuator or waste gate valve used, the subtractor or the adder may be omitted to perform the control only with respect to the output of the reference value displacement determining portion.

It is also to be noted that while in the above thirteenth and fourteenth embodiments, a supercharging pressure control has been dealt with, other operating parameters for the engine such as a compression ratio, and an air/fuel ratio may be also applicable.

According to the thirteenth and fourteenth embodiments as described above, such a supercharging pressure control in addition to an ignition timing control will enable the output of an engine to be maximized.

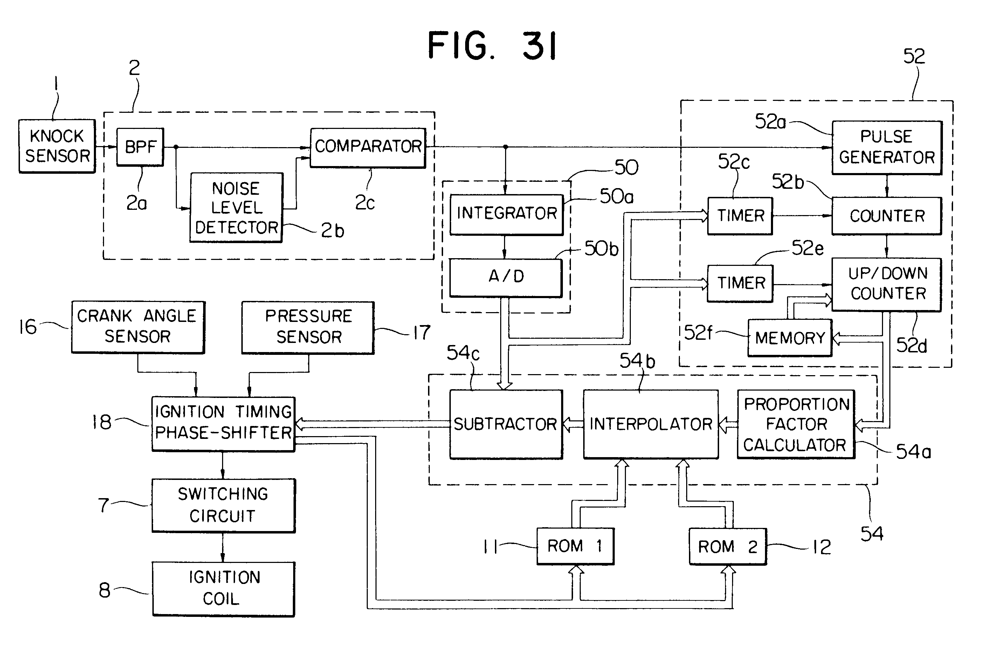

Fig. 31 shows a fifteenth embodiment of this invention which modifies the above ninth embodiment shown in Fig. 20.

Namely, in the above ninth embodiment wherein it may take a considerable time to determine a reference ignition timing displacement magnitude on the basis of the detected magnitude of knocks and to complete the regulation of the reference ignition timing, when the fuel in use is changed overfrom the regular gasoline to the premium gasoline, the ignition timing does not reach point B shown in Fig. 1 until the completion of the above regulation so that the output of an engine can not be increased immediately after the change-over of the gasolines. Conversely, when a fuel in use is changed over from the premium gasoline to the regular gasoline, if the distance of the ignition timings of the knock limit points Aand B shown in Fig. 1 is large, the range of a retard control angle for suppressing the occurrence of knocks is required to be set larger than the distance of the ignition timings A and B, resulting in a troublesome control.

This fifteenth embodiment is to improve the above disadvantage.

The arrangement of this embodiment is the same as that of the ninth embodiment shown in Fig. 20 except for the interconnection of the retard angle control magnitude determining portion 50 and the reference ignition timing displacement magnitude determining portion 52 in this fifteenth embodiment so that the description of the corresponding portions and elements denoted by the same reference numerals will not be repeated.

In this fifteenth embodiment, as seen from Fig. 31, the output of the A/D converter 50b of the retard angle control magnitude determining portion 50 is connected to the inputs of the timers 52c and 52e of the reference ignition timing displacement magnitude determining portion 52.

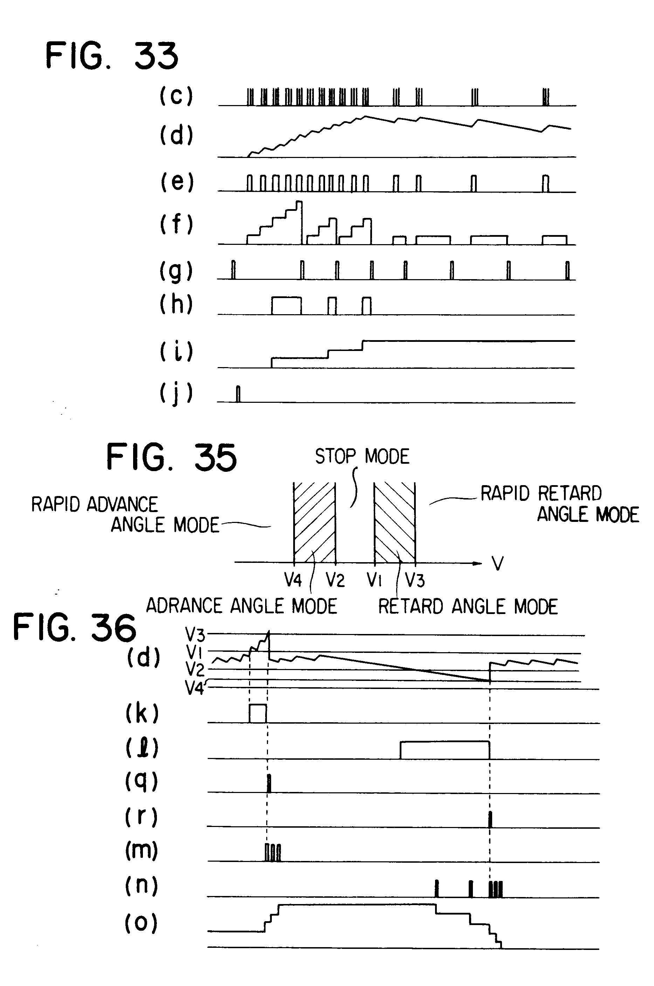

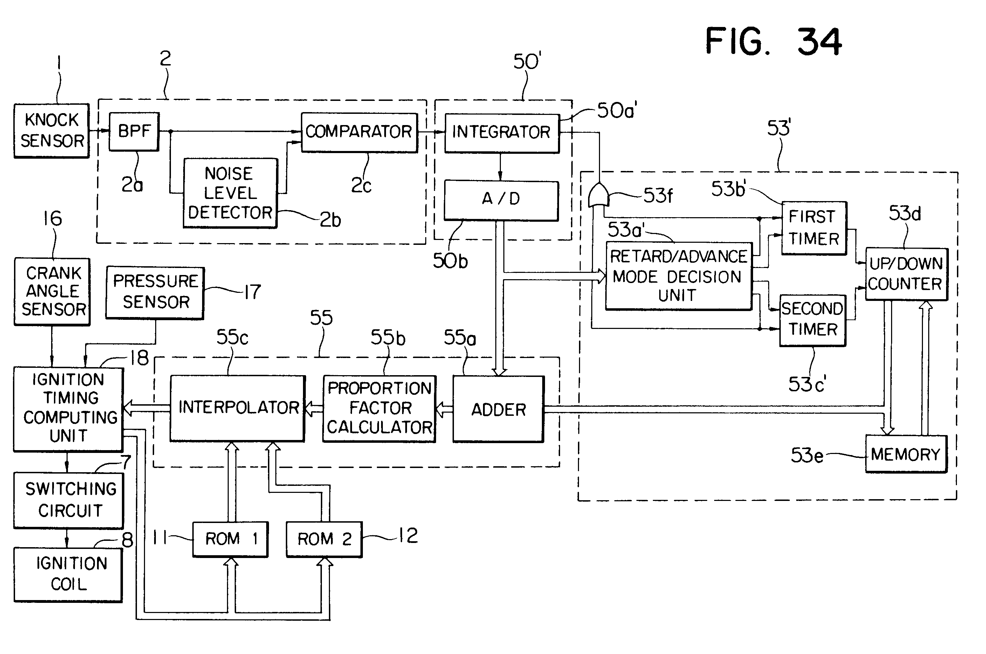

If the time intervals of pulses generated by the timer 52c and 52e are fixed at respective intervals, when a fuel in use is changed over from the premium gasoline to the regular gasoline, the working waveforms shown in Fig. 21 at the portions of the retard angle control magnitude determining portion 50 and the reference ignition timing displacement magnitude determining portion 52 assume working waveforms shown in Fig. 32 in which the same reference numerals designate working waveforms at the same places as in Fig. 20.

Particularly in Fig. 32(c), knock signals frequently occur so that the output voltage of the A/D converter 50b, that is the retard control angle, has a portion saturated at the maximum value as shown in Fig. 32(d).

On the other hand, the responsive rate of the displacement magnitude of the reference ignition timing is slow as indicated by the output count of the up/down counter 50b as shown in Fig. 32(i). Therefore, if the engine is operated with this state in the arrangement of Fig. 20, further intensive knocks continue to occur, creating a dangerous situation, whereby the engine may be damaged or destructed.

Conversely, when a fuel in use is changed over from the regular gasoline to the premium gasoline, the reference ignition timing displaced in the direction of the retard angle is not immediately displaced in the direction of the advance angle so that the ignition timing is situated in the direction of the retard angle for a while, although not shown in the figures. Therefore, the output of the engine can not be immediately increased by the changeover of the fuel to the premium gasoline.

In view of the above, it has been found that the above problem can be solved by the connection of the output of the retard angle control magnitude determining portion 50 (the output of the A/D converter 50b) to each of the timer control inputs of the timers 52c and 52e to vary the responsiveness of the reference ignition timing displacement magnitude determining portion 54 according to the retard control angle.

For this purpose, the timer 52c is adapted to operate such that the time interval of the output pulses decreases as the value of the timer control input increases while the timer 52e is adapted to operate such that the time interval of the output pulses decreases as the value of the timer control input decreases. In other words, as the retard control angle increases, the responsiveness of the reference ignition timing displacement magnitude determining portion 52 becomes fast in the direction of the retard angle while as the retard control angle decreases, the responsiveness thereof becomes fast in the direction of the advance angle.

Such improvement in the responsiveness in the direction of the retard angle is illustrated in Fig. 33 wherein the same reference numerals designate working waveforms at the same places as in Fig. 32.

It can be seen from Fig. 33 that the time interval between of the output pulses of the timer 52c (Fig. 33(g)) decreases as the output voltage of the A/D converter 50b (Fig. 33(d)) increases whereby the responsiveness of the up-counting operation of the up/down counter 52d becomes fast. Additionally, since the responsiveness of the reference ignition timing displacement magnitude determining portion 52 represented by the count output of the up/down counter 52d becomes fast, the retard control angle which is the output voltage of the A/D converter 50b shown in Fig. 33(d) is not saturated.

Fig. 34 shows a sixteenth embodiment of this invention which modifies the tenth embodiment of this invention shown in Fig. 22 to eliminate such a disadvantage in responsiveness as also included in the above tenth embodiment.

The arrangement of this embodiment is the same as that of the tenth embodiment shown in Fig. 22 except for the provision of an integrator 50a' in a retard angle control magnitude determining portion 50', and a retard/advance mode decision unit 53a', timers 53b' and 53c', and an OR gate 53f in a reference ignition timing displacement magnitude determining portion 53' in this sixteenth embodiment so that the description of the corresponding portions and elements denoted by the same reference numerals will not be repeated.

In this embodiment, the integrator 50a' has a reset input terminal to fix the integrated voltage at a predetermined level. The integrated voltage output of the A/D converter 50b is received as an input by the retard/advance mode decision unit 53a' having four outputs, that is an advance mode output, a rapid advance mode output, a retard mode output, and a rapid retard mode output. The timer 53b' has a retard mode input terminal and a timer control input terminal which are connected to the retard mode output terminal and the rapid retard mode output terminal respectively of the unit 53a', and has an output terminal connected to the up-counting input terminal of the up/down counter 53d. The timer 53c' has an advance mode input terminal and a timer control input terminal which are connected to the advance mode output terminal and the rapid advance mode output terminal respectively of the unit 53a', and has an output connected to the down-counting input terminal of the up/down counter 53d.

The rapid retard angle output and the rapid advance angle output of the retard/advance mode decision unit 53a' are commonly connected to the reset input terminal of the integrator 50a' through the OR gate 53f.

The retard/advance mode decision unit 53a' has therein four reference values to be compared with the output value of the A/D converter 50b. The reference values are a retard mode decision reference V1, an advance mode decision reference V2, a rapid retard mode decision reference V3, and a rapid advance mode decision reference V4 which are graphically illustrated in Fig. 35.

It is to be noted that the functions of the decision unit 53a', the timers 53b' and 53c', and the up/down counter 53d in terms of the retard mode decision reference V1 and the advance mode decision reference V2 have been described referring to the tenth embodiment shown in Fig. 22.

Fig. 36 shows waveforms at various places, similar to the tenth embodiment in Fig. 22, of the retard angle control magnitude determining portion 50' and the reference ignition timing displacement magnitude determining portion 53', in the event that the output value V of the A/D converter 50b is above the rapid retard mode decision reference V3 and below the rapid advance mode decision reference V4.

Now, when the output value V of the A/D converter 50b is above the rapid retard mode decision reference V3, the decision unit 53a' assumes the rapid retard angle mode, thereby rendering the rapid retard mode output thereof at a high logic level as shown in Fig. 36(q) while when the output value V of the A/D converter 50b is below the rapid advance mode decision reference V4, the decision unit 53a' assumes the rapid advance angle mode, thereby rendering the rapid advance mode output thereof at the high level as shown in Fig. 36(r).

The timer 53b' generates a predetermined number of pulses of an extremely short time interval at the time when the rapid retard decision output rises from the low level to the high level as shown in Fig. 36(m) while at the same time the output voltage of the integrator 50a' is reset so that the output of the A/D converter 50b may assume a predetermined value between V1 and V2 when the rapid retard decision output is at the high level. The timer 53c' generates a predetermined number of pulses of an extremely short time interval at the time when the rapid advance angle decision output rises from the low level to the high level as shown in Fig. 36(n) while at the same time the output voltage of the integrator 50a' is reset so that the output of the A/D converter 50b may assume a predetermined value between V1 and V2 when the rapid advance angle decision output is at the high level.

Fig. 36(o) shows the output count of the up/down counter 53d which rapidly up-counts by the reception of the output pulses of the timer 53b' (Fig. 36(m)) and which rapidly down-counts by the reception of the output pulses of the timer 53c' (Fig. 36(n)).

Thus, when the output value of the retard angle control magnitude determining portion 50' exceeds the rapid retard mode decision reference V3, the engine operates under a rapid retard mode to make the output value of the reference ignition timing displacement magnitude determining portion 53' rapidly increase. On the other hand, when the output of the determining portion 50' becomes less than the rapid advance mode decision reference V4, the engine operates under a rapid advance angle mode to make the output of the determining portion 53' rapidly decrease.

In this manner, the responsiveness of the reference ignition timing displacement magnitude determining portion 53' can be made temporarily faster. In this connection, since excessive displacement for the reference ignition magnitude due to the rapid responsiveness of the determining portion 53' occurs if the output value of the determining portion 50' remains unchanged, the output value of the retard angle control magnitude determining portion 50' is reset to a proper value together with the rapid response of the reference ignition timing displacement magnitude determining portion.

As in the above fifteenth and sixteenth embodiments, in the case where the fuel used is changed over, the responsiveness in the displacement of the reference ignition timing is made faster, providing a rapid effect for ignition timing in such a change-over of the fuel.

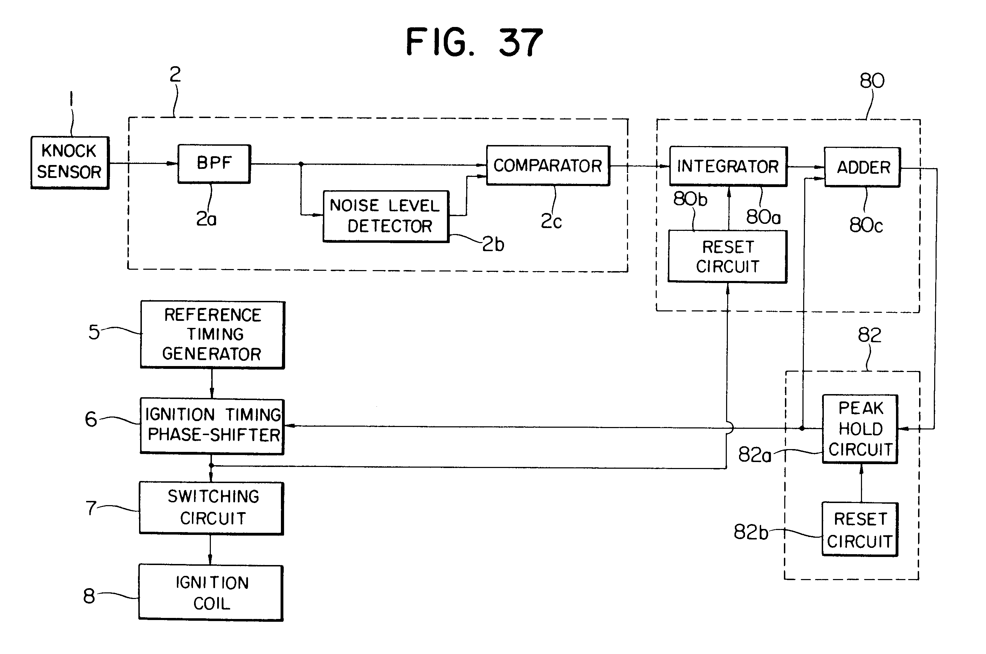

Fig. 37 shows a seventeenth embodiment of this invention wherein a continuous ignition timing control except for a retard angle controlling correction on the real time basis as in the above is also performed in another manner.

This embodiment is characterized by the provision of a reference ignition timing displacement magnitude determining portion 80 and a storage portion 82. The other elements designated by the same reference numerals as in the previous embodiments correspond to identical portions and elements so that the description of those portions and elements will not be repeated.

The reference ignition timing displacement magnitude determining portion 80 is formed of an integrator 80a, a reset circuit 80b, and an adder 80c. The input of the integrator 80a is connected to the output of the comparator 2c, and the output thereof is connected to one input of the adder 80c. The integrator 80a has a reset terminal for resetting the integrated value to zero, the reset terminal being connected to the output of the reset circuit 80b.

The storage portion 82 serves to store the output value of the reference ignition timing displacement magnitude determining portion and is formed of a peak hold circuit 82a and a reset circuit 82b. The input of the peak hold circuit 82a is connected to the output of the adder 80c, and a reset terminal associated with the peak hold circuit 82a is connected to the reset circuit 82b. The output of the peak hold circuit 80a is connected to the other input of the adder 80c so that the output of the integrator 80a and the output of the peak hold circuit 82a are summed by the adder 80c. The output of the peak hold circuit 82a is also connected to the control input of the ignition timing phase-shifter 6 as previously described.

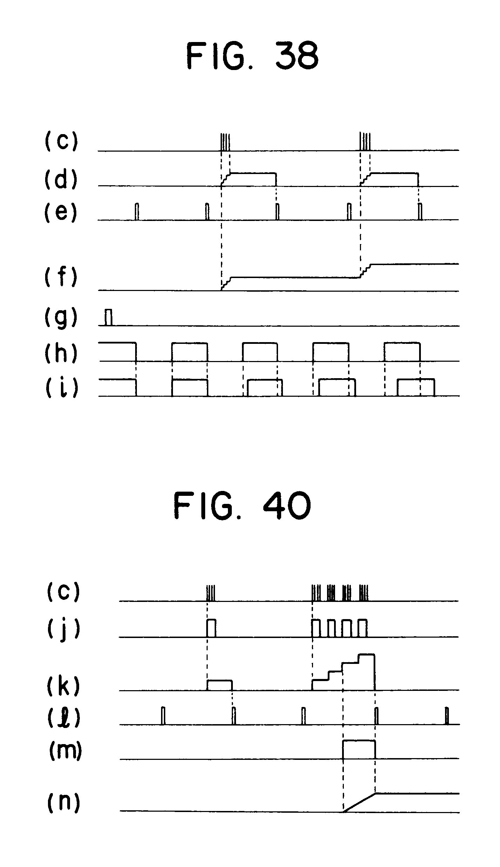

Fig. 38 shows waveforms observed at various places of the reference ignition timing displacement magnitude determining portion 80, the storage portion 82, and the ignition timing phase-shifter 6.

The integrator 80a integrates the output knocking pulse train of the comparator 2c as shown in Fig. 38(c). The reset circuit 80b receives as an input an output signal (ignition signal) of the ignition timing phase-shifter 6, and then provides as an output therefrom pulses as shown in Fig. 38(e) to reset the integrated value of the integrator 80a to zero. Accordingly, the output of the integrator 80a rises upon the occurrence of knocks as shown in Fig. 38(d) while it is reset per each ignition time.

The adder 80c adds the output value (Fig. 38(d)) of the integrator 80a with the output value of the peak hold circuit 82a. At this time, the output value of the peak hold circuit 82a to be added is the last value before the addition which is retained in the adder 80c while the output value of the integrator 80b is not increased. The peak hold circuit 82a holds the peak value of the output of the adder 80c as shown in Fig. 38(f). The reset circuit 82b provides as an output therefrom pulses at the high logic level at the starting time of engine, as shown in Fig. 38(g).

Initially, the peak hold circuit 82a is reset by the reset circuit 82b at the starting time of engine whereby the output of the circuit 82a becomes zero. Then, when knocks arise in the engine and a pulse train shown in Fig. 38 appears at the output of the comparator 2c, the integrator 80a integrates the pulse train as shown in Fig. 38(d). The adder 80c adds the integrated value of the integrator 80a and the output value of the peak hold circuit 82a which retains the output peak value of the adder 80c as shown in Fig. 38(f). This operation will continue until no knocks occur in the engine and therefore cause the output value of the peak hold circuit 82a to be increased.

The output of the peak hold circuit 82a is inputed into the control voltage input of the phase-shifter 6 whereby the output signal of the reference ignition timing signal generator 5 shown in Fig. 38(h) is phase-shifted by the phase-shifter 6 in the direction of retard angle according to the output value of the peak hold circuit 82a, as shown in Fig. 38(i).

Now, when the output of the peak hold circuit 82a is at the zero level, the phase-shifter 6 carries out no phase-shift operation so that the phase-shifter 6 causes the output signal of the signal generator 5 to be directly provided as an output without any change, with the result that the ignition timing characteristic which has been initially set to have the characteristic shown in Fig. 7 remain unchanged.

On the other hand, when knock arises so that the displacement magnitude determining portion 80 calculates the retard phase-shift angle, thereby increasing the output value of the peak hold circuit 82a, the phase-shifter 6 phase-shifts the output signal of the reference ignition timing signal generator 5 according to the output value of the peak hold circuit 82a as shown in Fig. 38(i). Therefore, the actual ignition timing is as shown in Fig. 2 by dotted curve C.

Accordingly, in the case where the premium gasoline is used, since no knock occurs in the ignition timing characteristic shown in Fig. 2 by the curve B, the reference ignition timing is not retarded but remains the same while in the case where the regular gasoline or a mixture of the regular gasoline and the premium gasoline is used, since the ignition timing characteristic shown in Fig. 2 by the curve B resides in a region where knocks may occur, the engine generates knocks. Then, as described above, the knocks are detected through the knocking signal deriving portion 2, the reference ignition timing displacement magnitude determining portion 80, the storage portion 82, and the ignition timing phase-shifter6, thereby phase-shifting the ignition timing in the direction of the retard angle. As a result, even in the case where the regular gasoline or the mixture of the regular and premium gasolines, the ignition timing is fixed at an ignition timing characteristic, causing no occurrence of knocks, as shown in Fig. 2 by the curve A for the use of the regular gasoline or as shown in Fig. 2 by the curve C for the use of the mixture of both gasolines.

It is to be noted that while in the above embodiment the displacement magnitude determining portion 80 and the storage portion 82 have been described as an analog circuit, the integrator 80a may be replaced by a counter, the adder 80c by a digital adder, and the peak hold circuit 82a by a digital memory if the ignition timing phase-shifter 6 is to be formed of a digital circuit.

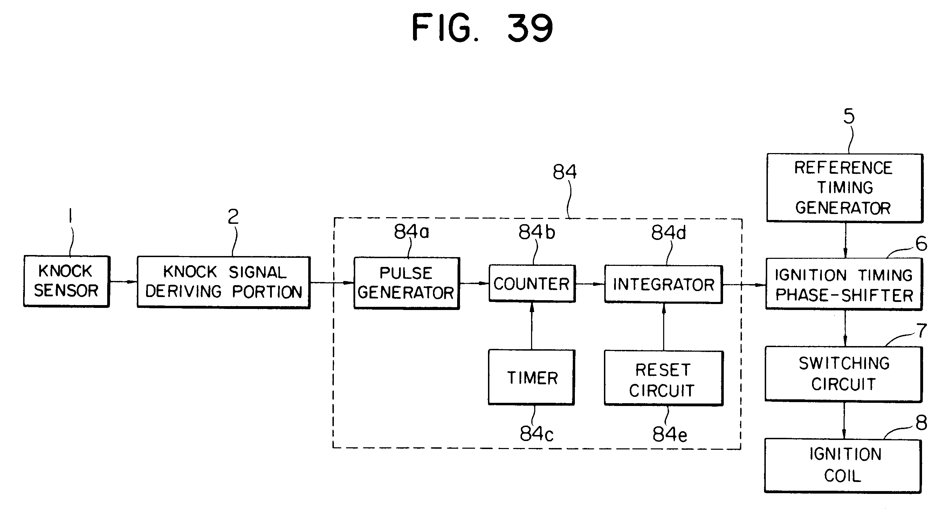

Fig. 39 shows an eighteenth embodiment of this invention which only differs from the seventeenth embodiment in that a reference ignition timing displacement magnitude determining portion 84 of this eighteenth embodiment includes the functions of the reference ignition timing displacement magnitude determining portion 80 and the storage portion 82 of the seventeenth embodiment.

In Fig. 39, the ignition timing displacement magnitude determining portion 84 is formed of a pulse generator 84a, a counter 84b, a timer 84c, an integrator 84d, and a reset circuit 84e. The input of the pulse generator 84a is connected to the output of the comparator 2c, and the output thereof is connected to the counting input of the counter 84b. The timer 84c is connected to the reset input of the counter 84b. The integrator 84d integrates the output of the counter 84b and the integrated output is connected to the ignition timing phase-shifter 6. The other portions and elements have been described in the previous embodiments.

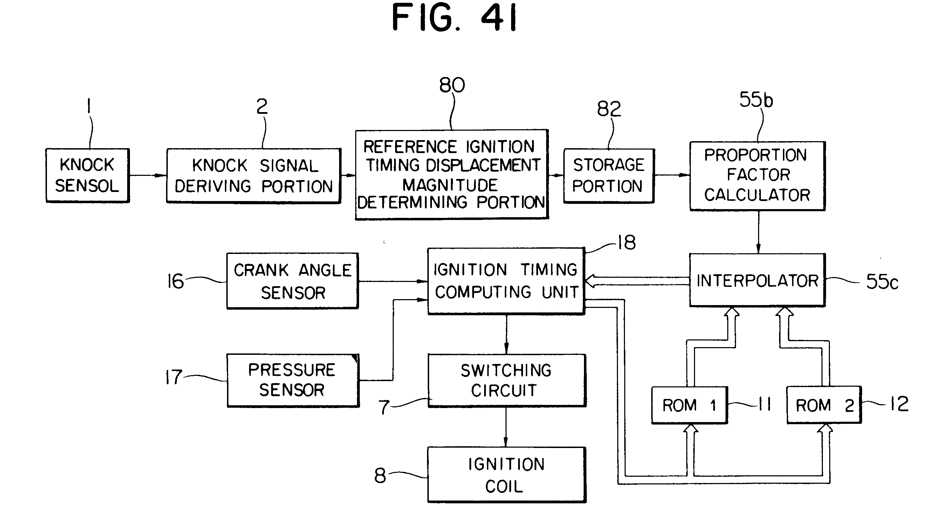

Fig. 40 shows waveforms observed at various places of the ignition timing displacement magnitude determining portion 84.

The pulse generator 80a provides as an output therefrom pulses as shown in Fig. 40(j) upon reception of the knock output (Fig. 40(c)) of the comparator 2c of the portion 2. Namely, the pulse generator 80a generates one pulse per the occurrence of knocks for a single ignition. The output pulses of the pulse generator 80a are counted by the counter 80b whose count is shown in Fig. 40(k). The timer 84c provides as an output therefrom a pulse per a predetermined time interval as shown in Fig. 40(1) to reset the count of the counter 84b to zero. The output of the counter 84b assumes the high level when the count of the counter 84b reaches a predetermined value (three count in Fig. 40(k)), as shown in Fig. 40(m). Namely, when a predetermined number of knock signals are detected within a predetermined time interval, the counter 84b provides as an output therefrom a signal at the high level. In other words, the calculation of the occurrence rate of knocks has been carried out. Then the integrator 84b integrates the output of the counter 84b (Fig. 40(m)) and stores or retains the integrated value as shown in Fig. 40(n). The reset circuit 84e provides as an output therefrom a pulse at the starting time of engine, thereby resetting the integrated value of the integrator 84a to zero. The ignition timing phase-shifter 6 phase-shifts the reference ignition timing signal in the direction of the retard angle according to the output level of the integrator 84d.

Thus, according to this eighteenth embodiment, by the calculation of the occurrence rate of knocks in the engine and the integration of the result, the ignition timing characteristic can be fixed as shown in Fig. 2 by the curve Cwhen the regular gasoline or the mixture of the regular and the premium gasolines is used.

While in the above embodiment, the occurrence rate of knocks is calculated to phase-shift the ignition timing in the direction of the retard angle, the output pulses of the comparator 2c may be directly inputed into the integrator 84d as a brief method.

Furthermore, while in the above seventeenth and eighteenth embodiments, the reset circuit has been used to define the starting time of the engine, the removal of the fuel cap or the variation of the remaining volume of the fuel may be detected to acknowledge whether or not gasoline has been newly added, thereby generating a reset pulse.

It has been described in the above seventeenth and eighteenth embodiments that the reference ignition timing signal is phase-shifted in the direction of retard angle according to the output of the storage portion. On the other hand, it is also possible that the ignition timing is displaced according to the output of the storage portion between two reference ignition timing signals having different ignition timing characteristics.

This possibility has been realized by a nineteenth embodiment of this invention shown in Fig. 41.

From Fig. 41, it can be seen that the arrangement of this embodiment is a combination of the knock sensor 1, the knock signal deriving portion 2, the reference ignition timing displacement magnitude determining portion 80, and the storage portion 82 in the seventeenth embodiment with, for example, the proportion factor calculator 55b, the interpolator 55c, the ROMs' 11 and 12, the ignition timing computing unit 18, the crank angle sensor 16, the pressure sensor 17, the switching circuit 7, and the ignition coil 8 in the tenth embodiment shown in Fig. 22.

Namely, after the occurrence rate of knocks has been calculated by the combination of the knock sensor 1, the knock signal deriving portion 2, and the reference ignition timing displacement magnitude 80 to provide a regulation or displacement magnitude for the reference ignition timing according to the octane rating of a fuel in use, and the calculated value has been then stored by the storage portion 82, the proportion factor calculator 55b converts the stored value of the storage portion 82 into a corresponding proportion factor, the interpolator 55c performs an interpolating operation by using the ignition timing data stored in the ROMs' 11 and 12, and the ignition timing computing unit 18 reads out the ignition timing data outputed from the interpolator 55c to compute an ignition timing for an ignition signal of the switching circuit 7 on the basis of the output signal of the sensor 16 as described many times above.

As described in the above seventeenth to nineteenth embodiments, in the case where the mixture of the regular gasoline and the premium gasoline is used, the occurrence of knocks is detected, on the basis of which a displacement magnitude for the reference ignition timing is calculated, whereby the reference ignition timing characteristic can be automatically controlled at an optimum ignition timing characteristic which causes no occurrence of knocks in the mixture of the regular gasoline and the premium gasoline.

It will be appreciated from all of the above embodiments of this invention that the subject matter of this invention consists of the combination of a modification of advance angle and a real time correction of advance angle. Particularly, this invention can be broadly divided into two types of ignition timing control, one of which is to carry out a change-over control for ignition timing and the other of which is to carry out a continuous control for ignition timing. In either type of control, regardless of whether a regular low-octane gasoline or a premium high-octane gasoline is used for an engine, this invention can perform an optimum ignition timing control to provide a desirable output by the engine.

## Claims

1. An ignition timing control apparatus for an internal combustion engine comprising:
a sensing means (1) for sensing knocksig- nals (c) in said engine;
knock signal deriving means (2). responsive to the output of said sensing means, for deriving said knock signals (c); and
a correction signal generating means (9, 10), responsive to the output of said knock signal deriving means (2) upon the occurrence of knock, for generating a correction signal 0) for correcting the ignition timing; characterised by
a fuel discriminating means (3, 23) responsive to the output (c) of said knock signal deriving means, for discriminating between a high-octane rating fuel and a low-octane rating fuel for determining the type of fuel used in said engine; and
a setting means (4, 6) responsive to the output (g) of said fuel discriminating means, for setting reference ignition timing characteristic for either said high-octane rating fuel or said low-octane rating fuel; wherein
the correction signal generated by said correction signal generating means is arranged for correcting said reference ignition timing characteristic set by said setting means (4, 6).

2. An ignition timing control apparatus for an internal combustion engine according to claim 1 wherein said setting means (4, 6) includes means (6) for phase-shifting said reference ignition timing characteristic of one of said fuels from that of the other of said fuels by a preset fixed value.

3. An ignition timing control apparatus for an internal combustion engine according to claim 1 wherein said setting means (4, 6) includes means for separately presetting said reference ignition timing characteristics for both of said fuels.

4. An ignition timing control apparatus for an internal combustion engine according to claim 1 wherein said correction signal generating means includes means for resetting said correction signal generating means at the time when said reference ignition timing characteristic is changed over to the setting for said low-octane rating fuel from said high-octane rating fuel.

5. An ignition timing control apparatus for an internal combustion engine according to claim 1 wherein said sensing means (1) comprises a vibration acceleration sensing means.

6. An ignition timing control apparatus for an internal combustion engine according to claim 5 wherein said knock signal deriving means comprises a bandpass filter (2a) connected to said sensing means (1) to pass therethrough only a frequency component inherent in the knocks, a noise level detector (2b) for converting the output of said bandpass filter (2a) into a DC voltage with a predetermined amplification, said DC voltage being higher than the noise component while lower than the knock component of the filtered output, and a comparator (2c) for comparing the outputs of said filter and said noise level detector to derive said knock signals (c).

7. An ignition timing control apparatus for an internal cobustion engine according to claim 6 wherein m n said fuel discriminating means (3) comprises a pulse generator (3a) connected to said comparator (2c) which generates one pulse per the occurrence of said knock during one ignition, and a counter (3b) connected to said pulse generator (3a) to count the output pulses of said pulse generator and to provide a logic signal (g) indicating the presence of a predetermined knock occurrence rate per a predetermined time interval defined by a timer (3c).

8. An ignition timing control apparatus for an internal combustion engine according to claim 7 wherein said setting means (4) comprises a flip-flop (4a) set by said logic signal (g) from said counter (3b), a reference ignition timing signal generator (5) the ignition timing characteristic of which is set for said high-octane rating fuel, a ignition timing phase-shifter (6) for shifting the timing of said reference ignition timing signal generator (5) in dependence on the output of said flip-flop (4a) to control the ignition timing of an ignition coil (8).

9. An ignition timing control apparatus for an internal combustion engine according to claim 8 wherein said correction signal generating means comprises a retard controlling voltage generator (9) for integrating the output (c) of said comparator (2c) if present, and an adder (10a) for adding the output of said retard controlling voltage generator (9) with the output (i) of said flip-flop (4a), the added result (R) being inputted to said phase-shifter (6).

10. An ignition timing control apparatus for an internal combustion engine according to claim 7 wherein said reference ignition timing setting means (4, 6) comprises a flip-flop (4a) set by said logic signal from said counter, a data selector(13) responsive to the output of said flip-flop (4a) to select one offirstand second ignition timing characteristics for said high-octane and low-octane rating fuels respectively, first and second storages (11, 12) for respectively storing said first and second characteristics, an engine speed detecting means (16), a load condition detecting means (17), and an ignition timing computing unit (18) for converting ignition timing data, determined by an engine speed detected by said engine speed detecting means (16) and determined by a load condition detecting by said load condition detecting means (17), into corresponding address data and for sending the address data to said first and second storages (11, 12), said computing unit (18) reading out the selected output of said data selector to control the ignition timing of an ignition coil (8).

11. An ignition timing control apparatus for an internal combustion engine according to claim 10 wherein said correction signal generating means (9, 10) comprises a retard controlling voltage generator (9) for integrating the output (c) of said comparator (2c) if present, an analog-digital converter (14) for converting the integrated value of said voltage generator (9) into a digital value, and a subtractor (15) for subtracting said digital value from the output of said data selector (13), the result being inputted to said computing unit (18).

12. An ignition timing control apparatus for an internal combustion engine according to claim 1 wherein said fuel discriminating means (2, 3) includes means for providing an operating region of said engine (20) to be discriminated and for discriminating said fuel in dependence on the presence or absence of a knock in said operating region.

13. An ignition timing control apparatus for an internal combustion engine according to claim 12 wherein said fuel discriminating means (23) comprises means (26) for detecting the load condition of said engine (20), and means for determining on the basis of the detected result of said detecting means (26) whether or not said load condition lies in a load region (a) where knocking arises in the case of said engine being operated with said high-octane rating fuel and for determining that the fuel in use is said low-octane rating fuel if knocking arises outside said load region (a).

14. An ignition timing control apparatus for an internal combustion engine according to claim 12 wherein said fuel discriminating means (23) comprises means (26) for detecting the load condition of said engine (20) and means for determining on the basis of the output of said detecting means (26) whether or not said load condition lies in a load region (b) where knocking arises in the case of said engine being operated with said low-octane rating fuel while no knocking arises in the case of said engine being operated with said high-octane rating fuel and for determining that the fuel in use is said low-octane rating fuel if knocking arises in said load region (b) while determining that the fuel in use is said high-octane rating fuel if no knocking arises in said load region (b).

15. An ignition timing control apparatus for an internal combustion engine according to claim 12 wherein said fuel discriminating means (23) further comprises first means for setting an operating condition adapted for said high-octane rating fuel, second means for setting an operating condition adapted for said low-octane rating fuel, means (26) for detecting the load condition of said engine, means for determining on the basis of the detected result of said detecting means (26) whether or not said load condition lies in a load region where knocking arises in the case of said engine being operated with said high-octane rating fuel and for determining that the fuel in use is said low-octane rating fuel if knocking arises outside said load region under an operating condition instructed by said first means, and means for transferring from an operation instructed by said first means to an operation instructed by said second means if it is determined by said determining means that the fuel in use is said low-octane rating fuel.

16. An ignition timing control apparatus for an internal combustion engine according to claim 12 wherein said fuel discriminating means (23) further comprises first means for setting an operating condition adapted for said high-octane rating fuel, second means for setting an operating condition adapted for said low-octane rating fuel, means (26) for detecting the load condition of said engine, means for determining on the basis of the output of said detecting means (26) whether or not said load condition lies in a load region where knocking arises in the case of said engine being operated with said low-octane rating fuel while no knocking arises in the case of said engine being operated with said high-octane rating fuel and for determining that the fuel in use is said low-octane rating fuel if knocking arises in said load region while determining that the fuel in use is said high-octane rating fuel if no knocking arises in said load region, and means for transferring between operations instructed by said first means and said second means in response to the fuel in use determined by said determining means.

17. An ignition timing control apparatus for an internal combustion engine according to claim 15 or 16 wherein said operation condition instructed by said first means is a compression ratio.

18. An ignition timing control apparatus for an internal combustion engine according to claim 15 or 16 wherein said operation condition instructed by said first means is a supercharging pressure.

19. An ignition timing control apparatus for an internal combustion engine according to claim 15 or 16 wherein said operationcondition instructed by said first means is an air-fuel ratio.

20. An ignition timing control apparatus for an internal combustion engine comprising:
a sensing means (1) for sensing knock signals of said engine;
a knock signal deriving means (2), responsive to the output of said sensing means (1), for deriving said knock signals;
a correction magnitude determining means (50) for determining an ignition timing correction magnitude (0_{d}) in dependence on said knock signals; and
an ignition timing determining means (18, 54, 55) for generating reference ignition timing signals (8₃, 0_{b}) and for adjusting them in dependence on the ignition timing correction magnitude to produce ignition timing signals for suppressing the occurrence of knock;
characterised in that:
displacement magnitude determining means (52, 53) is provided for determining from the output of said knock signal deriving means (2) or the output of said correction magnitude determining means (50) a displacement magnitude for said reference ignition timing corresponding to the octane rating of a fuel used in said engine; and
the ignition timing determining means (18, 54, 55) is operative for adjusting the reference ignition timing signals in response to said displacement magnitude and the output of said correction magnitude determining means, whereby the ignition timing signals produced are additionally adjusted to take into account the octane rating of the fuel used in the engine.

21. An ignition timing control apparatus for an internal combustion engine according to claim 20 wherein said ignition timing determining means (54, 55) includes an interpolating operation means (54b) for performing an interpolating operation between two reference ignition timing characteristics according to a proportional factor corresponding to the octane rating of said fuel.

22. An ignition timing control apparatus for an internal combustion engine according to claim 21 wherein said knock sensing means (1) comprises a vibration acceleration sensing means.

23. An ignition timing control apparatus for an internal combustion engine according to claim 22 wherein said knock signal deriving means (2) comprises a bandpass filter (2a) connected to said sensing means (1) for passing therethrough only a frequency component inherent in the knocks, a noise level detector (2b) for converting the output of said bandpass filter (2a) into a DC voltage with a predetermined amplification, said DC voltage being higher than the noise component while lower than the knock component of the filtered output, and a comparator (2c) for comparing the outputs of said filter (2a) and said detector (2b) to derive said knock signals.

24. An ignition timing control apparatus for an internal combustion engine according to claim 23 wherein said correction magnitude determining means (50) comprises an integrator (50a) for integrating the output of said comparator (2c), and an analog-digital converter (50b) connected to said integrator (50a).

25. An ignition timing control apparatus for an internal combustion engine according to claim 23 wherein said displacement magnitude determining means (52) comprises a pulse generator (52a) connected to said comparator (2c) to generate one pulse per the occurrence of said knock for one ignition, a counter (52b) connected to said pulse generator (52a) to count the output pulses of said generator and to provide a logic signal indicating the presence of a predetermined knock occurrence rate per a predetermined time interval, an up/down counter (52d) counted-up by said counter (52b), a first timer (52c) for defining said predetermined time interval, a second timer (52e) for defining another predetermined time interval, longer than said predetermined time interval, counting-down said up/down counter.

26. An ignition timing control apparatus for an internal combustion engine according to claim 24 wherein said displacement magnitude determining means (53) includes an advance/retard decision unit (53a) for comparing the output of said A/D converter (50b) with a predetermined value to provide as an output an advance control signal or a retard control signal (k, 1) according to the compared result, first and second timers (53b, 53c) connected to said decision unit (53a) to receive said advance and retard control signals respectively, and an up/down counter (53d) counted up and down respectively by said first and second timers (53b, 53c).

27. An ignition timing control apparatus for an internal combustion engine according to claim 21 wherein said ignition timing determining means (55) comprises first and second storages (11, 12) for respectively storing first and second ignition timing characteristics for a high-octane and a low-octane rating fuels respectively, a engine speed detecting means (16), a load condition detecting means (17), and an ignition timing computing unit (18) for converting ignition timing data, determined by the engine speed detected by said engine speed detecting means and determined by a load condition detected by said load condition detecting means, into corresponding address data and for sending the address data to said first and second storages (11 12).

28. An ignition timing control apparatus for an internal combustion engine according to claim 27 wherein said interpolating operation means (54b) includes means (54a) for providing a proportional factor corresponding to the octane rating of said fuel based on the knock occurrence rate indicated by said displacement magnitude determining means (52, 53), an interpolator (54b) for performing an interpolating operation according to said proportional factor (k) between the first and the second ignition timing characteristics respectively stored in said first and second storages (11, 12), and a subtractor(54c) for subtracting the digital output (9d) of said correction magnitude determining means (50) from the output (9c) of said interpolator (54b).

29. An ignition timing control apparatus for an internal combustion engine according to claim 27 wherein said interpolating operation means (55) includes an adder (55a) for adding the output (8₀) of said correction magnitude determining means (50) and the output of said displacement magnitude determining means (53), means (55b) for providing a proportional factor (k) corresponding to the octane rating of said fuel based on the output of said adder (55a), an interpolator (55e) for performing an interpolating operation according to said proportional factor between the first and the second ignition timing characteristics respectively stored in said first and second storages (11, 12).

30. An ignition timing control apparatus for an internal combustion engine according to claim 20, further comprising means (52f, 53e) for retaining said displacement magnitude when said engine is outside of a predetermined operating region or a predetermined operating condition.

31. An ignition timing control apparatus for an internal combustion engine according to claim 30 wherein said displacement magnitude determining means (52, 53) is determined only in an operating region where knock occurs.

32. An ignition timing control apparatus for an internal combustion engine according to claim 20, further comprising operating parameter control means (70, 77) for controlling a supercharging pressure in addition to the ignition timing of said engine in response to the output of said correction magnitude determining means (50) and/or the output of said displacement magnitude determining means (52, 53).

33. An ignition timing control apparatus for an internal combustion engine according to claim 20, further comprising operating parameter control means (70, 77) for controlling a compression ratio in addition to the ignition timing of said engine in response to the output of said correction magnitude determining means (50) and/or the output of said displacement magnitude determining means (52, 53).

34. An ignition timing control apparatus for an internal combustion engine according to claim 20, further comprising operating parameter control means (70, 77) for controlling an air-fuel ratio in addition to the ignition timing of said engine in response to the output of said correction magnitude determining means (50) and/or the output of said displacement magnitude determining means (52, 53).

35. An ignition timing control apparatus for an internal combustion engine according to claim 20, further comprising means (52c, 52e, 53b', 53c') for varying the responsiveness of said displacement magnitude determining means (52, 53) in response to the output value of said correction magnitude determining means (50, 50').

36. An ignition timing control apparatus for an internal combustion engine according to claim 35 wherein said displacement magnitude determining means (52', 53') includes means (52c, 52e, 53b', 53c') connected to the output of said correction magnitude determining means (50) for rapidly varying the displacement magnitude determined by said displacement magnitude determining means (52', 53') in the retard direction or advance direction when said correction magnitude is above or below a predetermined value while resetting said correction magnitude in the advance or retard direction.

37. An ignition timing control apparatus for an internal combustion engine according to claim 20 wherein said displacement magnitude determining means (52, 53, 53) includes means (52f, 53e) for storing said displacement magnitude during the stopped state of said engine.

38. An ignition timing control apparatus for an internal combustion engine according to claim 20, wherein said ignition timing determining means (18, 54, 55) includes an ignition timing operating means (18) for phase-shifting the adjusted reference ignition timing signal to produce the ignition timing signals.

39. An ignition timing control apparatus for an internal combustion engine according to claim 20 wherein said displacement magnitude determining means (52, 53, 53') includes a reset circuit for initializing the reference ignition timing displacement magnitude at the time of fuel supply or start into a predetermined value.

## Patentansprüche

1. Zündzeitpunktregelungsvorrichtung für einen Verbrennungsmotor, umfassend
- eine Abtasteinrichtung (1) zur Abtastung von Klopfsignalen (c) in dem Motor;
- eine Klopfsignal-Ableiteinrichtung (2), die auf das Ausgangssignal der Abtasteinrichtung anspricht, um die Klopfsignale (c) abzuleiten; und
- einen Korrektursignalgenerator (9, 10), der auf das Ausgangssignal der Klopfsignal- Ableiteinrichtung (2) beim Auftreten von Klopfen anspricht, um ein Korrektursignal (j) zum Korrigieren des Zündzeitpunktes zu erzeugen,
gekennzeichnet durch
- einen Kraftstoff-Diskriminator (3, 23), der auf das Ausgangssignal (c) der Klopfsignal- Ableiteinrichtung anspricht, um zwischen Kraftstoff mit hoher Oktanzahl und Kraftstoff mit niedriger Oktanzahl zu unterscheiden, um die Art von Kraftstoff zu bestimmen, die in dem Motor verwendet wird; und
- eine Setzeinrichtung (4, 6), die auf das Ausgangssignal (g) vom Kraftstoff-Diskriminator anspricht, um die Referenzzündzeitpunktcharakteristik entweder für Kraftstoff hoher Oktanzahl oder für Kraftstoff niedriger Oktanzahl vorzugeben;
wobei das vom Korrektursignalgenerator erzeugte Korrektursignal ausgelegt ist, um die Referenzzündzeitpunktcharakteristi k zu korrigieren, die von der Setzeinrichtung (4, 6) vorgegeben ist.

2. Zündzeitpunktregelungsvorrichtung für einen Verbrennungsmotor nach Anspruch 1, wobei die Setzeinrichtung (4, 6) eine Einrichtung (6) aufweist, um eine Phasenverschiebung der Referenzzündzeitpunktcharakteristik von einem der Kraftstoffe gegenüber dem anderen der Kraftstoffe um einen vorgegebenen festen Wert vorzunehmen.

3. Zündzeitpunktregelungsvorrichtung für einen Verbrennungsmotor nach Anspruch 1, wobei die Setzeinrichtung (4, 6) eine Einrichtung aufweist, um die Referenzzündzeitpunktcharakteristiken für beide Kraftstoffe separat vorzugeben.

4. Zündzeitpunktregelungsvorrichtung für einen Verbrennungsmotor nach Anspruch 1, wobei der Korrektursignalgenerator eine Einrichtung zum Rücksetzen des Korrektursignalgenerators zu dem Zeitpunkt aufweist, wenn die Referenzzündzeitpunktcharakteristik vom Kraftstoff hoher Oktanzahl zur Vorgabe derjenigen von Kraftstoff niedriger Oktanzahl umgeschaltet wird.

5. Zündzeitpunktregelungsvorrichtung für einen Verbrennungsmotor nach Anspruch 1, wobei die Abtasteinrichtung (1) eine Schwingungsbeschleunigungsabtasteinrichtung aufweist.

6. Zündzeitpunktregelungsvorrichtung für einen Verbrennungsmotor nach Anspruch 5, wobei die Klopfsignal-Ableiteinrichtung folgendes aufweist: Einen Bandpaßfilter (2a), der an die Abtasteinrichtung (1) angeschlossen ist, um nur eine beim Klopfen vorhandene Frequenzkomponente hindurchzulassen, einen Rauschpegeldetektor (2b), um das Ausgangssignal des Bandpaßfilters (2a) mit einer vorgegebenen Verstärkung in ein Gleichspannungssignal umzuwandeln, wobei das Gleichspannungssignal höher als die Rauschkomponente, aber niedriger als die Klopfkomponente des gefilterten Ausgangssignals ist, und einen Komparator (2c), um die Ausgangssignale des Filters und des Rauschpegeldetektors zu vergleichen, um die Klopfsignale (c) abzuleiten.

7. Zündzeitpunktregelungsvorrichtung für einen Verbrennungsmotor nach Anspruch 6, wobei der Kraftstoff-Diskriminator(3) einen an den Komparator (2c) angeschlossenen Impulsgenerator (3a), der einen Impuls pro Auftreten des Klopfens während einer Zündung erzeugt, und einen Zähler(3b) aufweist, der an den Impulsgenerator(3a) angeschlossen ist, um die Ausgangsimpulse des Impulsgenerators zu zählen und um ein Logiksignal (g) zu liefern, welches die Anwesenheit einer vorgegebenen Klopfrate pro vorgegebenem Zeitintervall angibt, welches von einer Zeitsteuerung (3c) definiert ist.

8. Zündzeitpunktregelungsvorrichtung für einen Verbrennungsmotor nach Anspruch 7, wobei die Setzeinrichtung (4) folgendes aufweist: Ein Flip-Flop (4a), das von dem Logiksignal (g) vom Zähler (3b) gesetzt wird, einen Referenzzündzeitpunktsignalgenerator (5), dessen Zündzeitpunktcharakteristi k für den Kraftstoff hoher Oktanzahl vorgegeben wird, und einen Zündzeitpunktphasenschieber (6), um den Zündzeitpunkt des Referenzzündzeitpunktsignalgenerators (5) in Abhängigkeit vom Ausgangssignal des Flip-Flops (4a) zu verschieben, um den Zündzeitpunkt einer Zündspule (8) zu regeln.

9. Zündzeitpunktregelungsvorrichtung für einen Verbrennungsmotor nach Anspruch 8, wobei der Korrektursignalgenerator einen Verzögerungssteuerspannungsgenerator (9), um das Ausgangssignal (c) des Komparators (2c), falls vorhanden, zu integrieren, und einen Addierer (10a) aufweist, um das Ausgangssignal des Verzögerungssteuerspannungsgenerators (9) sowie das Ausgangssignal (i) des Flip-Flops (4a) zu addieren, wobei das addierte Resultat (R) in den Phasenschieber (6) eingegeben wird.

10. Zündzeitpunktregelungsvorrichtung für einen Verbrennungsmotor nach Anspruch 7, wobei die Referenzzündzeitpunkt-Setzeinrichtung (4, 6) folgendes aufweist: Ein Flip-Flop (4a), das mit dem Logiksignal von dem Zähler gesetzt wird, einen Datenwähler (13), der auf das Ausgangssignal des Flip-Flops (4a) anspricht, um eine von ersten und zweiten Zündzeitpunktcharakteristiken für Kraftstoffe mit hoher Oktanzahl bzw. niedriger Oktanzahl zu wählen, erste und zweite Speicher (11, 12), um jeweils die ersten und zweiten Charakteristiken zu speichern, einen Motordrehzahldetektor (16), einen Lastzustandsdetektor (17) sowie eine Zündzeitpunkt-Berechnungseinheit (18), um die Zündzeitpunktdaten, die durch die vom Motordrehzahldetektor (16) gemessene Motordrehzahl und den vom Lastzustandsdetektor (17) gemessenen Lastzustand bestimmt sind, in entsprechende Adressendaten umzuwandeln und um die Adressendaten den ersten und zweiten Speichern (11, 12) zu liefern, wobei die Berechnungseinheit (18) das gewählte Ausgangssignal des Datenwählers ausliest, um den Zündzeitpunkt einer Zündspule (8) zu regeln.

11. Zündzeitpunktregelungsvorrichtung für einen Verbrennungsmotor nach Anspruch 10, wobei der Korrektursignalgenerator (9, 10) folgendes aufweist: Einen Verzögerungssteuerspannungsgenerator (9) zum Integrieren des Ausgangssignals (c) des Komparators (2c), falls vorhanden, einen Analog-Digital-Wandler (14), um den integrierten Wert des Spannungsgenerators (9) in einen Digitalwert umzuwandeln, und einen Subtrahierer (15), zum Subtrahieren des Digitalwertes vom Ausgangssignal des Datenwählers (13), wobei das Resultat in die Berechnungseinheit (18) eingegeben wird.

12. Zündzeitpunktregelungsvorrichtung für einen Verbrennungsmotor nach Anspruch 1, wobei der Kraftstoff-Diskriminator (2, 3) eine Einrichtung aufweist, um einen Betriebsbereich des Motors (20) zu liefern, der in Abhängigkeit von derAnwesenheit oder der Abwesenheit eines Klopfens in dem Betriebsbereich hinsichtlich des Kraftstoffes unterschieden wird.

13. Zündzeitpunktregelungsvorrichtung für einen Verbrennungsmotor nach Anspruch 12, wobei der Kraftstoff-Diskriminator (23) eine Einrichtung (26) zur Abtastung des Lastzustandes des Motors (20) und eine Einrichtung aufweist, um auf der Basis des festgestellten Resultates der Abtasteinrichtung (26) zu bestimmen, ob der Lastzustand in einem Lastbereich (a) liegt, wo das Klopfen in dem Falle auftritt, wo der Motor mit Kraftstoff hoher Oktanzahl betrieben wird, und um festzustellen, daß der Kraftstoff im Betrieb der Kraftstoff mit niedriger Oktanzahl ist, wenn das Klopfen außerhalb des Lastbereiches (a) auftritt.

14. Zündzeitpunktregelungsvorrichtung für einen Verbrennungsmotor nach Anspruch 12, wobei der Kraftstoff-Diskriminator (23) eine Einrichtung (26) zur Abtastung des Lastzustandes des Motors (20) und eine Einrichtung aufweist, um auf der Basis des Ausgangssignals der Abtasteinrichtung (26) zu bestimmen, ob der Lastzustand in einem Lastbereich (b) liegt, wo das Klopfen in dem Falle auftritt, wo der Motor mit Kraftstoff niedriger Oktanzahl betrieben wird, während kein Klopfen in dem Falle auftritt, wo der Motor mit dem Kraftstoff hoher Oktanzahl betrieben wird, und um zu bestimmen, daß der Kraftstoff im Betrieb der Kraftstoff niedriger Oktanzahl ist, wenn das Klopfen in dem Lastbereich (b) auftritt, während bestimmt wird, daß der Kraftstoff im Betrieb der Kraftstoff hoher Oktanzahl ist, wenn kein Klopfen in dem Lastbereich (b) auftritt.

15. Zündzeitpunktregelungsvorrichtung für einen Verbrennungsmotor nach Anspruch 12, wobei der Kraftstoff-Diskriminator (23) folgendes aufweist: Eine erste Einrichtung zur Vorgabe einer Betriebsbedingung, die für Kraftstoff hoher Oktanzahl ausgelegt ist; eine zweite Einrichtung zur Vorgabe einer Betriebsbedingung, die für Kraftstoff niedriger Oktanzahl ausgelegt ist, eine Einrichtung (26) zur Abtastung des Lastzustandes des Motors, eine Einrichtung, um auf der Basis des festgestellten Resultats der Abtasteinrichtung (26) zu bestimmen, ob der Lastzustand in einem Lastbereich liegt, wo das Klopfen in dem Falle auftritt, wo der Motor mit Kraftstoff hoher Oktanzahl betrieben wird, und um zu bestimmen, daß der Kraftstoff im Betrieb der Kraftstoff mit niedriger Oktanzahl ist, wenn das Klopfen außerhalb des Lastbereiches unter einer Betriebsbedingung auftritt, die von der ersten Einrichtung vorgegeben ist, und einer Einrichtung zur Umschaltung von einem Betrieb, der von der ersten Einrichtung vorgegeben wird, zu einem Betrieb, der von der zweiten Einrichtung vorgegeben wird, falls von der Bestimmungseinrichtung festgestellt wird, daß der Kraftstoff im Betrieb der Kraftstoff niedriger Oktanzahl ist.

16. Zündzeitpunktregelungsvorrichtung für einen Verbrennungsmotor nach Anspruch 12, wobei der Kraftstoff-Diskriminator (23) folgendes aufweist: Eine erste Einrichtung zur Vorgabe einer Betriebsbedingung, die für Kraftstoff hoher Oktanzahl ausgelegt ist, eine zweite Einrichtung zur Vorgabe einer Betriebsbedingung, die für Kraftstoff niedriger Oktanzahl ausgelegt ist, eine Einrichtung (26) zur Abtastung des Lastzustandes des Motors, eine Einrichtung, um auf der Basis des Ausgangssignals der Abtasteinrichtung (26) zu bestimmen, ob der Lastzustand in einem Lastbereich liegt, wo das Klopfen in dem Falle auftritt, wo der Motor mit dem Kraftstoff niedriger Oktanzahl betrieben wird, während kein Klopfen in dem Falle auftritt, wo der Motor mit Kraftstoff hoher Oktanzahl betrieben wird, und um zu bestimmen, daß der Kraftstoff im Betrieb der Kraftstoff niedriger Oktanzahl ist, falls das Klopfen in dem Lastbereich auftritt, während festgestellt wird, daß der Kraftstoff im Betrieb der Kraftstoff hoher Oktanzahl ist, falls kein Klopfen in dem Lastbereich auftritt, und einer Einrichtung zur Umschaltung zwischen den Betriebsbedingungen, die von der ersten Einrichtung und der zweiten Einrichtung in Abhängigkeit von dem Kraftstoff im Betrieb vorgegeben werden, welcher von der Bestimmungseinrichtung festgestellt wird.

17. Zündzeitpunktregelungsvorrichtung für einen Verbrennungsmotor nach Anspruch 15 oder 16, wobei die Betriebsbedingung, die von der ersten Einrichtung vorgegeben wird, ein Kompressionsverhältnis ist.

18. Zündzeitpunktregelungsvorrichtung für einen Verbrennungsmotor nach Anspruch 15 oder 16, wobei die Betriebsbedingung, die von der ersten Einrichtung vorgegeben wird, ein Aufladedruck ist.

19. Zündzeitpunktregelungsvorrichtung für einen Verbrennungsmotor nach Anspruch 15 oder 16, wobei die Betriebsbedingung, die von der ersten Einrichtung vorgegeben wird, ein Luft/Kraftstoff-Mischungsverhältnis ist.

20. Zündzeitpunktregelungsvorrichtung für einen Verbrennungsmotor, umfassend:
- eine Abtasteinrichtung (1) zum Abtasten von Klopfsignalen des Motors;
- eine Klopfsignal-Ableiteinrichtung (2), die auf das Ausgangssignal der Abtasteinrichtung (1) anspricht, um die Klopfsignale abzuleiten;
- eine Korrekturwert-Bestimmungseinrichtung (50) zur Bestimmung eines Zündzeitpunktkorrekturwertes (0d) in Abhängigkeit von den Klopfsignalen; und
- eine Zündzeitpunktbestimmungseinrichtung (18, 54, 55), um Referenz-Zündzeitpunktsignale (0a, Ob) zu erzeugen und sie in Abhängigkeit von dem Zündzeitpunktkorrekturwert einzustellen, um Zündzeitpunktsignale zum Unterdrücken des Auftretens von Klopfen zu liefern,
dadurch gekennzeichnet,
daß eine Verschiebungswertbestimmungseinrichtung (52, 53) vorgesehen ist, um aus dem Ausgangssignal der Klopfsignalableiteinrichtung (2) oder dem Ausgangssignal der Korrekturwertbestimmungseinrichtung (50) einen Verschiebungswert für den Referenz-Zündzeitpunkt zu bestimmen, der der Oktanzahl eines in dem Motor verwendeten Kraftstoffs entspricht;
und daß die Zündzeitpunktbestimmungseinrichtung (18, 54, 55) wirksam ist, um die Referenz-Zündzeitpunktsignale in Abhängigkeit von dem Verschiebungswert und dem Ausgangssignal der Korrekturwertbestimmungseinrichtung einzustellen, so daß die erzeugten Zündzeitpunktsignale zusätzlich eingestellt werden, um die Oktanzahl des in dem Motor verwendeten Kraftstoffes zu berücksichtigen.

21. Zündzeitpunktregelungsvorrichtung für einen Verbrennungsmotor nach Anspruch 20, wobei die Zündzeitpunktbestimmungseinrichtung (54, 55) eine Interpolationseinrichtung (54b) aufweist, um eine Interpolation zwischen zwei Referenzzündzeitpunktcharakteristiken gemäß einem proportionalen Faktordurchzuführen, der der Oktanzahl des Kraftstoffs entspricht.

22. Zündzeitpunktregelungsvorrichtung für einen Verbrennungsmotor nach Anspruch 21, wobei die Klopfabtasteinrichtung (1) eine Schwingungsbeschleunigungsabtasteinrichtung aufweist.

23. Zündzeitpunktregelungsvorrichtung für einen Verbrennungsmotor nach Anspruch 22, wobei die Klopfsignal-Ableiteinrichtung (2) folgendes aufweist: Einen Bandpaßfilter (2a), der an die Abtasteinrichtung (1) angeschlossen ist, um nur eine dem Klopfen inhärente Frequenzkomponente hindurchzulassen, einen Rauschpegeldetektor (2b), um das Ausgangssignal des Bandpaßfilters (2a) mit einer vorgegebenen Verstärkung in eine Gleichspannung umzuwandeln, wobei die Gleichspannung höher als die Rauschkomponente, aber niedriger als die Klopfkomponente des gefilterten Ausgangssignals ist, und einen Komparator (2c), um die Ausgangssignale des Filters (2a) und des Detektors (2b) zu vergleichen, um die Klopfsignale abzuleiten.

24. Zündzeitpunktregelungsvorrichtung für einen Verbrennungsmotor nach Anspruch 23, wobei die Korrekturwertbestimmungseinrichtung (50) einen Integrator (50a) zum Integrieren des Ausgangssignals des Komparators (2c) und einen an den Integrator (50a) angeschlossenen Analog-Digital-Wandler (50b) aufweist.

25. Zündzeitpunktregelungsvorrichtung für einen Verbrennungsmotor nach Anspruch 23, wobei die Verschiebungswertbestimmungseinrichtung (52) folgendes aufweist: Einen Impulsgenerator (52a), der an den Komparator (2c) angeschlossen ist, um einen Impuls pro Auftreten des Klopfens für eine Zündung zu erzeugen, einen Zähler (52b), der an den Impulsgenerator (52a) angeschlossen ist, um die Ausgangsimpulse des Generators zu zählen und um ein Logiksignal zu liefern, das die Anwesenheit einer vorgegebenen Klopfrate pro vorgegebenem Zeitintervall angibt, einen Aufwärts/Abwärts-Zähler (52d), der von dem Zähler (52b) hochgezählt wird, einen ersten Zeitgeber (52c) zum Definieren des vorgegebenen Zeitintervalls, und einen zweiten Zeitgeber (52e) zum Definieren eines anderen vorgegebenen Zeitintervalls, das länger ist als das vorgegebene Zeitintervall, zum Herunterzählen des Aufwärts/Abwärts-Zählers.

26. Zündzeitpunktregelungsvorrichtung für einen Verbrennungsmotor nach Anspruch 24, wobei die Verschiebungswertbestimmungseinrichtung (53) folgendes aufweist: Eine VoreilVerzögerungs-Entscheidungseinheit (53a), um das Ausgangssignal des Analog-Digital-Wandlers (50b) mit einem vorgegebenen Wert zu vergleichen, um als Ausgangssignal ein Voreil-Steuersignal oder ein Verzögerungssteuersignal (k, I) in Abhängigkeit von dem Vergleichsergebnis zu liefern, erste und zweite Zeitgeber (53b, 53c), die an die Entscheidungseinheit (53a) angeschlossen sind, um Voreil- bzw. Verzögerungssteuersignale zu erhalten, und einen Aufwärts/Abwärts-Zähler (53d), der von den ersten und zweiten Zeitgebern (53b, 53c) hochgezählt bzw. heruntergezählt wird.

27. Zündzeitpunktregelungsvorrichtung für einen Verbrennungsmotor nach Anspruch 21, wobei die Zündzeitpunktbestimmungseinrichtung (55) folgendes aufweist: Erste und zweite Speicher (11, 12), um die ersten bzw. zweiten Zündzeitpunktcharakteristiken für Kraftstoff hoher Oktanzahl bzw. niedriger Oktanzahl zu speichern, einen Motordrehzahldetektor (16), einen Lastzustandsdetektor (17), und eine Zündzeitpunkt-Berechnungseinheit (18), um die Zündzeitpunktdaten, die durch die vom Motordrehzahldetektor gemessene Motordrehzahl sowie den vom Lastzustandsdetektor gemessenen Lastzustand bestimmt sind, in entsprechende Adressendaten umzuwandeln und die Adressendaten an die ersten und zweiten Speicher (11, 12) zu liefern.

28. Zündzeitpunktregelungsvorrichtung für einen Verbrennungsmotor nach Anspruch 27, wobei die Interpolationseinrichtung (54) folgendes aufweist: Eine Einrichtung (54a) zur Lieferung eines proportionalen Faktors, der der Oktanzahl des Kraftstoffs entspricht, auf der Basis der Klopfrate, die von der Verschiebungswertbestimmungseinrichtung (52, 53) angegeben wird, einen Interpolator (54b) zur Durchführung einer Interpolation in Abhängigkeit von dem proportionalen Faktor (k) zwischen den ersten und zweiten Zündzeitpunktcharakteristiken, die jeweils im ersten bzw. zweiten Speicher (11, 12) gespeichert sind, und einen Subtrahierer (54c), um das digitale Ausgangssignal (9d) der Korrekturwertbestimmungseinrichtung (50) vom Ausgangssignal (9c) des Interpolators (54b) zu subtrahieren.

29. Zündzeitpunktregelungsvorrichtung für einen Verbrennungsmotor nach Anspruch 27, wobei die Interpolationseinrichtung (55) folgendes aufweist: Einen Addierer (55a), um das Ausgangssignal (0D) der Korrekturwertbestimmungseinrichtung (50) und das Ausgangssignal der Verschiebungswertbestimmungseinrichtung (53) zu addieren, eine Einrichtung (55b) zur Lieferung eines proportionalen Faktors (k), der der Oktanzahl des Kraftstoffs entspricht, auf der Basis des Ausgangssignals des Addierers (55a), und einen Interpolator (55e) zur Durchführung einer Interpolation in Abhängigkeit von dem proportionalen Faktor zwischen den ersten und zweiten Zündzeitpunktcharakteristiken, die jeweils im ersten bzw. zweiten Speicher (11, 12) gespeichert sind.

30. Zündzeitpunktregelungsvorrichtung für einen Verbrennungsmotor nach Anspruch 20, ferner umfassend eine Einrichtung (52f, 53e) zum Festhalten des Verschiebungswertes, wenn der Motor außerhalb eines vorgegebenen Betriebsbereiches oder einer vorgegebenen Betriebsbedingung ist.

31. Zündzeitpunktregelungsvorrichtung für einen Verbrennungsmotor nach Anspruch 30, wobei die Verschiebungswertbestimmungseinrichtung (52, 53) nur in einem Betriebsbereich bestimmt wird, wo ein Klopfen auftritt.

32. Zündzeitpunktregelungsvorrichtung für einen Verbrennungsmotor nach Anspruch 20, ferner umfassend eine Betriebsparametersteuerung (70, 77), um einen Aufladedruck zusätzlich zum Zündzeitpunkt des Motors in Abhängigkeit vom Ausgangssignal der Korrekturwertbestimmungseinrichtung (50) und / oder vom Ausgangssignal der Verschiebungswertbestimmungseinrichtung (52, 53) zu regeln.

33. Zündzeitpunktregelungsvorrichtung für einen Verbrennungsmotor nach Anspruch 20, ferner umfassend eine Betriebsparametersteuerung (70, 77), um ein Kompressionsverhältnis zusätzlich zum Zündzeitpunkt des Motors in Abhängigkeit vom Ausgangssignal von der Korrekturwertbestimmungseinrichtung (50) und/oder vom Ausgangssignal der Verschiebungswertbestimmungseinrichtung (52, 53) zu regeln.

34. Zündzeitpunktregelungsvorrichtung für einen Verbrennungsmotor nach Anspruch 20, ferner umfassend eine Betriebsparametersteuerung (70, 77), um ein Luft/Kraftstoff-Mischungsverhältnis zusätzlich zum Zündzeitpunkt des Motors in Abhängigkeit vom Ausgangssignal der Korrekturwertbestimmungseinrichtung (50) und/oder vom Ausgangssignal der Verschiebungswertbestimmungseinrichtung (52, 53) zu regeln.

35. Zündzeitpunktregelungsvorrichtung für einen Verbrennungsmotor nach Anspruch 20, ferner umfassend eine Einrichtung (52c, 52e, 53b', 53c') zur Änderung der Ansprechempfindlichkeit der Verschiebungswertbestimmungseinrichtung (52, 53) in Abhängigkeit vom Ausgangswert der Korrekturwertbestimmungseinrichtung (50, 50').

36. Zündzeitpunktregelungsvorrichtung für einen Verbrennungsmotor nach Anspruch 35, wobei die Verschiebungswertbestimmungseinrichtung (52', 53') eine Einrichtung (52c, 52e, 53b', 53c') aufweist, die an den Ausgang der Korrekturwertbestimmungseinrichtung (50) angeschlossen ist, um eine rasche Änderung des Verschiebungswertes, der von der Verschiebungswertbestimmungseinrichtung (52', 53') bestimmt ist, in der Verzögerungsrichtung oder Voreilrichtung durchzuführen, wenn der Korrekturwert oberhalb oder unterhalb von einem vorgegebenen Wert liegt, wobei der Korrekturwert in der Voreil-Richtung oder Verzögerungsrichtung zurückgesetzt wird.

37. Zündzeitpunktregelungsvorrichtung für einen Verbrennungsmotor nach Anspruch 20, wobei die Verschiebungswertbestimmungseinrichtung (52, 53, 53') eine Einrichtung (52f, 53e) aufweist, um den Verschiebungswert während des angehaltenen Zustandes des Motors zu speichern.

38. Zündzeitpunktregelungsvorrichtung nach Anspruch 20, wobei die Zündzeitpunktbestimmungseinrichtung (18, 54, 55) eine Zündzeitpunktbetätigungseinrichtung (18) aufweist, um eine Phasenverschiebung des eingestellten Referenz-Zündzeitpunktsignals zur Erzeugung der Zündzeitpunktsignale vorzunehmen.

39. Zündzeitpunktregelungsvorrichtung für einen Verbrennungsmotor nach Anspruch 20, wobei die Verschiebungswertbestimmungseinrichtung (52, 53, 53') eine Rücksetzschaltung aufweist, um den Referenzzündzeitpunkt-Verschiebungswert zum Zeitpunkt der Kraftstoffzuführung oder des Starts auf einen vorgegebenen Wert zu initialisieren.

## Revendications

1. Un appareil de commande de l'avance à l'allumage pour un moteur à combustion interne comprenant :
des moyens de détection (1) pour détecter les signaux de cliquettement (c) dans ledit moteur;
un moyen de dérivation du signal de cliquettement (2), répondant à la sortie dudit moyen de détection, pour dériver ledit signal de cliquettement (c); et
un moyen de génération d'un signal de correction (9,10), répondant à la sortie dudit moyen de dérivation du signal de cliquettement (2) lors de l'apparition de cliquetis, pour générer un signal de correction (j) pour corriger l'avance à l'allumage; caractérisé en ce que
un moyen de discrimination du carburant (3,23) répondant à la sortie (c) dudit moyen de dérivation du signal de cliquettement, pour déterminer entre un carburant à taux d'octane élevé et un carburant à taux d'octane bas lequel de ces types de carburant est utilisé dans ledit moteur; et
un moyen de mise en place (4,6) répondant à la sortie (g) dudit moyen de discrimination du carburant, pour mettre en place une caractéristique d'avance à l'allumage de référence pour chacun desdits carburants à taux d'octane élevé ou carburant à taux d'octane bas; dans lequel
le signal de correction généré par ledit moyen de génération d'un signal de correction est arrangé pour corriger ladite caractéristique d'avance à l'allumage de référence mise en place par ledit moyen de mise en place (4,6).

2. Un appareil de commande de l'avance à l'allumage pour un moteur à combustion interne selon la revendication 1, caractérisé en ce que ledit moyen de mise en place (4,6) comprend un moyen (6) pour déplacer la phase de ladite caractéristique d'avance à l'allumage de référence depuis l'un des carburants précités vers un autre de ces carburants, d'une valeur fixe prédéterminée.

3. Appareil de commande de l'avance à l'allumage pour un moteur à combustion interne selon la revendication 1, caractérisé en ce que ledit moyen de mise en place (4,6) comprend un moyen pour mettre en place l'avance séparément de ladite caractéristique d'avance à l'allumage pour chacun desdits carburants.

4. Appareil de commande de l'avance à l'allumage pour un moteur à combustion interne selon la revendication 1, caractérisé en ce que ledit moyen de génération d'un signal de correction comprend un moyen pour remettre à zéro ledit moyen de génération du signal de correction au moment où ladite caractéristique d'avance à l'allumage de référence est changée jusqu'à la mise en place pour ledit carburant à taux d'octane bas depuis ledit carburant à taux d'octane élevé.

5. Appareil de commande de l'avance à l'allumage pour un moteur à combustion interne selon la revendication 1, caractérisé en ce que ledit moyen de détection (1) comprend un moyen de détection de l'accélération des vibrations.

6. Appareil de commande de l'avance à l'allumage pour un moteur à combustion interne selon la revendication 5, caractérisé en ce que ledit moyen de dérivation du signal de cliquettement comprend un filtre à bande passante (2a) connecté audit moyen de détection (1) pour faire passer à travers celui-ci une composante de fréquence inhérente aux cliquetis, un détecteur de niveau de bruit (2b) pour convertir la sortie du filtre à bande passante (2a) en une tension continue avec une amplification prédéterminée, ladite tension continue étant supérieure à la composante du bruit alors qu'elle est inférieure à la composante de cliquettement de la sortie filtrée, et un comparateur (2c) pour comparer les sorties dudit filtre et dudit détecteur de niveau de bruit pour dériver ledit signal de cliquettement(c).

7. Appareil de commande de l'avance à l'allumage pour un moteur à combustion interne selon la revendication 6, caractérisé en ce que ledit moyen de discrimination du carburant (3) comprend un générateur de pulsations (3a) connecté audit comparateur (2c) qui génère une pulsation pour chaque apparition du cliquettement durant un allumage, et un compteur (3b) connecté audit générateur de pulsations (3a) pour compter les pulsations en sortie dudit générateur de pulsations et pour émettre un signal logique (g) indiquant la présence d'un taux d'apparition de cliquettement prédéterminé pour un intervalle de temps prédéterminé défini par une temporisation (3c).

8. Appareil de commande de l'avance à l'allumage pour un moteur à combustion interne selon la revendication 7, caractérisé en ce que ledit moyen de mise en place (4) comprend une bascule (4a) commandée par ledit signal logique (g) depuis ledit compteur (3b), un générateur de signal d'avance à l'allumage de référence (5) dont la caractéristique d'avance à l'allumage est émise pour ledit carburant à taux d'octane élevé, un déplaceur de phase d'avance à l'allumage (6) pour déplacer la temporisation dudit générateur de signal d'avance à l'allumage de référence (5) en fonction de la sortie de ladite balance (4a) pour contrôler l'avance à l'allumage d'une bobine d'allumage (8).

9. Appareil de commande de l'avance à l'allumage pour un moteur à combustion interne selon la revendication 8, caractérisé en ce que ledit moyen de génération du signal de correction comporte un générateur de tension de retard contrôlé (9) pour intégrer la sortie (c) dudit comparateur (2c) si celle-ci est présente, et un compilateur (10a) pour additionner les sorties dudit générateur de tension de retard contrôlé (9) avec la sortie (i) de ladite balance (4a), le résultat du compilateur (R) étant introduit vers ledit déplaceur de phase (6).

10. Appareil de commande de l'avance à l'allumage pour un moteur à combustion interne selon la revendication 7, caractérisé en ce que ledit moyen de mise en place de l'avance à l'allumage de référence (4,6) comporte une bascule (4a) commandée par ledit signal logique émis par le compteur, un sélecteur de données (13) répondant à la sortie de ladite bascule (4a) pour sélectionner l'une des première ou seconde caractéristiques d'avance à l'allumage. pour ledit carburant à taux d'octane élevé et à taux d'octane bas respectivement, les première et seconde mémorisations (11,12) pour respectivement mémoriser lesdites première et seconde caractéristiques, un moyen de détection de la vitesse du moteur (16), un moyen de détection des conditions de charge (17), et une unité de comptage de l'avance à l'allumage (18) pour convertir les données de l'avance à l'allumage, déterminées par la vitesse du moteur détectée par ledit moyen de détection de la vitesse du moteur (16) et déterminée par les conditions de charge détectées par ledit moyen de détection des conditions de charge (17), à des adresses de données correspondantes et pour envoyer les données des adresses vers lesdites première et seconde mémorisations (11,12), ladi- i-te unité de comptage (18) allant lire la sortie sélectionnée du sélecteur de données pour contrôler l'avance à l'allumage d'une bobine d'allumage (8).

11. Appareil de commande de l'avance à l'allumage pour un moteur à combustion interne selon la revendication 10, caractérisé en ce que ledit moyen de génération d'un signal de correction (9,10) comporte un générateur de tension de retard contrôlé (9) pour intégrer la sortie (c) dudit comparateur (2c) si celle-ci est présente, un convertisseur analogique/numérique (14) pour convertir la valeur intégrée dudit générateur de tension (9) en une valeur digitale, et un soustracteur (15) pour soustraire ladite valeur digitale depuis la sortie dudit secteur de données (13), le résultant étant émis en entrée de ladite unité de comptage (18).

12. Appareil de commande de l'avance à l'allumage pour un moteur à combustion interne selon la revendication 1, caractérisé en ce que ledit moyen de discrimination du carburant (2,3) comprend un moyen pour définir une région de fonctionnement dudit moteur (20) pour être discriminée et pour discriminer ledit carburant en fonction de la présence ou de l'absence de cliquetis dans ladite région de fonctionnement.

13. Appareil de commande de l'avance à l'allumage pour un moteur à combustion interne selon la revendication 12, caractérisé en ce que ledit moyen de discrimination du carburant (23) comprend un moyen (26) pour détecter les conditions de charge dudit moteur (20), et un moyen pour déterminer sur la base du résultat détecté par led moyen de détection (26) si les conditions de charge se situent oui ou non dans une région de charge (a) où le cliquettement survient dans le cas où le moteur serait en fonctionnement avec ledit carburant à taux d'octane élevé et pour déterminer si le carburant utilisé est ledit carburant à taux d'octane bas au cas où un cliquettement survenait hors de ladite région de charge (a).

14. Appareil de commande de l'avance à l'allumage pour un moteur à combustion interne selon la revendication 12, caractérisé en ce que ledit moyen de discrimination de carburant (23) comprend un moyen (26) pour détecter les conditions de charge dudit moteur (20) et un moyen pour déterminer sur la base des signaux de sortie dudit moyen de détection (26) si les conditions de charge se trouvent ou non dans une région de charge (b) où le cliquettement survient dans le cas où le moteur serait en fonctionnement avec ledit carburant à taux d'octane bas, alors que ce cliquettement ne survient pas dans le cas où ledit moteur est en fonctionnement avec ledit carburant à taux d'octane élevé, et pour déterminer si le carburant utilisé est ledit carburant à taux d'octane bas au cas où un cliquettement survenait dans ladite région de charge (b) alors que l'on déterminera que le carburant utilisé est un carburant à taux d'octane élevé si aucun cliquettement ne survient dans ladite région de charge (b).

15. Appareil de commande de l'avance à l'allumage pour un moteur à combustion interne selon la revendication 12, caractérisé en ce que ledit moyen de discrimination du carburant (23) comprend de plus un premier moyen pour mettre en place une condition de fonctionnement adaptée pour ledit carburant à taux d'octane élevé, un second moyen pour mettre en place une condition de fonctionnement adaptée pour ledit carburant à taux d'octane bas, un moyen (26) pour détecter les conditions de charge dudit moteur, un moyen pour déterminer sur la base des résultats détectés dudit moyen de détection (26) si les conditions de charge se situent oui ou non dans la région de charge où des cliquettements surviennent dans le cas où ledit moteur serait en fonctionnement avec ledit carburant à taux d'octane élevé et pour déterminer que le carburant utilisé est un carburant à taux d'octane bas si un cliquettement survenait à l'extérieur de ladite région de charge sous les conditions de fonctionnement défini par ledit premier moyen, et un moyen pour transférer depuis un fonctionnement défini par ledit premier moyen vers un fonctionnement instruit par ledit second moyen s'il a été déterminé par le moyen de détermination que le carburant utilisé est ledit carburant à taux d'octane bas.

16. Appareil de commande pour l'avance à l'allumage pour un moteur à combustion interne selon la revendication 12, caractérisé en ce que ledit moyen de discrimination du carburant (23) comprend de plus un premier moyen pour mettre en place une condition de fonctionnement adaptée pour ledit carburant à taux d'octane élevé, un second moyen pour mettre en place une condition de fonctionnement adaptée pour ledit carburant à taux d'octane bas, un moyen (26) pour détecter les conditions de charge dudit moteur, un moyen pour déterminer sur la base des signaux de sortie dudit moyen de détection (26) si les conditions de charge se situent oui ou non dans une région de charge où des cliquettements surviennent dans le cas où ledit moteur serait en fonctionnement avec ledit carburant à taux d'octane bas alors que ces cliquettements ne surviendraient pas dans le cas où ledit moteur serait en fonctionnement avec ledit carburant à taux d'octane élevé et pour déterminer que le carburant utilisé est ledit carburant à taux d'octane bas si des cliquettement survenaient dans la région de charge,alors que l'on déterminera que le carburant utilisé est ledit carburant à taux d'octane élevé si aucun cliquettement ne survenait dans ladite région de charge, et un moyen pour transférer entre le fonctionnement défini par ledit premier moyen et ledit second moyen en réponse au carburant ou a été déterminé comme étant utilisé par ledit moyen de détermination.

17. Appareil de commande de l'avance à l'allumage pour un moteur à combustion interne selon l'une des revendications 15 ou 16, caractérisé en ce que lesdites conditions de fonctionnement définies par ledit premier moyen est un taux de compression.

18. Appareil de commande de l'avance à l'allumage pour un moteur à combustion interne selon une des revendications 15 ou 16, caractérisé en ce que ladite condition de fonctionnement définies par ledit premier moyen est une pression de turbocompresseur.

19. Appareil de commande de l'avance à l'allumage pour un moteur à combustion interne selon l'une des revendications 15 ou 16, caractérisé en ce que la condition de fonctionnement définie par ledit premier moyen est un taux de mélange air-carburant.

20. Appareil de commande de l'avance à l'allumage pour un moteur à combustion interne comprenant :
des moyens de détection (1) pour détecter les signaux de cliquettement dudit moteur;
un moyen de dérivation du signal de cliquettement (2) répondant à la sortie dudit moyen de détection (1), pour dériver lesdits signaux de cliquettement;
un moyen de détermination de la grandeur de correction (50) pour déterminer une grandeur de correction de l'avance à l'allumage (0_{d}) en fonction desdits signaux de cliquettement; et
un moyen de détermination de l'avance à l'allumage (18, 54, 55) pour produire des signaux de référence de l'avance à l'allumage (8₃, 0_{b}) et pour les régler en fonction de la grandeur de correction de l'avance à l'allumage afin de produire des signaux de l'avance à l'allumage pour supprimer la production du cliquettement;
caractérisé en ce que :
des moyens de détermination de la grandeur de déplacement (52, 53) sont prévus pour déterminer à partir de la sortie dudit moyen de dérivation des signaux de cliquettement (2) ou de la sortie dudit moyen de détermination de la grandeur de correction (50) une grandeur de déplacement pour ladite avance à l'allumage de référence correspondant au taux d'octane du combustible utilisé dans ledit moteur; et
les moyens de détermination de l'avance à l'allumage (18, 54, 55) interviennent pour régler les signaux de référence de l'avance à l'allumage en réponse à ladite grandeur de déplacement et à la sortie desdits moyens de détermination de la grandeur de correction, par quoi les signaux de l'avance à l'allumage produits sont additionnelle- ment ajustés pour prendre en considération le taux d'octane du combustible utilisé dans le moteur.

21. Un appareil de contrôle de l'avance à l'allumage pour un moteur à combustion interne selon la revendication 20, caractérisé en ce que ledit moyen de détermination et l'avance à l'allumage (54,55) comprend un moyen de fonctionnement en interpolation (54b) pour exercer une interpolation du fonctionnement entre deux caractéristiques de l'avance à l'allumage de référence en accord à un facteur proportionnel correspondant au taux d'octane dudit carburant.

22. Appareil de commande de l'avance à l'allumage selon la revendication 21, caractérisé en ce que ledit moyen de détection de cliquetis (1) comprend un moyen de détection de l'accélération des vibrations.

23. Appareil de commande de l'avance à l'allumage pour un moteur à combustion interne selon la revendication 22, caractérisé en ce que ledit moyen de dérivation du signal de cliquetis (2) comprend un filtre à bande passante (2a) connecté audit moyen de détection (1) pour faire passer à travers celui-ci seulement une composante de la fréquence inhérente aux cliquetis, undétecteur de niveau de bruit (2b) pour convertir la sortie dudit filtre à bande passante (2a) en une tension continue avec une amplification prédéterminée, ladite tension continue étant supérieure à la composante du bruit alors qu'elle est inférieure à la composante de cliquetis de la sortie filtrée, et un comparateur (2c) pour comparer les sorties dudit filtre (2a) et dudit détecteur (2b) pour dériver lesdits signaux de cliquetis.

24. Appareil de commande pour l'avance à l'allumage d'un moteur à combustion interne selon la revendication 23, caractérisé en ce que le moyen de détermination de l'amplitude de correction (50) comprend un intégrateur (50a) pour intégrer la sortie du comparateur (2c), et un convertisseur analogique-numérique (50b) connecté audit intégrateur (50a).

25. Appareil de commande de l'avance à l'allumage pour un moteur à combustion interne selon la revendication 23, caractérisé en ce que leditmoyen de détermination de l'amplitude du déplacement (52) comprend un générateur de pulsations (52a) connecté audit comparateur (2c) pour générer une pulsation à chaque apparition dudit cliquetis pour un allumage, un compteur (52b) connecté audit générateur de pulsations (52a) pour compter les pulsations en sortie dudit générateur et pour fournir un signal logique indiquant la présence d'un taux d'apparition de cliquetis prédéterminé pour un intervalle de temps prédéterminé, un compteur haut/bas (52d) pouvant compter à l'aide dudit compteur (52b), une première temporisation (52c) pour définie ledit intervalle de temps prédéterminé, une seconde temporisation (52e) pour déterminer un autre intervalle de temps prédéterminé, plus long que ledit intervalle de temps prédéterminé, en soustrayant ledit compteur haut/bas.

26. Appareil de commande de l'avance à l'allumage pour un moteur à combustion interne selon la revendication 24, caractérisé en ce que ledit moyen de détermination de l'amplitude du déplacement (53) comprend une unité de décision retard/avan- ce (53a) pour comparer la sortie dudit convertisseur analogique/numérique (50b) avec une valeur prédéterminée pour fournir en sortie un signal de contrôle de l'avance ou un signal de contrôle de retard (k, 1) en accord avec les résultats comparés, la première et la seconde temporisations (53b, 53c) connectées à ladite unité de décision (53a) pour recevoir lesdits signaux de contrôle en avance et retard respectivement, et un compteur haut/bas (53d) pour compter en additionnant et en soustrayant respectivement lesdites première et seconde temporisations (53b, 53c).

27. Appareil de commande de l'avance à l'allumage pour un moteur à combustion interne selon la revendication 21, caractérisé en ce que ledit moyen de détermination de l'avance à l'allumage (55) comprend les permier et second moyens de mémorisation (11, 12) pour respectivement mémoriser les première et seconde caractéristiques d'avance à l'allumage pour un carburant à taux d'octane élevé et à taux d'octane bas respectivement, un moyen de détection de la vitesse du moteur (16), un moyen de détection des conditions de charge (17), et une unité de comptage de l'avance à l'allumage (18) pour convertir les données de l'avance à l'allumage, déterminées en fonction de la vitesse du moteur détectée par le moyen de détection de la vitesse du moteur et déterminée en fonction des conditions de charge détectées par ledit moyen de détection des conditions de charge, ladite conversion se faisant à une donnée d'adresse correspondante et pour envoyer la donnée d'adresse auxdits premier et second moyens de mémorisation (11,12).

28. Appareil de commande de l'avance à l'allumage pour un moteur à combustion interne selon la revendication 27, caractérisé en ce que ledit moyen de fonctionnement en interpolation (54b) comprend un moyen (54a) pour fournir un facteur proportionnel correspondant au taux d'octane dudit carburant basé sur le taux d'apparition de cliquetis indiqué par ledit moyen de détermination de l'amplitude du déplacement (52,53), un interpolateur (54b) pour exercer une opération d'interpolation selon ledit facteur proportionnel (k) entre les première et seconde caractéristiques d'avance à l'allumage respectivement mémorisées dans lesdits premier et second moyens de mémorisation (11,12), et un soustracteur (54c) pour soustraire la sortie digitale (9d) dudit moyen de détermination de l'amplitude de correction (50) depuis la sortie (9c) dudit interpolateur(54b).

29. Appareil de commande de l'avance à l'allumage pour un moteur à combustion interne selon la revendication 27, caractérisé en ce que ledit moyen de fonctionnement par inteprolation (55) comprend un compilateur (55a) pour additionner la sortie (8₀) dudit moyen de détermination de l'amplitude de correction (50) et la sortie dudit moyen de détermination de l'amplitude du déplacement (53), un moyen (55b) pour fournir un facteur proportionnel (k) correspondant au taux d'octane dudit carburant basé sur la sortie dudit compilateur (55a), un interpolateur (55e) pour exercer une interpolation du fonctionnement en accord avec le facteur proportionnel entre la première et la seconde caractéristiques d'avance à l'allumage respectivement mémorisées dans lesdits premier et second moyens de mémorisation (11,12).

30. Appareil de commande de l'avance à l'allumage pour un moteur à combustion interne selon la revendication 20, caractérisé en ce qu'il comprend de plus un moyen (52f,53e) pour retenir ladite amplitude du déplacement lorsque ledit moteur est en-dehors d'une région de fonctionnement prédéterminée ou une condition de fonctionnement prédéterminée.

31. Appareil de commande de l'avance à l'allumage pour un moteur à combustion interne selon la revendication 30, caractérisé en ce que ledit moyen de détermination de l'amplitude du déplacement (52,53) est déterminée seulement dans une région de fonctionnement où des cliquetis surviennent.

32. Appareil de commande de l'avance à l'allumage pour un moteur à combustion interne selon la revendication 20, caractérisé en ce qu'il comprend de plus un moyen de contrôle des paramètres de fonctionnement (70,77) pour contrôler une pression du turbocompresseur en plus de l'avance à l'allumage du moteur en réponse à la sortie dudit moyen de détermination de l'amplitude de la correction (50) et/ou de la sortie dudit moyen de détermination de l'amplitude du déplacement (52,53).

33. Appareil de commande de l'avance à l'allumage pour un moteur à combustion interne selon la revendication 20, caractérisé en ce qu'il comprend de plus un moyen de contrôle des paramètres de fonctionnement (70,77) pour contrôler un taux de compression en plus de l'avance à l'allumage dudit moteur en réponse à la sortie dudit moyen de détermination de l'amplitude de correction (50) et/ou de la sortie dudit moyen de détermination de l'amplitude du déplacement (52,53).

34. Appareil de commande de l'avance à l'allumage pour un moteur à combustion interne selon la revendication 20, caractérisé en ce qu'il comprend de plus un moyen de contrôle des paramètres de fonctionnement (70,77) pour contrôler un taux air-carburant en plus de l'avance à l'allumage du moteur en réponse à la sortie du moyen de détermination de l'amplitude de correction (50) et/ou de la sortie dudit moyen de détermination de l'amplitude du déplacement (52, 53).

35. Appareil de commande de l'avance à l'allumage pour un moteur à combustion interne selon la revendication 20, caractérisé en ce qu'il comprend en plus des moyens (52c, 52e, 53b', 53c') pour faire varier la capacité de réponse dudit moyen de détermination de l'amplitude du déplacement (52, 53) en réponse à la valeur de sortie dudit moyen de détermination de l'amplitude de correction (50,50').

36. Appareil de commande de l'avance à l'allumage pour un moteur à combustion interne selon la revendication 35, caractérisé en ce que ledit moyen de détermination de l'amplitude du déplacement (52', 53') comprend des moyens (52c, 52e, 53b', 53c') connectés à la sortie dudit moyen de détermination de l'amplitude de correction (50) pour faire varier rapidement l'amplitude du déplacement déterminée par ledit moyen de détermination de l'amplitude du déplacement (52', 53') dans une direction d'avance ou de retard lorsque ladite amplitude de correction est au-dessus ou en dessous d'une valeur prédéterminée alors que l'on remet à zéro l'amplitude de correction dans une direction d'avance ou de retard.

37. Appareil de commande de l'avance à l'allumage pour un moteur à combustion interne selon la revendication 20, caractérisé en ce que ledit moyen de détermination de l'amplitude du déplacement (52, 53, 53) comprend des moyens (52f, 53e) pour mémoriser ladite amplitude du déplacement durant un état d'arrêt dudit moteur.

38. Appareil de commande de l'avance à l'allumage pour un moteur à combustion interne selon la revendication 20, dans lequel lesdits moyens de détermination de l'avance à l'allumage (18, 54, 55) comprennent un moyen actionnant l'avance à l'allumage (18) pour le décalage en phase du signal de référence réglé de l'avance à l'allumage pour produire les signaux de l'avance à l'allumage.

39. Appareil de commande de l'avance à l'allumage pour un moteur à combustion interne selon la revendication 20, caractérisé en ce que ledit moyen de détermination de l'amplitude du déplacement (52, 53, 53') comprend un circuit de remise à zéro pour initialiser l'amplitude du déplacement de l'avance à l'allumage de référence au moment où l'on verse du carburant ou bien au moment où l'on démarre, à une valeur prédéterminée.
